# EUROPEAN PATENT APPLICATION

(11) **EP 1 768 123 A1**
(43) Date of publication of application: **28.03.2007**
(21) Application number: 05743605.7
(22) Date of filing: 24.05.2005
(51) Int. Cl.: G11B 20/10, G11B 20/12, H04N 5/92

(54) **DATA PROCESSING DEVICE, DATA PROCESSING METHOD, PROGRAM, PROGRAM RECORDING MEDIUM, DATA RECORDING MEDIUM, AND DATA STRUCTURE**

(30) Priority: 11.06.2004 JP 2004174549
(71) Applicant: SONY CORPORATION, Tokyo 141-0001 (JP)
(72) Inventor: FUJINAMI, Yasushi c/o SONY CORPORATION 7-35, Tokyo 1410001 (JP); HAMADA, Toshiya c/o SONY CORPORATION 7-35, Tokyo 1410001 (JP)
(74) Representative: DeVile, Jonathan Mark
(86) International application number: PCT/JP2005/009437
(87) International publication number: WO 2005/122168

(57) **Abstract**

The present invention relates to a data processing device and a data processing method, a program and a program recording medium, and a data recording medium and a data structure, capable of controlling output of data according to the playing point-in-time of the data. A Clip(), which is meta data relating to a program stream upon which one or more elementary streams have been multiplexed, includes sets of pts_change_point representing the playing point-in-time of the elementary stream and DynamicInfo() including output attributes of the data thereof, for each elementary stream multiplexed on the program stream. In step S321, determination is made regarding whether or not the playing point-in-time of the elementary stream being played matches the pts_change_point, and in the event that determination is made that this matches, in step S322 the DynamicInfo() which is a set with the pts_change_point is recognized. Then in step S324, output of the data being played is controlled according to the output attributes included in the DynamicInfo (). The present invention can be applied to game apparatuses using DVDs, for example.

## Description

### Technical Field

The present invention relates to a data processing device and a data processing method, a program and a program recording medium, and a data recording medium and a data structure, and particularly relates to a data processing device and a data processing method, a program and a program recording medium, and a data recording medium and a data structure, which enables data processing with great convenience, for example.

### Background Art

In recent years, DVDs (Digital Versatile Disc) for example have come into widespread use as a recording medium which has great capacity and can be randomly accessed, and further, DVD devices which perform various types of processing using DVDs are also in widespread use.

### Disclosure of Invention

Types of DVD devices include, for example, DVD recorders which record and play television broadcast program data and the like on DVDs, car navigation systems wherein map information and so forth is recorded in DVDs and the map information is displayed, game devices wherein game programs and the like are recorded on DVDs and the programs are executed.

Details of DVDs are described in, for example, Non-

Non-Patent Document 1 DVD Specifications for Read-Only Disc Part 3; Version 1.1 December 1997

### Disclosure of the Invention

### Problems to be Solved by the Invention

With recording media such as DVDs wherein a great amount of data can be recorded, and DVD devices which uses the data to perform various types of processing, performing data processing in a highly convenient manner is demanded regarding such a great amount of data.

The present invention has been made in light of such a situation, and aims to enable data processing with high convenience.

### Means for Solving the Problems

A data processing device according to the present invention, wherein, in the event that meta data relating to multiplexed data in which one or more data have been multiplexed, includes, for each data multiplexed in the multiplexed data, a set of point-in-time information indicating the reproduction point-in-time of the data, and predetermined information including an output attribute of the data, the data processing device comprises: determining means for determining whether or not a reproduction point-of-time of the data being reproduced matches the point-of-time information; recognizing means for, in the event that the determining means has determined that the reproduction point-of-time of the data being reproduced matches the point-of-time information, recognizing the predetermined information which makes up a set with the point-of-time information; and control means for controlling the output of the data being reproduced, according to the output attribute included in the predetermined information recognized by the recognizing means.

A data processing method according to the present invention wherein, in the event that meta data relating to multiplexed data in which one or more data have been multiplexed, includes, for each data multiplexed in the multiplexed data, a set of point-in-time information indicating the reproduction point-in-time of the data, and predetermined information including an output attribute of the data, the method comprises: a determining step for determining whether or not a reproduction point-of-time of the data being reproduced matches the point-of-time information; a recognizing step for, in the event that the reproduction point-of-time of the data being reproduced has been determined in the determining step to match the point-of-time information, recognizing the predetermined information which makes up a set with the point-of-time information; and a control step for controlling the output of the data being reproduced, according to the output attribute included in the predetermined information recognized in the recognizing step.

A program according to the present invention wherein, in the event that meta data relating to multiplexed data in which one or more data have been multiplexed, includes, for each data multiplexed in the multiplexed data, a set of point-in-time information indicating the reproduction point-in-time of the data, and predetermined information including an output attribute of the data, the program comprises: a determining step for determining whether or not a reproduction point-of-time of the data being reproduced matches the point-of-time information; a recognizing step for, in the event that the reproduction point-of-time of the data being reproduced has been determined in the determining step to match the point-of-time information, recognizing the predetermined information which makes up a set with the point-of-time information; and a control step for controlling the output of the data being reproduced, according to the output attribute included in the predetermined information recognized in the recognizing step.

A program recorded in a recording medium according to the present invention wherein, in the event that meta data relating to multiplexed data in which one or more data have been multiplexed, includes, including, for each data multiplexed in the multiplexed data, a set of point-in-time information indicating the reproduction point-in-time of the data, and predetermined information including an output attribute of the data, the program comprises: a determining step for determining whether or not a reproduction point-of-time of the data being reproduced matches the point-of-time information; a recognizing step for, in the event that the reproduction point-of-time of the data being reproduced has been determined in the determining step to match the point-of-time information, recognizing the predetermined information which makes up a set with the point-of-time information; and a control step for controlling the output of the data being reproduced, according to the output attribute included in the predetermined information recognized in the recognizing step.

The recorded data recorded in a data recording medium, and data structure, according to the present invention, include multiplexed data in which one or more data have been multiplexed, and meta data relating to the multiplexed data, the meta data including, for each data multiplexed in the multiplexed data, a set of point-in-time information indicating the reproduction point-in-time of the data, and predetermined information including an output attribute of the data.

With the data processing device and the data processing method, and the program and the program recorded in the program recording medium, according to the present invention, determination is made, regarding meta data relating to multiplexed data in which one or more data has been multiplexed, for each data multiplied in the multiplexed data, whether or not a reproduction point-of-time of the data being reproduced matches the point-of-time information, in the event that a set is included of point-of-time information indicating the reproduction point-in-time of the data, and predetermined information including the output attribute of the data. In the event that determination is made that the reproduction point-of-time of the data being reproduced matches the point-of-time information, predetermined information which forms a set with the point-of-time information is recognized, and output of the data being reproduced is controlled according to the output attributes included in the predetermined information that has been recognized.

With the recorded data recorded in the data recording medium, and the data structure, according to the present invention, multiplex data in which one or more data have been multiplexed, and meta data relating to the multiplexed data, are included. The meta data includes, for each data multiplied in the multiplexed data, a set of point-of-time information indicating the reproduction point-in-time of the data, and predetermined information including the output attribute of the data.

### Advantages

According to the present invention, data processing with high convenience and the like can be realized. Particularly, the output of data can be controlled corresponding to the reproduction point-of-time of the data.

### Brief Description of the Drawings

Fig. 1 is a block diagram illustrating a hardware configuration example of one embodiment of a disk device to which the present invention has been applied.
Fig. 2 is a block diagram illustrating a configuration example of a software module group executed by a CPU 112.
Fig. 3 is a block diagram illustrating a configuration example of a buffer control module 215.
Fig. 4 is a diagram illustrating a directory configuration example in a disk 101.
Fig. 5 is a diagram illustrating a syntax of a "PLAYLIST.DAT" file.
Fig. 6 is a diagram illustrating a syntax of a PlayItem().
Fig. 7 is a diagram illustrating a syntax of a PlayListMark().
Fig. 8 is a diagram illustrating the relation between the value of mark_type and the type of Mark().
Fig. 9 is a diagram illustrating the relation between PlayList(), PlayItem(), clips, and a program stream stored in a clip stream file.
Fig. 10 is a diagram illustrating a syntax of a clip information file Clip().
Fig. 11 is a diagram illustrating the relation between stream_id and private stream_id for identifying elementary streams, and elementary streams.
Fig. 12 is a diagram illustrating a syntax of a StaticInfo().
Fig. 13 is a diagram illustrating a syntax of a DynamicInfo().
Fig. 14 is a diagram illustrating a syntax of an EP_map().
Fig. 15 is a diagram illustrating a syntax of a program stream of an MPEG-2 System, a program stream pack, and a program stream pack header.
Fig. 16 is a diagram illustrating a syntax of a PES packet of an MPEG-2 System.
Fig. 17 is a diagram illustrating a syntax of a PES packet of an MPEG-2 System.
Fig. 18 is a diagram illustrating a syntax of a PES packet of an MPEG-2 System.
Fig. 19 is a diagram illustrating the relation between a value described in the stream_id of a PES_packet() of an MPEG-2 System and the attribute (type) of the elementary stream.
Fig. 20 is a diagram illustrating a stream_id employed by the disk device.
Fig. 21 is a diagram illustrating a syntax of a private_streaml_PES_payload ().
Fig. 22 is a diagram illustrating the relation between the value of private_stream_id and the attribute of the elementary stream stored in private_payload().
Fig. 23 is a diagram illustrating a syntax of a private_stream2_PES_payload().
   Fig. 24 is a diagram illustrating a syntax of an au_information().
Fig. 25 is a diagram illustrating a specific example of a "PLAYLIST.DAT" file.
Fig. 26 a diagram illustrating specific examples of clip information files "00001.CLP", "00002.CLP", and "00003.CLP".
Fig. 27 is a diagram illustrating a specific example of EP_map() within the clip information file "00001.CLP".
Fig. 28 is a diagram illustrating a specific example of a PlayListmark() within a PlayList #0 and a PlayList #1.
Fig. 29 is a flowchart for describing pre-playing processing.
Fig. 30 is a flowchart for describing playing processing.
Fig. 31 is a flowchart for describing PlayItem crossover processing.
Fig. 32 is a flowchart for describing time code display processing.
Fig. 33 is a flowchart for describing stream switchover processing.
Fig. 34 is a flowchart for describing the processing of the buffer control module 215.
Fig. 35 is a flowchart for describing the processing of the buffer control module 215.
Fig. 36 is a flowchart for describing the processing for reading out a video stream.
Fig. 37 is a flowchart for describing the processing for reading out an audio stream.
Fig. 38 is a flowchart for describing the processing for reading out a subtitle stream.
Fig. 39 is a flowchart for describing resynchronization processing.
Fig. 40 is a flowchart for describing mark processing.
Fig. 41 is a flowchart for describing output attribute control processing.
Fig. 42 is a diagram for describing a specific example of a set of pts_change_point and DynamicInfo() described in the clip information file "00003.CLP".
Fig. 43 is a flowchart for describing subtitle display control processing.
Fig. 44 is a flowchart for describing capture control processing and background/screen-saver processing.
Fig. 45 is a diagram illustrating another syntax for a private_stream2_PES_payload () .
Fig. 46 is a diagram illustrating another syntax for an au_information ().

### Reference Numerals

- 101: disk
- 102: disk drive
- 111: bus
- 112: CPU
- 113: memory
- 114: drive interface
- 115: input interface
- 116: video decoder
- 117: audio decoder
- 118: video output interface
- 119: audio output interface
- 120: video output terminal
- 121: audio output terminal
- 201: operating system
- 210: video content playback program
- 211: script control module
- 212: player control module
- 213: content data supply module
- 214: decoder control module
- 214A: clock unit
- 215: buffer control module
- 215A: buffer
- 216: video decoder control module
- 217: audio decoder control module
- 218: subtitle decoder control module
- 219: graphics processing module
- 220: video output module
- 220A: FIFO
- 221: audio output module
- 221A: FIFO
- 231: data head pointer storing unit
- 232: data write pointer storing unit
- 233: video read function unit
- 234: audio read function unit
- 235: subtitle read function unit
- 241: video read pointer storing unit
- 242: stream_id register
- 243: au_information () register 243
- 251: audio read pointer storing unit
- 252: stream_id register
- 253: private_stream_id register
- 261: subtitle read function flag storing unit 261
- 262: subtitle read pointer storing unit
- 263: stream_id register
- 264: private_stream_id register

### Best Mode for Carrying Out the Invention

Embodiments of the present invention will be described below with reference to the drawings.

### [Hardware Configuration]

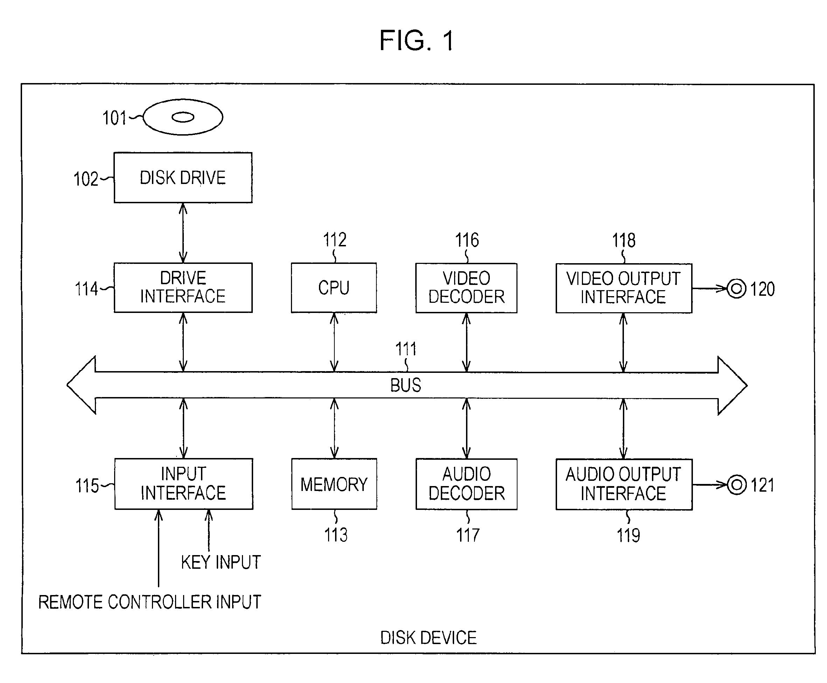

Fig. 1 is a block diagram illustrating a hardware configuration example of one embodiment of a disk device to which the present invention has been applied.

The disk device shown in Fig. 1 can be applied to, for example, disk players, game devices, car navigation systems, and so forth.

With the disk device shown in Fig. 1, a disk 101 is, for example, an optical disk such as a DVD, or a magnetooptical disk, magnetic disk, or the like, and recorded therein is content data such as video data, audio data, subtitle data, and so forth, and further is recorded data necessary to play the contents data.

Note that the data (recorded data) recorded in the disk 101 also includes programs executable by a computer, if necessary. Also, with the present embodiment, a disk 101 which is a disk-shaped recording media is employed, however, other recording media may be employed, such as for example semiconductor memory, or tape-shaped recording media. Further, data read out from a remote disk 101 and transmitted to the disk device shown in Fig. 1 can be input thereto. That is to say, an arrangement may be made wherein data readout from the disk 101 is performed at another device connected to the disk device, and data read out from the other device is received and processed at the disk device. Also, the disk device can receive and process data distribution from a server or a like storing data the same as the data recorded in the disk 101 in storage thereof, via a network such as the Internet. Further, the disk device can receive data from a server or another device, temporarily record this in the disk 101, and then process the data recorded in the disk 101.

The disk 101 is detachably mounted to a disk drive 102. The disk drive 102 has an unshown interface built in, and is connected to a drive interface 114 via the interface. The disk drive 102 drives the disk 101 mounted thereto, reads out the data from the disk 101 following commands such as for readout from the drive interface 14, and performs processing such as supplying to the drive interface 114 and so forth.

Connected to a bus 111 are a CPU (Central Processing Unit) 112, memory 113, the drive interface 114, an input interface 115, a video decoder 116, an audio decoder 117, a video output interface 118, and an audio output interface 119.

The CPU 112 and the memory 113 make up a computer system. That is to say, the CPU 112 executes a later-described software module group which are programs stored in the memory 113, thereby controlling the entire disk device, and also performing various types of later-described processing. The memory 113 stores the software module group to be executed by the CPU 112. Also, the memory 113 temporarily stores data necessary for operation of the CPU 112. Note that the memory 113 may be configured of non-volatile memory alone, or of a combination of volatile memory and non-volatile memory. Also, an arrangement may be made wherein the disk device shown in Fig. 1 is provided with a hard disk, and the software module group to be executed by the CPU 112 is recorded (installed) in the hard disk, in which case the memory 113 can be configured of volatile memory alone.

Now, the programs (software module group) to be executed by the CPU 112 can be recorded (stored) in the memory 113, serving as a recording medium built into the disk device, beforehand.

Or, the programs may be temporarily or permanently stored (recorded) in the disk 101, or further, in removable recording media other than the disk 101, such as a flexible disk, CD-ROM (Compact Disc Read Only Memory), MO (Magneto Optical) disk, magnetic disk, memory card, or the like. Such removable recording media can be provided as so-called packaged software.

Note that the programs may be stored in the memory 113 beforehand, or may be installed in the disk device from a removable recording medium such as described above. Also, the programs may be transferred from a download site to the disk device wirelessly via a digital satellite broadcasting satellite, or transfer to the disk device via a network such as a LAN (Local Area Network), the Internet, or the like, with the disk device receiving the programs being transferred thus with the input interface 115, so as to be installed in the built-in memory 113.

Further, the programs may be processed by a single CPU, or may be subjected to distributed processing among a plurality of CPUs.

The drive interface 114 controls the disk drive 102 under the control of the CPU 112, and thereby supplies the data which the disk drive 102 has read out from the disk 101 to the CPU 112, memory 113, video decoder 116, audio decoder 117, and so forth, via the bus 111.

The input interface 115 receives signals supplied by the user operating unshown keys (buttons) or remote controller (remote controller), and supplies these to the CPU 112 via the bus 111. Note that the input interface 115 also functions as a communication interface such as, for example, a modem (including an ADSL (Asymmetric Digital Subscriber Line) modem), and NIC (Network Interface Card).

The video decoder 116 decodes encoded data of video data (encoded audio data) read out from the disk 101 by the disk drive 102 and supplied via the drive interface 114 and the bus 111, and supplies the video data obtained as a result thereof to the CPU 112 and video output interface 118 via the bus 111.

The audio decoder 117 decodes encoded data of audio data (encoded audio data) read out from the disk 101 by the disk drive 102 and supplied via the drive interface 114 and the bus 111, and supplies the audio data obtained as a result thereof to the CPU 112 and audio output interface 119 via the bus 111.

The video output interface 118 subjects the video data supplied via the bus 111 to necessary processing, and outputs from a video output terminal 120. The audio output interface 119 subjects the audio data supplied via the bus 111 to necessary processing, and outputs from an audio output terminal 121.

The video output terminal 120 is connected to an unshown video output device such as a CRT (Cathode Ray Tube), liquid crystal panel, or the like, and accordingly, the video data output from the video output terminal 120 is supplied to and displayed on the video output device. The audio output terminal 121 is connected to an unshown audio output device such as a speaker, amplifier, or the like, and accordingly, the audio data output from the audio output terminal 121 is supplied to and output from the audio output device.

Note that supply of video data and audio data to the video output device and the audio output device from the disk device may be performed either via cable or wirelessly.

### [Configuration of Software Module Group]

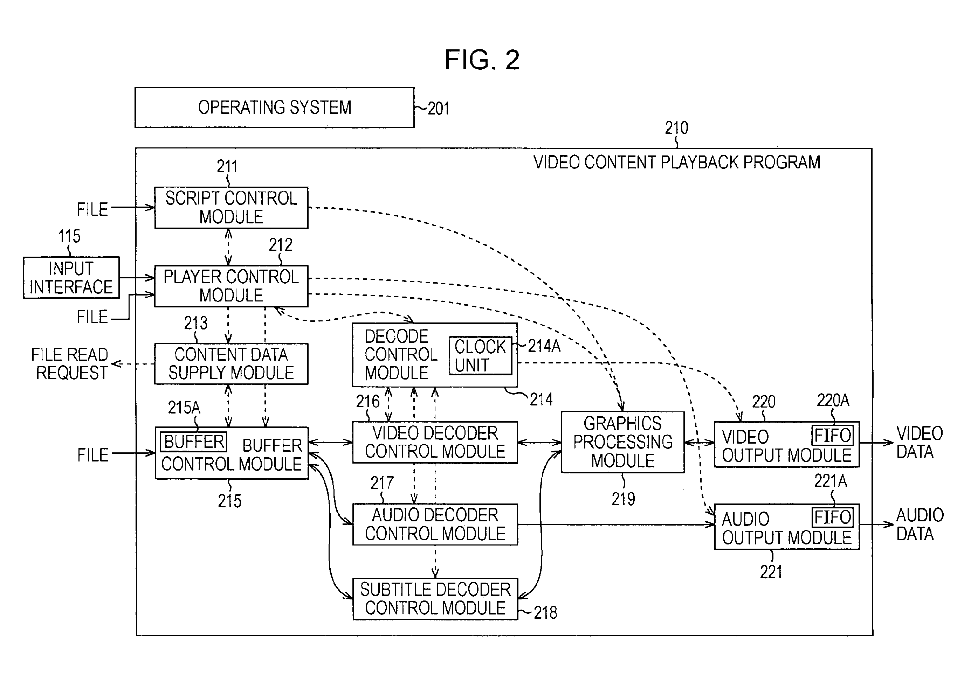

Next, Fig. 2 illustrates a configuration example of the software module group which the CPU 112 shown in Fig. 1 executes.

The software module group which the CPU 112 executes is broadly classified into an operating system (OS) 201 and a video content playing program 20 serving as an application program.

### "Operating System 201"

The operating system 201 is activated first upon the power of the disk device being turned on (the CPU 112 executes the operating system 201), necessary processing such as initial settings and so forth are performed, and the video content playing program 210 serving as an application program is called up.

The operating system 201 provides the video content playing program 210 with infrastructure-like services such as file readout. That is to say, with regard to file readout for example, in response to a file readout request from the video content playing program 210, the operating system 201 provides a service of operating the disk drive 102 via the drive interface 114, reading out the data of the disk 101, and handing this to the video content playing program 210. Also, the operating system 201 performs interpretation of file systems, and so forth.

Note that the operating system 201 has multitasking functions, and is capable of time-sharing (apparent) simultaneous operation of multiple software modules. That is to say, the video content playing program 210 is configured of several software modules, and each of the software modules can run in parallel.

### "Video Content Playing program 210"

The video content playing program 210 is configured of a script control module 211, a player control module 212, a content data supply module 213, a decode control module 214, a buffer control module 215, a video decoder control module 216, an audio decoder control module 217, a subtitle decoder control module 218, a graphics processing module 219, a video output module 220, and an audio output module 221.

The video content playing program 210 is software which has a central role in the playing of the disk 101, and upon the disk 101 being mounted (inserted) to the disk drive 102, confirmation is made regarding whether or not the disk 101 is a disk of a later-described format in which contents are recorded. Further, the video content playing program 210 reads out and executes a later-described script file from the disk 101, and also reads out a meta data (database information) file necessary for playing the contents recorded in the disk 101 from the disk 101 and controls playing of the contents based on the meta data.

The following is a description of the software modules making up the video content playing program 210 shown in Fig. 2. Note that in Fig. 2, as a rule, the solid arrows represent the data of the contents, and the dotted-line arrows represent control data.

### "Script Control Module 211"

The script control module 211 interprets and executes a scrip program (script) described in a script file recorded in the disk 101. A script program can be used to describe actions such as, for example, "operate the graphics processing module 219 to create and display an image such as a menu", "change the menu display following signals from a UI (UserInterface) such as a remote controller (e.g., move a cursor on the menu or the like)", control the player control module 212", and so forth.

### "Player Control Module 212"

The player control module 212 makes reference to the meta data (database information) or the like recorded in the disk 101, and performs control relating to playing of the contents. That is to say, the player control module 212 analyzes a later-described PlayList() or Clip() recorded in the disk 101, and according to the analysis results thereof, controls the content data supply module 213, decode control module 214, and buffer control module 215. Also, the player control module 212 performs later-described stream switchover wherein streams to be played are switched over, or the like, following instructions from the script control module 211 or the input interface 115. Further, the player control module 214 obtains the point-in-time from the decode control module 214, and performs point-in-time display, later-described mark (Mark()) processing, and so forth.

### "Content Data Supply Module 213"

The content data supply module 213 requests the operating system 201 for readout of contents data, meta data, and so forth, from the disk 101, under the control of the player control module 212 or based on the amount of data accumulated in the buffer control module 215.

Note that the meta data and the like which the operating system 201 has read out from the disk 101 in response to a request from the content data supply module 213 is supplied to the necessary module. Also, the contents data which the operating system 201 has read out from the disk 101 based on a request from the content data supply module 213 is supplied to the buffer control module 215.

### "Decode control module 214"

The decode control module 214 controls the operation of the decoder control module 216, audio decoder control module 217, and subtitle decoder control module 218, under the control of the player control module 212. Also, the decode control module 214 has built in a clock unit 214A which performs timekeeping of the point-in-time, and manages synchronization of the output of video data output under control of the video decoder control module 216 and the output of data to be output synchronously with the video data (output data), i.e., in this case, the output of audio data output under the control of the audio decoder control module 217.

### "Buffer Control Module 215"

The buffer control module 215 has built in a buffer 215A which is a part of the storage region of the memory 113 shown in Fig. 1, and temporarily stores, in the buffer 215A, the contents data read out from the disk 101 by the content data supply module 213 making a request to the operating system 201.

Also, the buffer control module 215 supplies the data stored in the buffer 215A to the video decoder control module 216, audio decoder control module 217, or subtitle decoder control module 218, according to requests from the video decoder control module 216, audio decoder control module 217, or subtitle decoder control module 218.

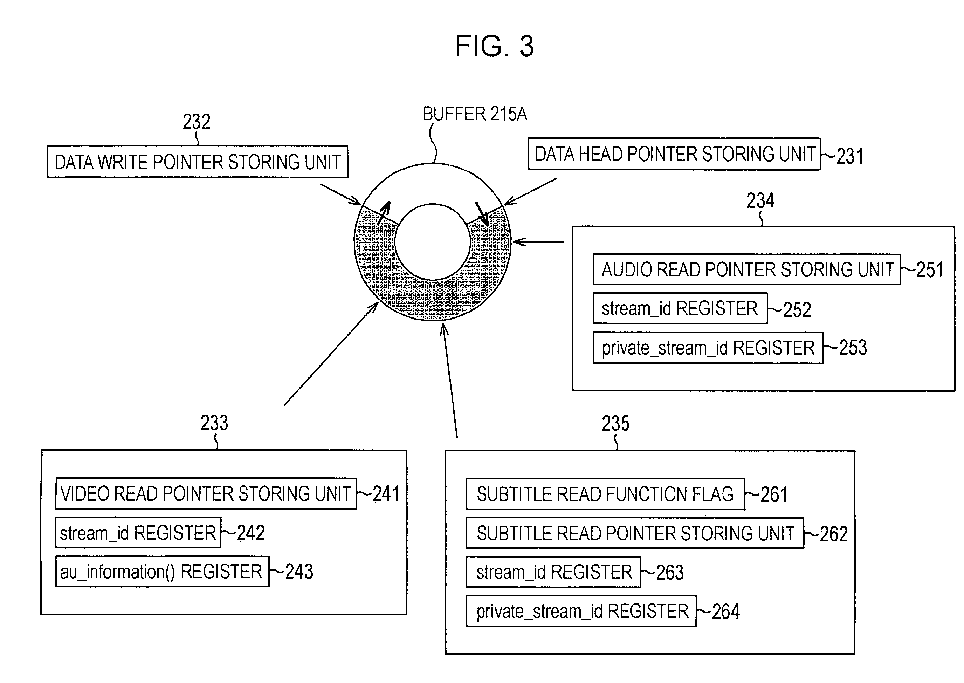

That is to say, the buffer control module 215 has built in a video read function unit 233, audio read function unit 234, and subtitle read function unit 235, described later with Fig. 3. The buffer control module 215 processes a request for data from the video decoder control module 216 with the video read function unit 233, thereby supplying the data stored in the buffer 215A to the video decoder control module 216. In the same way, the buffer control module 215 processes a request for data from the audio decoder control module 217 with the audio read function unit 234, thereby supplying the data stored in the buffer 215A to the audio decoder control module 217, and also processes a request for data from the subtitle decoder control module 218 with the subtitle read function unit 235, thereby supplying the data stored in the buffer 215A to the subtitle decoder control module 218.

### "Video Decoder Control Module 216"

The video decoder control module 216 operates the video read function unit 233 (Fig. 3) within the buffer control module 215 to read out data in which video data has been encoded (video encoded data) from the buffer 215A of the buffer control module 215 in increments of video access units, and supplies this to the video decoder 116 shown in Fig. 1. Also, the video decoder control module 216 controls the video decoder 116 to decode the data in increments of video access units. Further, the video decoder control module 216 supplies the video data obtained as a results of the decoding at the video decoder 116, to the graphics processing module 219.

Now, a video access unit is, for example, one picture of video data (one frame or one field) worth.

### "Audio Decoder Control Module 217"

The audio decoder control module 217 operates the audio read function unit 234 (Fig. 3) within the buffer control module 215 to read out data in which audio data has been encoded (audio encoded data) from the buffer 215A of the buffer control module 215 in increments of audio access units, and supplies this to the audio decoder 117 shown in Fig. 1. Also, the audio decoder control module 217 controls the audio decoder 117 to decode the data in increments of audio access units. Further, the audio decoder control module 217 supplies the audio data obtained as a results of the decoding at the audio decoder 117, to the audio output module 221.

Now, an audio access unit is a predetermined data amount of audio data (e.g., that output synchronously with one picture). With the present embodiment, let us say that an audio access unit is, for example, a known fixed length.

### "Subtitle Decoder Control Module 218"

The subtitle decoder control module 218 operates the subtitle read function unit 235 (Fig. 3) within the buffer control module 215 to read out data in which subtitle data has been encoded (subtitle encoded data) from the buffer 215A of the buffer control module 215 in increments of subtitle access units. Also, the subtitle decoder control module 218 internally has an unshown subtitle decoding software, which decodes the data read out from the buffer 215A. Further, the subtitle decoder control module 218 supplies the subtitle data obtained as a results of the decoding thereat (subtitle image data) to the graphics processing module 219.

Now, an subtitle access unit is a predetermined data amount of subtitle data (e.g., that output synchronously with one picture). With the present embodiment, let us say that the size of a subtitle access unit is, for example, described at the head of the subtitle access unit.

### "Graphics processing module 219"

The graphics processing module 219 performs enlargement or reduction of the subtitle data from the subtitle decoder control module 218 under control (instructions) of the player control module 212, and adds (overlays) this to the video data from the video decoder control module 216.
Further, the graphics processing module 219 performs enlargement or reduction or the like of the size (frame) of the video data following addition with the subtitle data so as to match the display screen of the video output device connected to the video output terminal 120 shown in Fig. 1, and outputs the video data obtained as a result thereof to the video output module 220.

Also, the graphics processing module 219 follows instructions (control) of the script control module 211 or player control module 212 to generate menus, messages, and the like, which are overlaid on the output video data.

Further, the graphics processing module 219 performs conversion of the aspect ratio of the video data to be output to the video output module 220, based on the aspect ratio of the video output device connected to the video output terminal 120 shown in Fig. 1, and information and the like indicating the aspect ratio of the video data recorded in the disk 101.

That is to say, for example, in the event that the aspect ratio of the video output device is 16:9 for example, and information indicating the aspect ratio of the video data represents an aspect ratio of 4:3, the graphics processing module 219 performs processing for squeezing (reducing) the video data to be output to the video output module 220 in the sideways direction (horizontal direction), and outputs with pillarboxing on the left and right. Also, in the event that the aspect ratio of the video output device is 4:3 for example, and information indicating the aspect ratio of the video data represents an aspect ratio of 16:9, the graphics processing module 219 performs processing for squeezing (reducing) the video data to be output to the video output module 220 in the vertical direction (vertical direction), and outputs with letterboxing on the top and bottom.

Note that in the event that the aspect ratio of the video output device and the information indicating the aspect ratio of the video data are both at the same at 4:3 or 16:9, the graphics processing module 219 outputs the video data to be output to the video output module 220 as it is, without performing squeezing processing.

Additionally, the graphics processing module 219 captures the video data being currently processed, in response to a request from the player control module 212, for example. Further, the graphics processing module 219 stores the captured video data, or supplies to the player control module 212.

### "Video Output Module 220"

The video output module 220 exclusively occupies a part of the memory 113 shown in Fig. 1 so as to use as a FIFO (First In First Out) 220A (buffer), so as to temporarily store video data from the graphics processing module 219 and also read out the video data stored in the FIFO 220A as appropriate and output to the video output terminal 120 (Fig. 1).

### "Audio Output Module 221"

The audio output module 221 exclusively occupies a part of the memory 113 shown in Fig. 1 so as to use as a FIFO 221A (buffer), so as to temporarily store audio data from the audio decoder control module 217 (audio decoder 117) and also read out the audio data stored in the FIFO 221A as appropriate and output to the audio output terminal 121 (Fig. 1).

Further, in the event that the audio data from the audio decoder control module 217 is dual (Dual) (bilingual) mode audio data wherein the left channel is "main audio" audio data and the right channel is "sub audio" audio data, the audio output module 221 follows an audio output mode specified beforehand to output the audio data from the audio decoder control module 217 to the audio output terminal 121.

That is to say, for example, in the event that "main audio" is specified as the audio output mode, the audio output module 221 copies, of the audio data from the audio decoder control module 217, the audio data of the left channel as the audio data of the right channel, and outputs the audio data of the left channel and the right channel (the "main audio" audio data) to the audio output terminal 121. Also, in the event that "sub audio" is specified as the audio output mode, the audio output module 221 copies, of the audio data from the audio decoder control module 217, the audio data of the right channel as the audio data of the left channel, and outputs the audio data of the left channel and the right channel (the "sub audio" audio data) to the audio output terminal 121. Further, in the event that "main/sub" is specified as the audio output mode, the audio output module 221 outputs the audio data from the audio decoder control module 217 to the audio output terminal 121 as it is.

Now, in the event that the audio data from the audio decoder control module 217 is stereo (Stereo) mode audio data, the audio output module 221 outputs the audio data from the audio decoder control module 217 to the audio output terminal 121 as it is, regardless of specification of the audio output mode.

Here, specification of the audio output mode can be interactively made by the user operating a remote control or the like in a screen or the like wherein a menu generated by the video contents playing program 210 is displayed, for example.

### [Configuration of Buffer Control Module 215]

Next, Fig. 3 illustrates a configuration example of the buffer control module 215 shown in Fig. 2.

The buffer control module 215 exclusively uses a part of the memory 113 shown in Fig. 1 as a buffer 215A, and temporarily stores in the buffer 215A the data read out from the disk 101. Also, the buffer control module 215 reads out the data stored in the buffer 215A, and supplies this to the video decoder control module 216, audio decoder control module 217, or subtitle decoder control module 218, shown in Fig. 2.

That is to say, in addition to the buffer 215A, the buffer control module 215 has a data head pointer storing unit 231 and data write pointer storing unit 232, which are a part of the memory 113, and also has, as internal modules, a video read function unit 233, audio read function unit 234, and subtitle read function unit 235.

The buffer 215A is a ring buffer for example, wherein the data read out from the disk 101 is sequentially stored, and following storing data equivalent to the storage capacity thereof, overwrites the oldest data, thereby storing the newest data in an infinite loop, as if it were.

The data head pointer storing unit 231 stores a data head pointer pointing to the position(address) where, of the data stored in the buffer 215A, the oldest data that has not been read out of the buffer 215A yet is stored.

The data write pointer storing unit 232 stores a write pointer pointing to the position(address) of the buffer 215A where the newest data read out from the disk 101 is written.

Now, the position which the data write pointer indicates is updated to the right (clockwise) in the diagram each time data read out from the disk 101 is stored to the buffer 215A, and the position which the data head pointer indicates is updated to the right in the diagram according to data readout from the buffer 215A. Accordingly, of the data stored in the buffer 215A, data which can be said to be valid is data stored from the position indicated by the data head pointer clockwise to the position which the data write pointer indicates.

The video read function unit 233 reads out video streams (elementary streams relating to video data) from the buffer 215A in response to requests from the video decoder control module 216 shown in Fig. 2, and supplies these to the video decoder control module 216. The audio read function unit 234 also reads out audio streams (elementary streams relating to audio data) from the buffer 215A in response to requests from the audio decoder control module 217 shown in Fig. 2, and supplies these to the audio decoder control module 217. The subtitle read function unit 235 also reads out subtitle streams (elementary streams relating to subtitle data) from the buffer 215A in response to requests from the subtitle decoder control module 218 shown in Fig. 2, and supplies these to the subtitle decoder control module 218.

That is to say, a program stream (MPEG2-System Program Stream) conforming to the MPEG (Moving Picture Experts Group) 2 for example is recorded in the optical disk 101, and the program stream read out from the optical disk 101 is stored in the buffer 215A. This program stream has one or more elementary streams such as a video stream, audio stream, subtitle stream, and so forth, multiplexed by time-sharing. The video read function unit 233 has a demultiplexing function for such program streams, and separates the video stream from the program stream stored in the buffer 215A and reads it out.

In the same way, the audio read function unit 234 has a demultiplexing function for such program streams, and separates the audio stream from the program stream stored in the buffer 215A and reads it out. The subtitle read function unit 235 also has a demultiplexing function for such program streams, and separates the subtitle stream from the program stream stored in the buffer 215A and reads it out.

Now, the video read function unit 233 has a video read pointer storing unit 241, a stream_id register 242, and au_information() register 243, which are a part of the memory 113 shown in Fig. 1.

The video read pointer storing unit 241 stores a video read pointer pointing to a position (address) of the buffer 215A where the video stream has been stored, and the video read function unit 233 reads out the data stored in the position which the video read pointer points to of the buffer 215A as a video stream. The stream_id register 242 analyzes the program stream stored in the buffer 215A, and stores a later-described stream_id for identifying (determining) a video stream read out from the program stream. The au_information() register 243 stores a later-described au_information() which is data necessary for reading out a video stream from the buffer 215A (is used for reading out a video stream).

The audio read function unit 234 has an audio read pointer storing unit 251, a stream_id register 252, and a private_stream_id register 253, which are a part of the memory 113 shown in Fig. 1.

The audio read pointer storing unit 251 stores an audio read pointer pointing to a position (address) of the buffer 215A where the audio stream has been stored, and the audio read function unit 234 reads out the data stored in the position which the audio read pointer points to as an audio stream. The stream_id register 252 and the private_stream_id register 253 analyze the program stream stored in the buffer 215A, and stores a later-described stream_id and private_stream_id for identifying an audio stream read out from the program stream.

The subtitle read function unit 235 has a subtitle read function flag storing unit 261, a subtitle read pointer storing unit 262, a stream_id register 263, and a private_stream_id register 264, which are a part of the memory 113 shown in Fig. 1.

The subtitle read function flag storing unit 261 stores a subtitle read function flag. In the event that a subtitle read function flag stored in the subtitle read function flag storing unit 261 is 0 for example, the subtitle read function unit 235 does not run, and in the event that the subtitle read function flag stored in the subtitle read function flag storing unit 261 is 1 for example, the subtitle read function unit 235 functions.

The subtitle read pointer storing unit 262 stores a subtitle read pointer pointing to a position (address) of the buffer 215A where the subtitle stream has been stored, and the subtitle read function unit 235 reads out the data stored in the position which the subtitle read pointer points to of the buffer 215A as a subtitle stream. The stream_id register 263 and a private_stream_id register 264 analyze the program stream stored in the buffer 215A, and stores a later-described stream_id and private_stream_id for identifying a subtitle stream read out from the program stream.

### [Description of Data Format of Data Recorded in Disk 101]

Next, the data format of the data recorded in the disk 101 will be described.

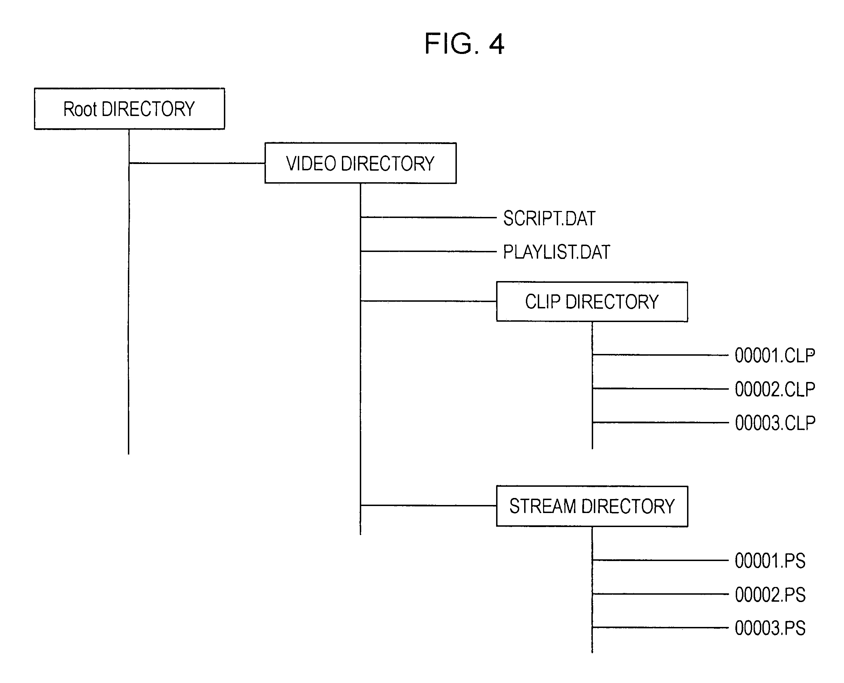

Fig. 4 schematically illustrates the directory structure of the disk 101.

A file system stipulated by, for example, ISO (International Organization for Standardization)-9660 or UDF (Universal Disk Format: http://www.osta.org/specs/) or the like, is used as the file system for the disk 101, and files of data recorded in the disk 101 are managed hierarchically by a directory structure. Note that files systems as used here are not restricted to the above-described file systems.

In Fig. 4, there is a "VIDEO" directory in the root (root) directory indicating the origin point of the file system, and there are two directories under the "VIDEO" directory, which are the "CLIP" directory and the "STREAM" directory.

In addition to the two directions of the "CLIP" directory and the "STREAM" directory, in the "VIDEO" directory there are two data files, which are the "SCRIPT.DAT" file and "PLAYLIST.DAT" file.

The "SCRIPT.DAT" file is a script file in which a script program is described. That is to say, described in the "SCRIPT.DAT" file is a script program used for making the playing form of the disk 101 an interactive one. The script program described in the "SCRIPT.DAT" file is interpreted and executed by the script control module 211 shown in Fig. 2.

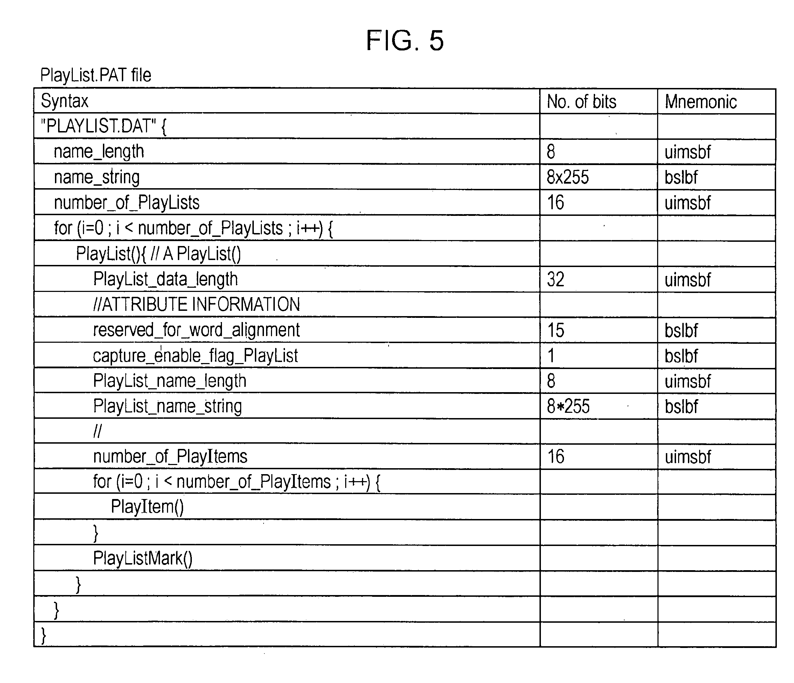

The "PLAYLIST.DAT" file stores one or more of playlists (later-described PlayList() in Fig. 5) in which the playing procedures of contents, such as the video data and the like recorded in the disk 101, are described.

In the "CLIP" directory there are one or more clip information files, and in the "STREAM" directory are one or more clip stream files. That is to say, in the "CLIP" directory in Fig. 4, there are three clip information files, which are "00001.CLP", "00002.CLP", and "00003.CLP", and in the "STREAM" directory are three clip stream files "00001.PS", "00002.PS", and "00003.PS".

A clip stream file stores a program stream upon which there a time-multiplexed one or more elementary streams, obtained by one or more of data (streams) such as video data, audio data, subtitle data, and so forth, having been compressed and encoded.

A clip information file has described therein (file) meta data relating to a clip stream, such as the nature or the like of a corresponding clip stream file.

That is to say, a clip stream file and a clip information file correspond in a one-on-one manner. In Fig. 4, clip stream files are named following a naming rule of "five numeric characters + a period + 'PS'", and clip information files are named following a naming rule of "five numeric characters + a period + 'CLP'" the same as the corresponding clip file.

Accordingly, whether a file is a clip stream file or a clip information file can be recognized by the suffix of the file name (the portion to the right of the period), and further, the corresponding clip stream file or clip information file can be recognized by whether the portion other than the suffix of the file name (the portion to the left of the period) matches.

The following is a detailed description of the files recorded in the disk 101.

### "PLAYLIST.DAT"

Fig. 5 illustrates the internal structure (syntax) of a "PLAYLIST.DAT" file under the "VIDEO" directory shown in Fig. 4.

Here, in Fig. 5, the description in the space for "Syntax" represents the data structure, and the description in the space for "No. of bits" represents the bit length of the data in the space for "Syntax" in the corresponding row. Further, of the descriptions in the space for "Mnemonic", "bslbf" (bit string left bit first) means that the data in the space for "Syntax" in the corresponding row is fed out from the left bit, and "uimsbf" (unsigned integer most significant bit first) means that the data in the space for "Syntax" in the corresponding row is an unsigned integer value and is fed out from highest order bit. This holds true for other drawings described below which are similar to Fig. 5.

From the head of the "PLAYLIST.DAT" file are sequentially arrayed a name_length (8 bits) for describing information such as the name thereof (file name), and name_string (255 bytes).

That is to say, the name_length represents the size of the following name_string, in the number of bytes. The name_string represents the name of the "PLAYLIST.DAT" file (file name).

Note that with the name_string, as many bytes as are indicated in the name_length from the head thereof, are used as a valid name. For example, in the event that the value of name_length is 10, 10 bytes from the head of name_string are interpreted as a valid name.

Following name_string is situated number_of_Playlists (16 bits). This number_of_Playlists indicates the number of the following PlayList(). Following the number_of_Playlists is PlayList() of a number indicated by number_of_Playlists.

A PlayList() is a playlist in which are described play procedures for a clip stream file recorded in the disk 101, and has the following internal structure.

That is to say, a PlayList_data_length (32 bits) is situated at the head of a PlayList(). The PlayList_data_length represents the size of the PlayList().

Following the PlayList_data_length are a reserved_for_word_alignment (15 bits) and capture_enable_flag_PlayList (1 bit) in order. The 15-bit reserved_for_word_alignment is placed for so-called word aligning (word alignment), at the position of the following 1-bit capture_enable_flag_PlayList (to align at the 16-bit position). The capture_enable_flag_PlayList is a 1-bit flag for indicating whether or not secondary usage of video data corresponding to the vide stream played with the PlayList() (video data belonging to the PlayList()) is permitted with disk device shown in Fig. 1 by which the optical disk 101 is to be played. For example, in the event that the capture_enable_flag_PlayList is 1, for example, of 0 or 1, this indicates that secondary usage of video data belonging to the PlayList() is permitted, and in the event that the capture_enable_flag_PlayList is 0, for example, of 0 or 1, this indicates that secondary usage of video data belonging to the PlayList() is not permitted (forbidden).

Note that while in Fig. 5, the capture_enable_flag_PlayList is 1 bit, an arrangement can be made otherwise, wherein the capture_enable_flag_PlayList is configured of multiple bits, with secondary usage of video data belonging to the PlayList () being permitted in stages, so as to say. That is to say, the capture_enable_flag_PlayList can be configured of 2 bits, for example. An arrangement can be made such that in the event that the value of the capture_enable_flag_PlayList is 00B (B indicating that the preceding numeral is binary), secondary usage of the video data is forbidden, and in the event that the value of the capture_enable_flag_PlayList is 01B, secondary usage of the video data is permitted only when reduced to a size of 64 × 64 pixels. Also, in the event that the value of the capture_enable_flag_PlayList is 10B, secondary usage of the video data can be permitted without size restriction.

Further, in the event of secondary usage of the video, and arrangement may be made wherein, instead of restricting the size as described above, the usage thereof is restricted. That is to say, an arrangement may be made wherein, in the event that the value of the capture_enable_flag_PlayList is 01B, secondary usage of the video contents is permitted only with the video contents reproducing application 210 (Fig. 2), and in the event that the value of the capture_enable_flag_PlayList is 10B, secondary usage of the video contents is permitted to optional applications including the video contents reproducing application 210 within the disk device in Fig. 1. Now, examples of applications other than the video contents reproducing application 210 within the disk device shown in Fig. 1 include, for example, applications for performing processing for displaying wallpaper (background) or screen savers, and so forth.

Note that in the event that the capture_enable_flag_PlayList is to be 2 bits as described above, the reserved_for_word_alignment situated before is 14 bits to effect word aligning.

Also, besides permitting secondary usage of video data within the disk device by the capture_enable_flag_PlayList, secondary use outside of the disk device can also be permitted. Now, in the event of permitting secondary usage of video data outside of the disk device, the video data is, for example, recorded in a recoding medium detachably mounted to the disk device or in a recoding medium detachably mounted to another device which can be connected to the disk device, or is transmitted (distributed) to another device via a network such as the Internet. In this case, the video data can have added thereto information restricting the number of times of recording video data in a recording medium or the number of times of distribution.

Following the capture_enable_flag_PlayList are PlayList_name_length (8 bits) and PlayList_name_string (255 bytes) in order. PlayList_name_length represents the size of the following PlayList_name_string in the number of bytes, and PlayList_name_string represents the name of the PlayList().

Following PlayList_name_string is situated number_of_PlayItems (16 bits). This number_of_PlayItems represents the number of subsequent Play Item().

Following number_of_PlayItems is described PlayItem() structures of as many as the number of number_of_PlayItems.

Now, the playing procedures for contents can be described in a single PlayList() in increments of PlayItem().

Also, each of the PlayItem() of the number of number_of_PlayItems are assigned with a unique ID (Identification) within that PlayList(). That is to say, the first PlayItem() within the PlayList() is assigned 0 as an ID, and the following PlayItem () are each assigned serial IDs in the order of emergence, in the manner of No. 1, No. 2, ···.

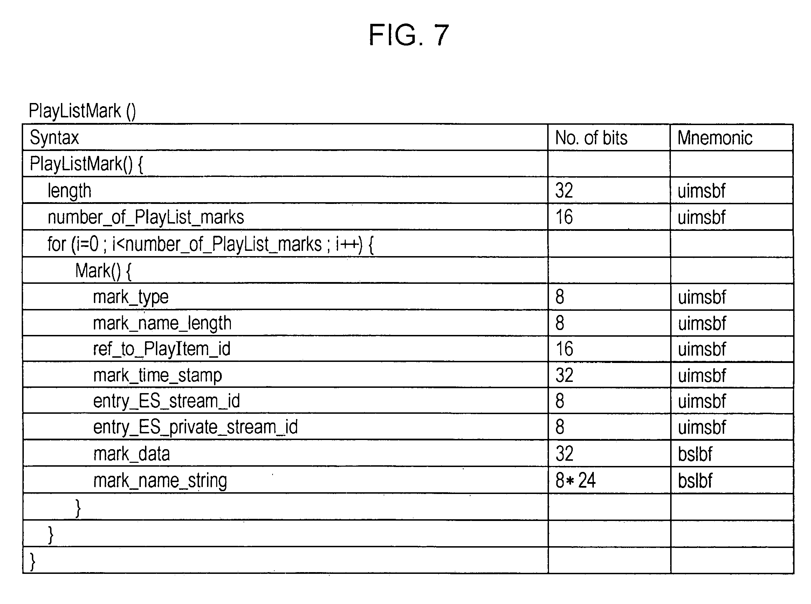

Following as many PlayItem() as the number of number_of_PlayItems, a single PlayListMark() is situated. The PlayListMark() is a group of Mark() describing a mark on a time axis for playing, performed according to the PlayList(), details thereof will be described later with reference to Fig. 7.

### "Description of PlayItem()"

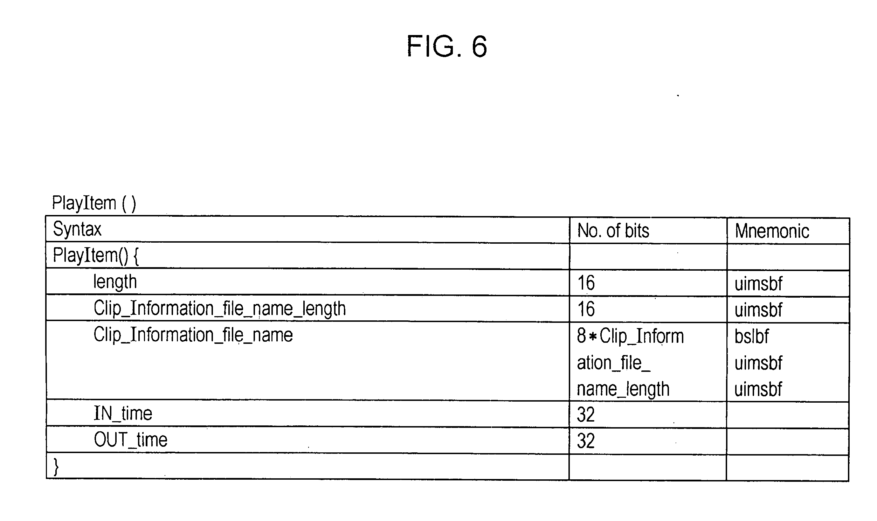

Next, Fig. 6 illustrates the internal structure of a PlayItem () contained in the PlayList () shown in Fig. 5.

At the head of PlayItem () is length (16) bits, with length representing the size of the PlayItem () including it.

Following length are situated Clip_Information_file_name_length (16 bits) and Clip_Information_file_name (variable length) in order. Clip_Information_file_name_length represents the size of the following Clip_Information_file_name in the number of bytes. Clip_Information_file_name represents the file name of a clip information file (A file of which the suffix in Fig. 4 is CLP) corresponding to a clip stream file to be played by PlayItem() (A file of which the suffix in Fig. 4 is PS). Note that in accordance with the above-described naming rule for the filenames of the clip stream file and clip information file, the file name of the clip information file to be played by the PlayItem() can be recognized from the Clip-Information-file-name, thereby determining the clip stream file.

Following Clip_Information_file_name are IN_time (32 bits) and OUT_time (32 bits) in order.

IN_time and OUT_time are each point-in-time information specifying the play start time and play end time of a clip stream file determined from the Clip_Information_file_name.

With IN_time, a position partway through the clip stream file (including the head) can be specified as the play start position, and with OUT_time, a position partway through the clip stream file (including the end) can be specified as the play end position.

With PlayItem(), contents are played from the IN_time to the OUT_time of a clip stream file determined from the Clip_Information_file_name. A content played by the PlayItem() will hereafter be referred to as a clip, wherever appropriate.

### "Description of PlayListMark()"

Next, Fig. 7 illustrates the internal structure of PlayListMark() included in PlayList() shown in Fig. 5.

As described above, PlayListMark() is a group of zero or more Mark() serving as marks on a time axis for playing, according to the PlayList() (Fig. 5) including that PlayListMark(). A Mark() includes at least point-in-time information representing one point-in-time (position) on the time axis for playing performed following the PlayList(), type information representing the type of Mark(), and argument information serving as an argument for an event in the event that the type information represents a type for triggering an event.

That is to say, at the head of PlayListMark () is length (16) bits, with length representing the size of the PlayListMark() including it.

Following length is situated number_of_PlayList_marks (16 bits), number_of_PlayList_marks representing the number of Mark() situated subsequently. Following number_of_PlayList_marks are described Mark() structures of a number equal to the number_of_PlayList_marks.

At the head of Mark() is situated a mark_type (8 bits). This mark_type is type information of the aforementioned type information, representing the type of the Mark() including it.

With the present embodiment, there are three types of Mark() provided for example, which are chapter (Chapter), index (Index), and event (Event).

A Mark() of which the type is chapter (hereafter referred to as chapter mark as appropriate) is a mark of the head position of a chapter, which is a unit for cuing into which the PlayList() is divided. Also, a Mark() of which the type is index (hereafter referred to as index mark as appropriate) is a mark of the head position of an index, which is a subunit of chapter. A Mark() of which the type is event (hereafter referred to as event mark as appropriate) is a mark for a position at which an event is to be triggered while playing contents following the PlayList(). Events generated by an event mark are notified to the script control module 211, as described later.

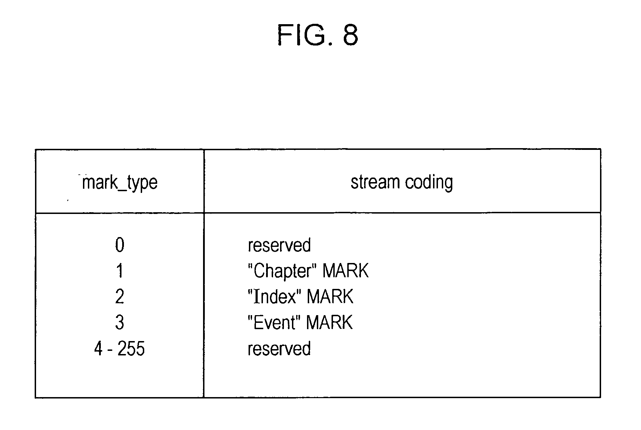

Now, Fig. 8 illustrates the relation between the value of mark_type and the type of Mark(). According to Fig. 8, 1 is set to the mark_type of a chapter mark. Also, 2 is set to a mark_type of an index mark, and 3 is set to a mark_type of an event mark. Note that in Fig. 8, of the 8-bit values which can be represented by mark_type, 0 and 4 through 255 are reserved for future expansion.

Returning to Fig. 7, following mark_type is situated mark_name_length (8 bits). Also, at the end of Mark() is situated mark_name_string (24 bytes). The mark_name_length and mark_name_string are for describing the name of the Mark(), with mark_name_length representing the valid size of the mark_name_string, and the mark_name_string representing the name of Mark(). Accordingly, from the head of mark_name_string to the number of bytes represented by mark_name_length represents the valid name of the Mark().

Following mark_name_length are situated in order four elements correlating the Mark() defined on the PlayList() with the clip stream file, namely, ref_to_PlayItem_id (16 bits), mark_time_stamp (32 bits), entry_ES_stream_id (8 bits), and entry_ES_private_stream_id (8 bits).

The ref_to_PlayItem_id describes an ID wherein a serial No. has been assigned to the PlayItem() to which the Mark () belongs. The PlayItem() (Fig. 6) to which the Mark() belongs is determined by the ref_to_PlayItem_id, and therefore, as described with Fig. 6, the clip information file and clip stream file are determined.

mark_time_stamp represents the position (point-in-time represented by the Mark() within the clip stream file determined by ref_to_PlayItem_id.

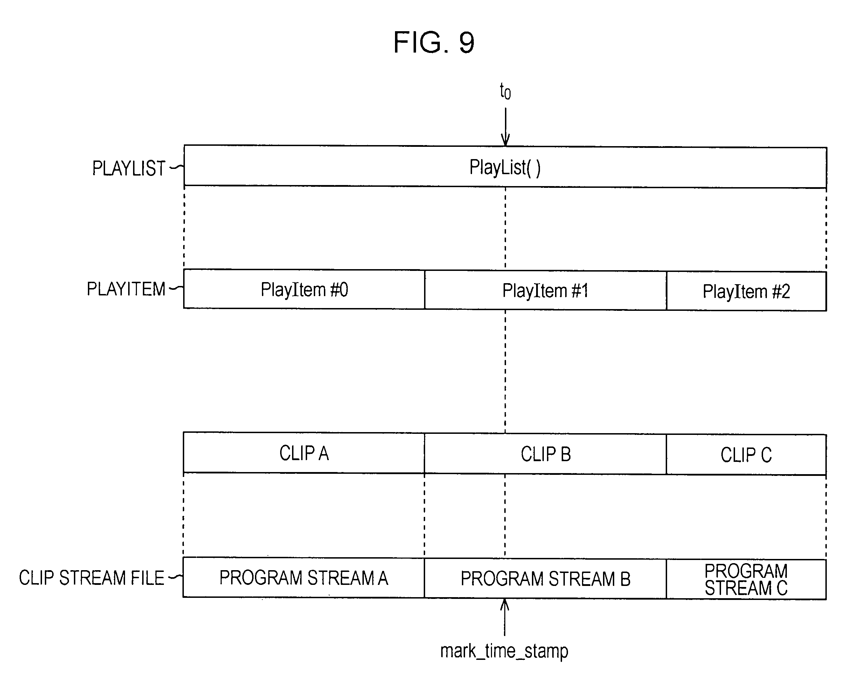

Now, Fig. 9 illustrates the relation between PlayList (), PlayItem(), clips, and program streams stored within a clip stream file.

In Fig. 9, a PlayList() is configured of 3 PlayItem (), with each of the 3 PlayItem () having assigned thereto ID #0, #1, and #2, as serial Nos. Hereafter, a PlayItem () to which an ID #i has been assigned will be described as PlayItem#i as appropriate.

In Fig. 9, clips which are contents to be played by PlayItem#0, PlayItem#1, and PlayItem#2, are illustrated as clip A, clip B, and clip C, respectively.

A clip is in reality a program stream from the IN_time to the OUT_time in a program stream stored in a clip stream file determined from the Clip_Information_file_name in the PlayItem() in Fig. 6 (further determined from the clip information file). In Fig. 9, the program streams which are the actual entities of the clip A, clip B, and clip C, are illustrated as program stream A, program stream B, and program stream C, respectively.

For example, in Fig. 9, with a Mark() serving as a mark for the position (point-in-time) t0 on the time axis for playing following the PlayList (), the ref_to_PlayItem_id and mark_time_stamp thereof are described as follows.

That is to say, point-in-time t0 is a point-in-time at which playback of PlayItem#1 is performed, so 1, which is the ID of the PlayItem#1, is described in the ref_to_PlayItem_id. Further, at the point-in-time t0, the program stream B, which is the actual entity of the clip B, is played by the PlayItem#1, so the point-in-time equivalent to the t0 in the clip stream file in which the program stream B is stored, is described in the mark_time_stamp.

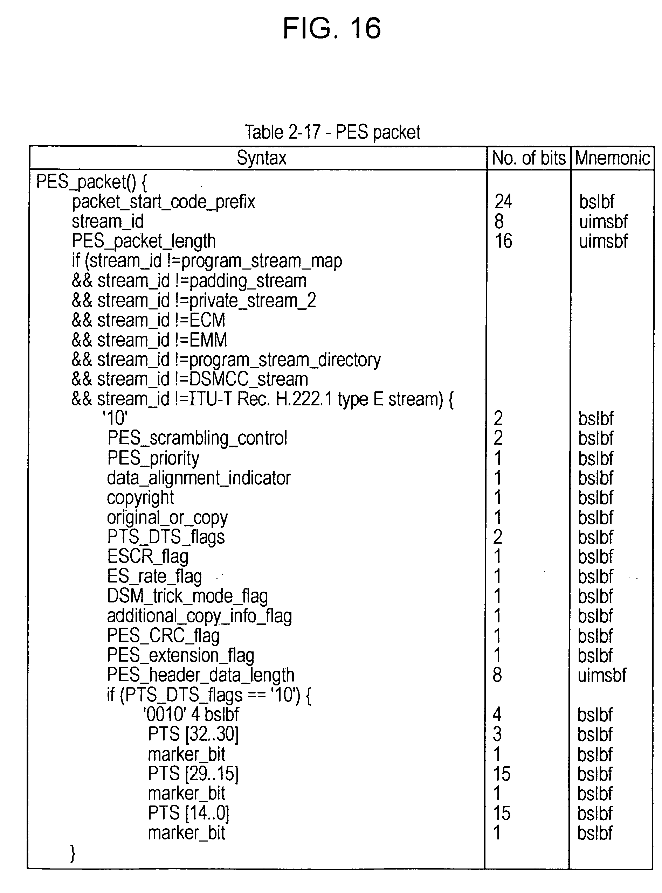

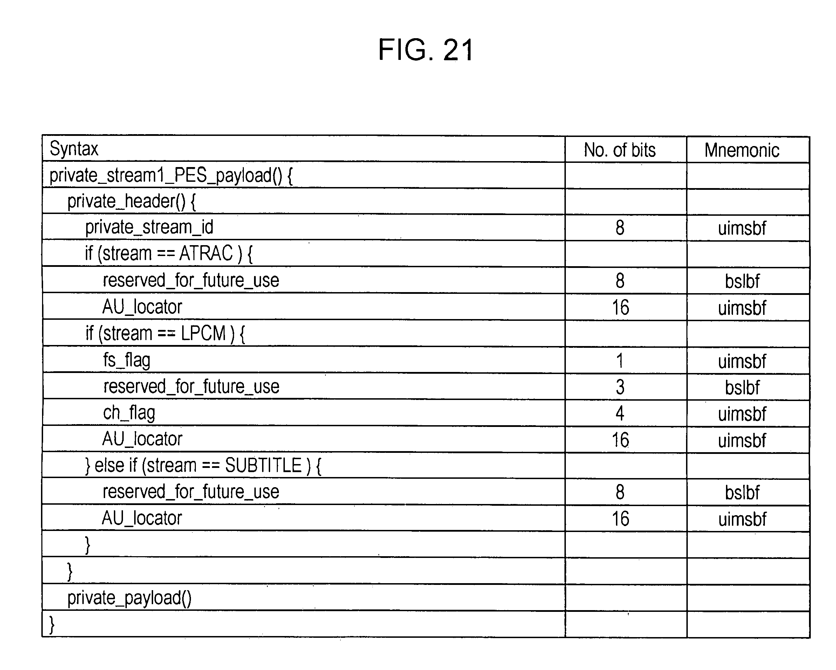

Returning to Fig. 7 again, in the event of correlating Mark() with a particular elementary stream, entry_ES_stream_id and entry_ES_private_stream_id are used of determining the elementary stream. That is to say, a later-described stream_id of (a PES_packet() shown in Fig. 16 through Fig. 18 described later, in which is situated) the elementary stream with which the Mark() is to be correlated is described in the entry_ES_stream_id. Also, a later-described private_stream_id of (a private_header() in a private_stream1_PES_payload() shown in Fig. 21 described later, in which is situated) the elementary stream with which the Mark() is to be correlated is described in the entry_ES_private_stream_id, as necessary.

For example, in a clip wherein a video stream #1 and a video stream # 2 are multiplexed, in the event that the chapter trigger point-in-time is to be changed between a case of playing the video stream #1 and a case of playing the video stream #2, the stream_id and private_stream_id of the video stream #1 are described in the entry_ES_stream_id and entry_ES_private_stream_id of the Mark() at the point-in-time of triggering the chapter mark when playing the video stream #1, and the stream_id and private_stream_id of the video stream #2 are described in the entry_ES_stream_id and entry_ES_private_stream_id of the Mark() at the point-in-time of triggering the chapter mark when playing the video stream #2.

Note that for the entry_ES_stream_id and entry_ES_private_stream_id of a Mark() regarding which no correlation with any particular elementary stream is made, 0, for example, is described in both.

Following the entry_ES_private_stream_id is situated mark_data (32 bits). The mark_data is argument information serving as an argument for an event triggered by the event mark in the event that the Mark() is an event mark. Note that in the event that the Mark() is a chapter mark or index mark, the mark_data can be used as a No. of the chapter of index which the chapter mark or index mark represents.

### "Description of Clip()"

Next, description will be made regarding the internal structure of a clip information file of which the suffix is CLP, situated in the "CLIP" directory in Fig. 4.

In Fig. 4 there are three clip information files, "00001.CLP", "00002.CLP", and "00003.CLP", each storing meta data indicating the nature and the like of clip stream files "00001.PS", "00002.PS", and "00003.PS", respectively, situated in the "STREAM" directory.

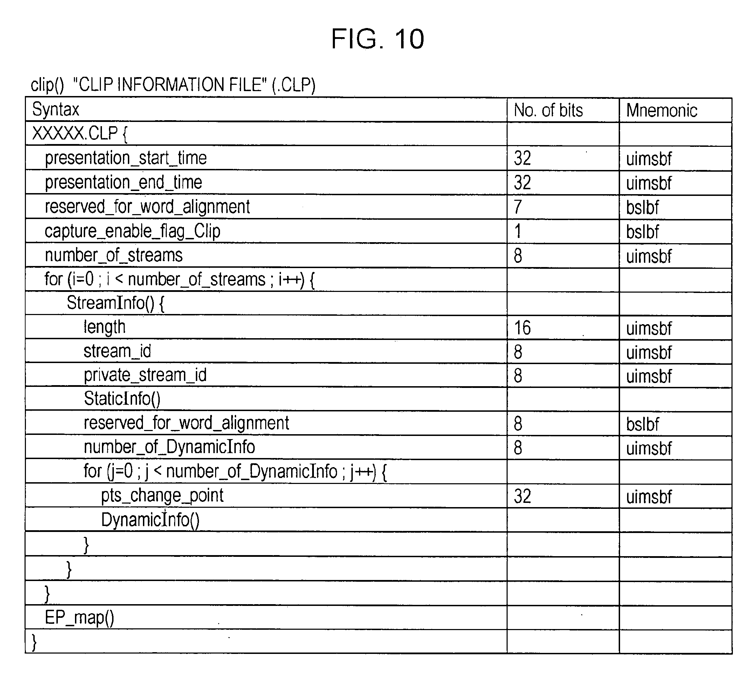

Fig. 10 illustrates the inner structure of such a clip information file Clip().

Situated at the head of the clip information file Clip() are presentation_start_time and presentation_end_time (both 32 bits), in order. The presentation_start_time and presentation_end_time represent the head and end points-in-time of (a program stream stored in) the clip stream file corresponding to the clip information file Clip(). Note that the point-in-time of the clip stream file is described as a multiple of 90 kHz, used as the point-in-time in the MPEG2-System.

Following the presentation_end_time are reserved_for_word_alignment (7 bits) and capture_enable_flag_Clip (1 bit) in order. The 7-bit reserved_for_word_alignment is for word aligning, and the capture_enable_flag_Clip is a flag for representing whether or not to permit secondary usage of the video data, as with the above-described capture_enable_flag_PlayList in Fig. 5.

However, while the capture_enable_flag_PlayList in Fig. 5 represents whether or not to permit secondary usage of video data corresponding to a video stream played by the PlayList () (video data belonging to the PlayList ()), the capture_enable_flag_Clip in Fig. 10 represents whether or not to permit secondary usage of video data corresponding to a video stream stored in a clip stream file corresponding to the clip information file Clip () (a video elementary stream). Accordingly, the increments (ranges) of video data regarding which secondary usage is permitted differs between the capture_enable_flag_PlayList in Fig. 5 and the capture_enable_flag_Clip in Fig. 10.

Note that the capture_enable_flag_Clip in Fig. 10 may also be multiple bits instead of 1 bit, as with the capture_enable_flag_PlayList in Fig. 5.

Following capture_enable_flag_Clip is situated number_of_streams (8 bits), this number_of_streams described the number of StreamInfo() structures following it. Accordingly, StreamInfo() structures of a number equal to the number in number_of_streams follows the number_of_streams.

At the head of the StreamInfo() is situated length (16 bytes) this length representing the size of the StreamInfo() including it. Following length are situated stream_id (8 bits) and private_stream_id (8 bits), with the elementary stream to be correlated with the StreamInfo() being determined (identified) by this stream_id and private_stream_id.

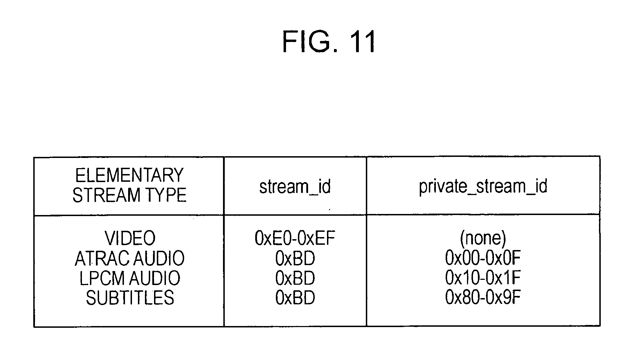

Now, Fig. 11 illustrates the relation between a stream_id and private_stream_id, for identifying elementary streams, and the elementary streams.

The stream_id is the same as that stipulated in the MPEG2-System standard, with the value thereof being determined beforehand in the MPEG2-System standard for each elementary stream (data) attribute (type). Accordingly, elementary streams of attributes defined in the MPEG2-System standard can be determined by the stream_id alone.

With the present embodiment, elementary streams of attributes not stipulated in the MPEG2-System standard can also be handled, the private_stream_id being information for identifying elementary streams of attributes not stipulated in the MPEG2-System standard.

Fig. 11 illustrates the relation between stream_id and private_stream_id for elementary streams of the four attributes of: elementary streams of video encoded by coding (decoding) stipulated by MPEG; elementary streams of audio encoded by ATRAC (Adaptive TRansform Acoustic Coding) (hereafter referred to as ATRAC audio stream as appropriate); elementary streams of audio encoded by LPCM (Linear Pulse Code Modulation) (hereafter referred to as LPCM audio stream as appropriate); and subtitle elementary streams (hereafter referred to as subtitle stream as appropriate).

The MPEG2-System standard stipulates multiplexing of elementary streams of video encoded by a coding system stipulated by MPEG, using values of a range of 0xE0 through 0xEF (0x meaning that the following text string is hexadecimal) as a stream_id for identifying elementary streams. Accordingly, with elementary streams of video encoded by a coding system stipulated by MPEG, 16 video elementary streams which can be identified by stream_id of values of a range of 0xE0 through 0xEF, can be multiplexed on a program stream.

Note that identification of elementary streams of video encoded by a coding system stipulated by MPEG can be performed by stream_id of values of a range of 0xE0 through OxEF, so private_stream_id is irrelevant (can be ignored).

On the other hand, with the MPEG2-System, stream_id does not define ATRAC audio streams, LPCM audio streams, or subtitle streams.

Accordingly, with the present embodiment, a value 0xBD which represents an attribute private_stream_1 in MPEG2-System is used for the stream_id of an elementary stream of which the stream_id is not defined in MPEG2-System. Further, as shown in Fig. 11, identification (determination) is performed using private_stream_id.

That is to say, for identification of ATRAC audio streams, private_stream_id of values in a range from 0x00 through 0x0F is used. Accordingly, 16 ATRAC audio streams can be multiplexed on a program stream. Also, for identification of LPCM audio streams, private_stream_id of values in a range from 0x10 through 0x1F is used. Accordingly, 16 LPCM audio streams can be multiplexed on a program stream. Further, for identification of subtitle streams, private_stream_id of values in a range from 0x80 through Ox9F is used. Accordingly, 32 subtitle streams can be multiplexed on a program stream.

Now, stream_id and private_stream_id will be described further at a later time.

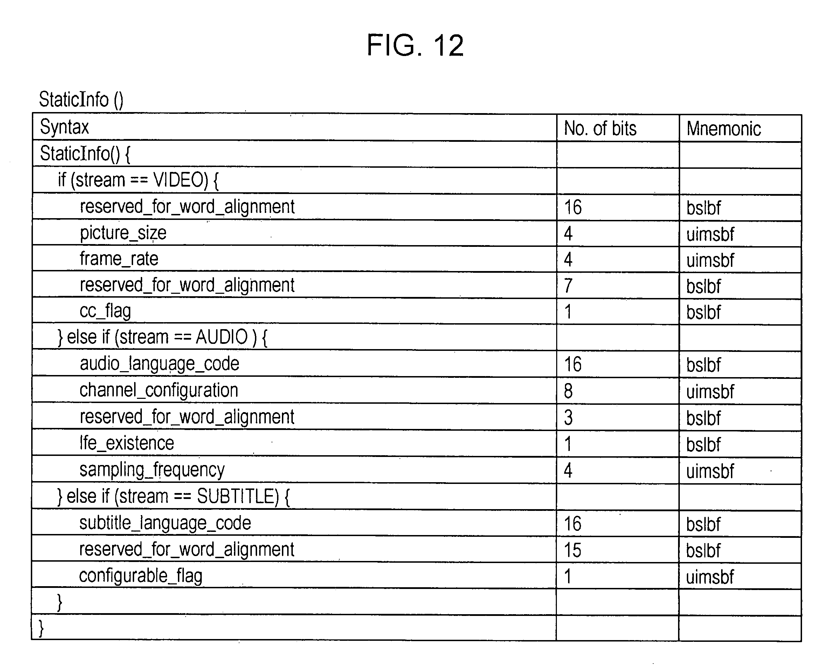

Returning to Fig. 10, following private_stream_id are situated StaticInfo() and reserved_for_word_alignment (8 bits), in order. In StaticInfo() is described information which does not change during playing of an elementary stream which is determined by the stream_id and private_stream_id (described in the StreamInfo() including that StaticInfo()). Details of StaticInfo() will be described later with reference to Fig. 12.

The reserved_for_word_alignment is used for word alignment.

Following reserved_for_word_alignment is situated number_of_DynamicInfo (8 bits), this number_of_DynamicInfo representing the number of sets of pts_change_point (32 bits) and DynamicInfo() situated thereafter.

Accordingly, following the number_of_DynamicInfo is pts_change_point and DynamicInfo() structure of a number according to that of the number_of_DynamicInfo.

The pts_change_point represents a point-in-time at which the DynamicInfo() information which is a set therewith becomes valid. Now, a pts_change_point representing the point-in-time at the head of an elementary stream is equal to the presentation_start_time described at the start of a clip information file Clip() corresponding to the clip stream file in which the elementary stream is stored.

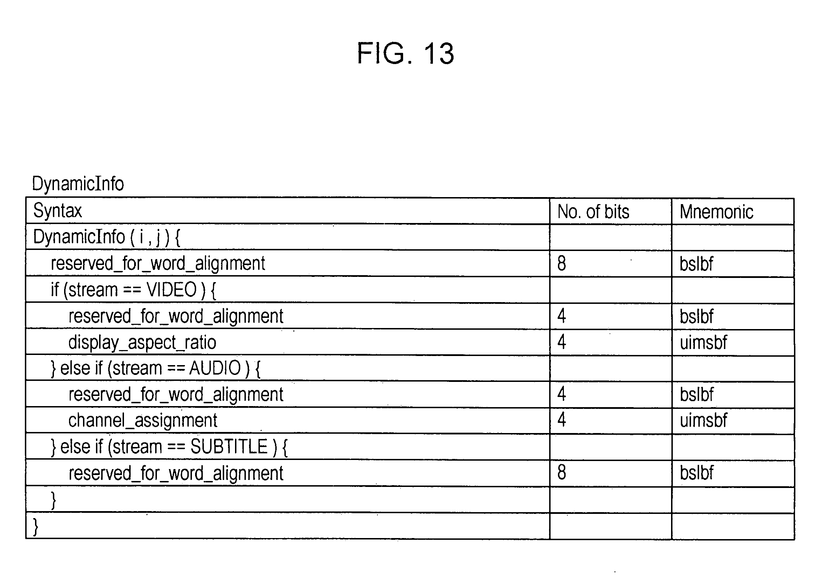

The DynamicInfo() stores information which changes during playing of an elementary stream determined by the stream_id and private_stream_id, which can be said to be dynamic information. The information described in DynamicInfo() becomes valid at the play point-in-time which the pts_change_point forming a set therewith indicates. Details of DynamicInfo() will be described later with reference to Fig. 13.

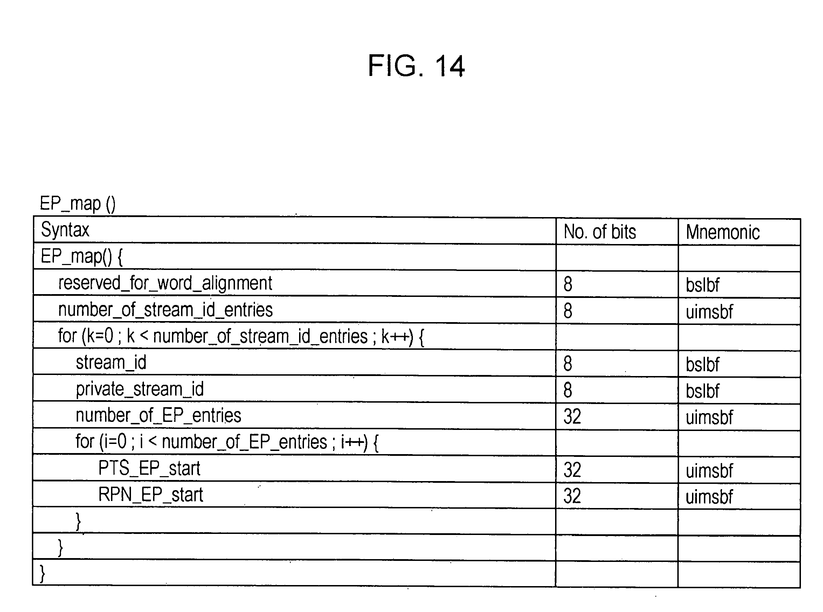

Following as many pts_change_point and DynamicInfo() as indicated by number_of_DynamicInfo, EP_map() is situated. The EP_map() will be described later with reference to Fig. 14.

### "Description of StaticInfo()"

Next, StaticInfo() shown in Fig. 10 will be described in detail with reference to Fig. 12.

Fig. 12 illustrates the syntax for StaticInfo().

The contents of StaticInfo() differ according to the attribute (type) of the corresponding elementary stream. The attribute of the elementary stream corresponding to the StaticInfo() is judged from the stream_id and private_stream_id included in the StreamInfo() shown in Fig. 10 which includes that StaticInfo().

In the event that the elementary stream corresponding to the StaticInfo() is a video stream (stream==VIDEO), the StaticInfo() is configured of picture_size (4 bits), frame_rate (4 bits), cc_flag (1 bit), and a reserved_for_word_alignment for word alignment.

The picture_size represents the size of (the image displayed by) the video data corresponding to the video stream. The frame_rate represents the frame frequency of the video data corresponding to the video stream. The cc_flag represents whether or not the video stream includes closed caption (Closed Caption) data. That is to say, for example, in the event that closed caption data is included in the video stream, the cc_flag is set to 1, and in the event that closed caption data is not included in the video stream, the cc_flag is set to 0.

In the event that the elementary stream corresponding to the StaticInfo() is an audio stream (stream==AUDIO), the StaticInfo() is configured of audio_language_code (16 bits), channel_configuration (8 bits), lfe_existence (1 bit), sampling_frequency (4 bits), and a reserved_for_word_alignment for word alignment.

Described in the audio_language_code is code representing the language of the audio data contained in the audio stream. The channel_configuration represents the attributes of the audio data contained in the audio stream, such as monaural (mono) / stereo (stereo) / multi-channel, etc. The lfe_existence represents whether or not a low-range enhancement channel exists in the audio stream, and the 1fe_existence is 1 in the event that this is included, and 0 if not included. The sampling_frequency is information representing the sampling frequency of the audio data contained in the audio stream.

In the event that the elementary stream corresponding to the StaticInfo() is a subtitle stream (stream==SUBTITLE), the StaticInfo() is configured of subtitle_language_code (16 bits), configurable_flag (1 bit), and a reserved_for_word_alignment for word alignment.

Described in the subtitle_language_code is code representing the language of the subtitle data contained in the subtitle stream. The configurable_flag is information representing whether or not changing the display of the subtitle data included in the subtitle stream from a default display format is permissible, and for example, in the event that changing of the display format is permitted, 1 is described, and if not permitted, 0 is described. Now, the subtitle data display format includes the display size, display position, display color, display pattern (e.g., blinking display and so forth), display direction (e.g., vertical direction or horizontal direction), and so forth, of the subtitle data.

### "Description of DynamicInfo()"

Next, the DynamicInfo() shown in Fig. 10 will be described in detail with reference to Fig. 13.

Fig. 13 illustrates the syntax of DynamicInfo().

At the head of the DynamicInfo() is a reserved_for_word_alignment (8 bits) for word alignment, and the subsequent components differ according to the attribute of the elementary stream corresponding to the DynamicInfo(). The attribute of the elementary stream corresponding to the DynamicInfo () is judged by the stream_id and private_stream_id included in the StreamInfo () shown in Fig. 10 which includes the DynamicInfo (), as with the case of StaticInfo () described with Fig. 12.

As described in Fig. 10, described in DynamicInfo() is dynamic information which changes while playing the elementary stream. This dynamic information is not restricted in particular, but with the embodiment shown in Fig. 13, the data corresponding to the elementary stream corresponding to the DynamicInfo(), i.e., the output attributes of the data output by the elementary stream being processed (output attributes of the data obtained from the elementary stream) are described in the DynamicInfo().

Specifically, in the event that the elementary stream corresponding to the DynamicInfo() is a video stream (stream==VIDEO), the DynamicInfo() is configured of display_aspect_ratio (4 bits) and a reserved_for_word_alignment for word alignment. Described in the display_aspect_ratio is the aspect ratio of the video data, for example, serving as the output attribute (display format) of the video data corresponding to the video stream. That is to say, described in the display_aspect ratio is information indicating whether the aspect ratio is 16:9 or 4:3, for example. Note that the DynamicInfo() of the video stream can be used to described other than the aspect ratio, such as the size of the image display by the video data (X pixels × Y pixels), for example.

In the event that the elementary stream corresponding to the DynamicInfo() is an audio stream (stream==AUDIO), the DynamicInfo() is configured of channel_assignment (4 bits) and a reserved_for_word_alignment for word alignment. In the event that two channels of audio data are included in the audio stream, described in the channel_assignment is the output attribute of the two channels (output format). That is to say, described in channel_assignment is information representing whether the audio data is assigned to stereo or dual (bilingual) channels.

In the event that the elementary stream corresponding to the DynamicInfo() is a subtitle stream (stream==SUBTITLE), the DynamicInfo() is configured of a reserved_for_word_alignment for word alignment. That is to say, with the embodiment shown in Fig. 13, not output attributes are defined as dynamic information with regard to subtitle streams.

### "Description of EP_map()"

Next, the EP_map() shown in Fig. 10 will be described in detail with reference to Fig. 14.

Fig. 14 illustrates the syntax of the EP_map().

Described in EP_map() is information regarding a decoding start-permissible point (entry point) at which decoding of each elementary stream can be started, for each of the elementary streams multiplexed on the program stream stored in the clip stream file corresponding to the clip information file Clip() shown in Fig. 10 which includes that EP_map().

Now, for fixed-rate streams, the decoding start-permissible point can be obtained by calculation, but with streams wherein the size differs for each video access access unit, such as variable-rate streams, or video streams encoded following MPEG standards, the decoding start-permissible point cannot be obtained by calculation, and the stream has to be actually analyzed to find this. Speedily recognizing the decoding start-permissible point is important for random access, and with EP_map(), the decoding start-permissible point can be speedily recognized.

Note that with MPEG2-Video, the head of the intra-picture including the Seqeunce_header() (sequence header) or the like, is the decoding start-permissible point.

At the head of the EP_map() is a reserved_for_word_alignment (8 bits) for word aligning, and subsequently number_of_stream_id_entries (8 bits). This number_of_stream_id_entries represents the number of elementary streams regarding which the decoding start-permissible point information is described in the EP_map().

Following the number_of_stream_id_entries is a repetition of information for identifying the elementary streams and information of the decoding start-permissible point for the elementary streams, of a number according to that which number_of_stream_id_entries represents.

That is to say, immediately following the number_of_stream_id_entries are situated a stream_id (8 bits) and private_stream_id (8 bits) serving as information for identifying the elementary stream, and subsequently is situated a number_of_EP_entries (32 bits). This number_of_EP_entries represents the number of decoding start-permissible points of the elementary stream identified (determined) by the immediately-preceding stream_id and private_stream_id.

Following the number_of_EP_entries are sets of PTS_EP_start (32 bits) and RPN_EP_start (32 bits)serving as decoding start-permissible point information of the elementary stream determined by the immediately-preceding stream_id and private_stream_id, repeated by a number of times according to the number represented by number_of_EP entries.

PTS_EP_start, which is one decoding start-permissible point information, represents the point-in-time for the decoding start-permissible point (playing point-in-time) within the clip stream file in which the program stream, upon which the elementary stream determined by stream_id and private_stream_id as described above has been multiplexed, is stored.

RPN_EP_start, which is the other decoding start-permissible point information, has described therein, in increments of pack() of the program stream, the position of the decoding start-permissible point, within the clip stream file in which the program stream, upon which the elementary stream determined by stream_id and private_stream_id as described above has been multiplexed, is stored. Note that with the present embodiment, let us say that the size of pack() is fixed at 2048 bytes. Also, with the present embodiment, let us say that one sector of the disk 101 is 2048 bytes.

Now, in a video stream, a later-described private_stream_2 packet (a PES_packet() of a private_stream_2 attribute) is placed immediately before the decoding start-permissible point (entry point) thereof. The private_stream_2 packet stores information used for decoding the video stream situated between that private_stream_2 packet and the next private_stream_2 packet. Accordingly, with video streams, described in the RPN_EP_start regarding the decoding start-permissible point information is not the actual decoding start-permissible point itself but rather the head position of the private_stream_2 packet placed immediately before the actual decoding start-permissible point.

Also, with an EP_map(), the sets of PTS_EP_start and RPN_EP_start serving as decoding start-permissible point information are sorted beforehand in ascending order for each elementary stream determined by stream_id and private_stream_id. Accordingly, a binary search can be made for the sets of PTS_EP_start and RPN_EP_start serving as decoding start-permissible point information.

Note that a random access method for variable rate streams or streams wherein the size of each video access access unit differs is described in, for example, Japanese Unexamined Patent Application Publication No. 2000-341640 (Japanese Patent Application No. 11-317738).

### "Description of Clip Stream File"

Next, description will be made regarding the internal structure of the clip stream file of which the suffix is PS ("00001.PS", "00002.PS", and "00003.PS", in Fig. 4), in the "STREAM" directory in Fig. 4.

A clip stream file is configured based on the MPEG2_Program_Stream () defined in MPEG-2 System (IOC/IEC 13818-1)

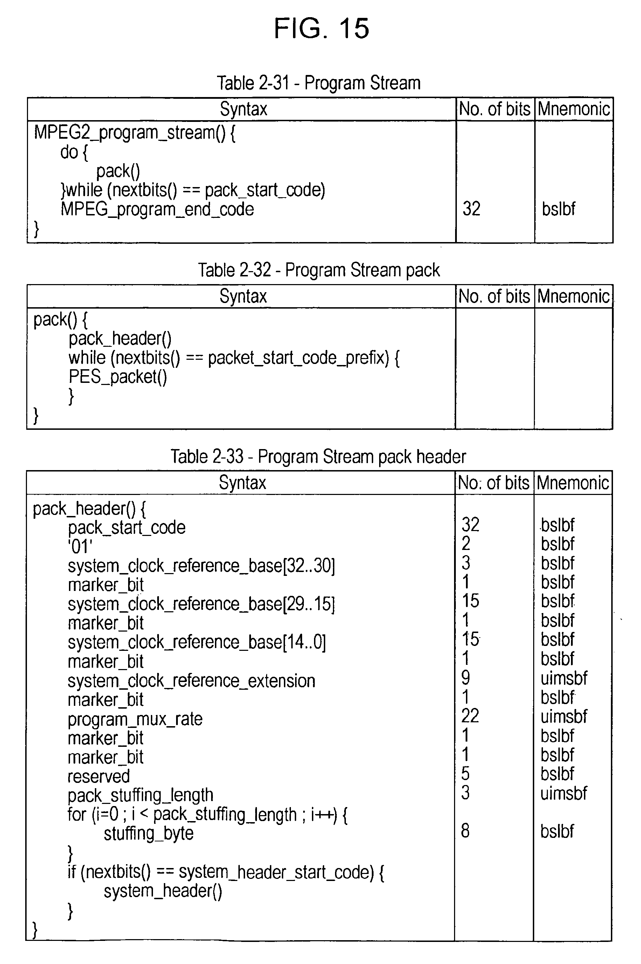

That is to say, Fig. 15 illustrates Table 2-31, Table 2-32, and Table 2-33, described in the MPEG-2 System (IOC/IEC 13818-1: 2000) standard.

A program stream stored in a clip stream file is the MPEG2_Program_Stream() defined in Table 2-31 of the MPEG-2 System standard, and is configured of one or more pack(), and one MPEG_program_end_code. Note that description of the MPEG2_Program_Stream() is given in Japanese Patent No. 2785220, etc.

As defined in Table 2-32 of the MPEG-2 System standard, one pack() is configured of one Pack_header(), and an optional number of PES_packet (). Detailed description of the Pack_header () is defined in Table 2-33 of the MPEG-2 System standard.

Now, while the MPEG-2 System defines the size of pack() as being variable, here, this will be understood to be fixed at 2048 bytes, as described in Fig. 14. Further, here, the number of PES_packet () of a single pack () will be one, two, or three. In the event that Pack() starts with the later-described private_stream_2 packet, there always is a PES_packet () of the corresponding video stream immediately thereafter (within the same Pack()). Additionally, a padding_packet (padding packet) can be placed as a third PES_packet(). Note that a private_stream_2 packet is always at the head of a Pack().

In the event that a Pack() does not start with a private_stream_2 packet, a PES_packet() storing contents data such as video, audio,, subtitles, etc., is placed at the head of the Pack(). Additionally, a padding_packet (padding packet) can be placed as a second PES_packet().

Fig. 16 through Fig. 18 illustrate a PES_packet () defined in Table 2-17 of the MPEG-2 System standard.

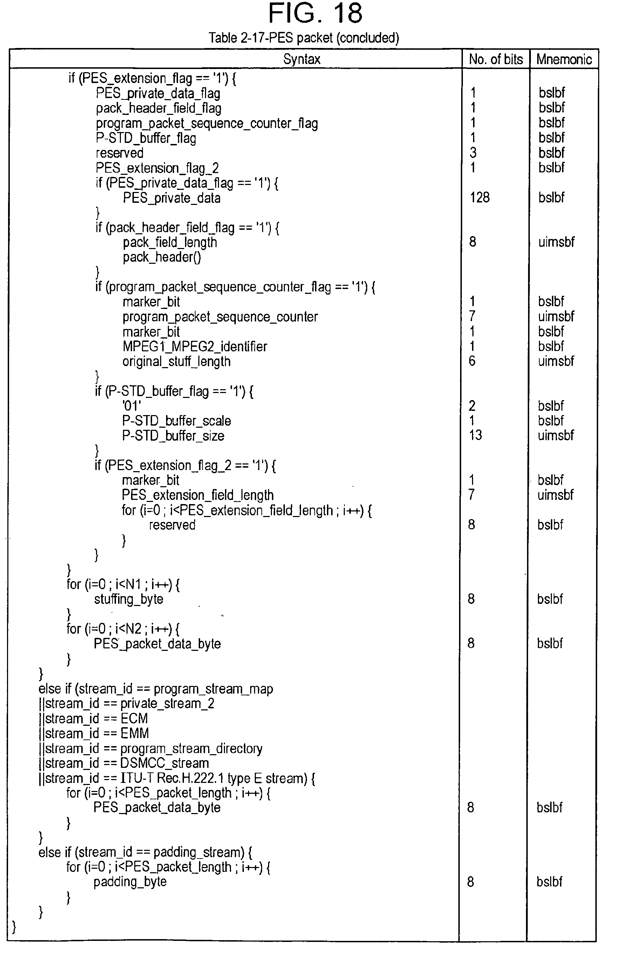

A PES_packet() can be generally divided into packet_start_code_prefix, stream_id, and PES_packet_length (Fig. 16), a header portion of with a changing structure according to stream_id and the like (including a stuffing_byte) (Fig. 16 through Fig. 18), and a PES_packet_data_byte (Fig. 18). Note that in the event that the PES_packet() is a padding_packet (stream_id===padding_stream), as many padding_byte (0×FF) (Fig. 18) as necessary are repeated, instead of the PES_packet_data_byte.

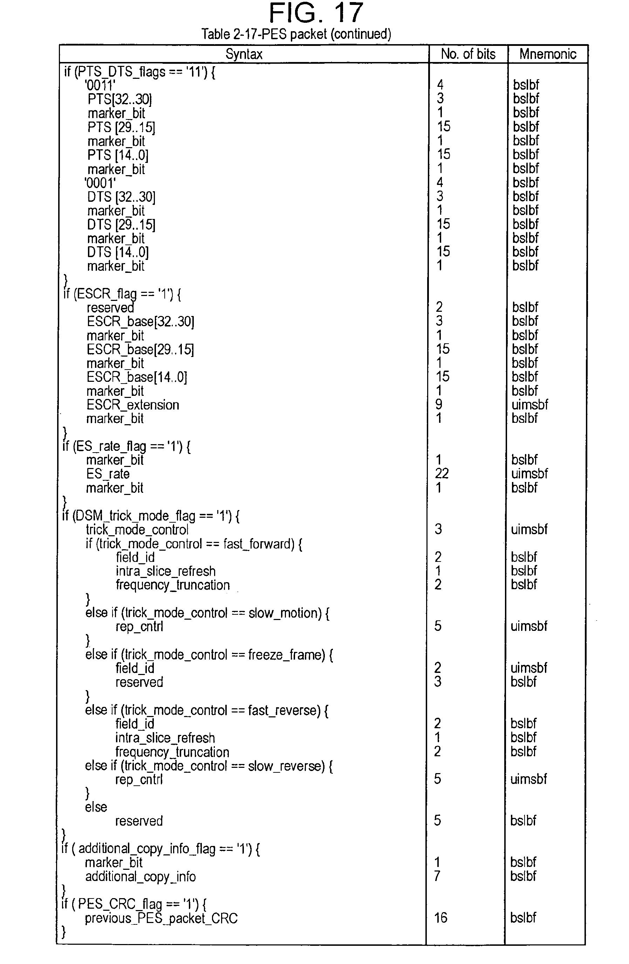

As illustrated in Fig. 16 and Fig. 17, information indicating display timing which is called PTS (Presentation Time Stamp), and information indicating decoding timing which is called DTS (Decoding Time Stamp) can be placed in the header portion of the PES_packet (). With the present embodiment, let us say that a PTS is added to all access units (decoding units making up the elementary stream, defined in MPEG2-System), and a DTS is added in the event of setting to MPEG2-System.

Elementary streams which are to be multiplexed on a program stream are stored in the PES_packet_data_byte (Fig. 18) of the PES_packet (). Described in the stream_id of the PES_packet() is a value corresponding to the attribute of the elementary stream, in order to identify the elementary stream stored in that PES_packet_data_byte.

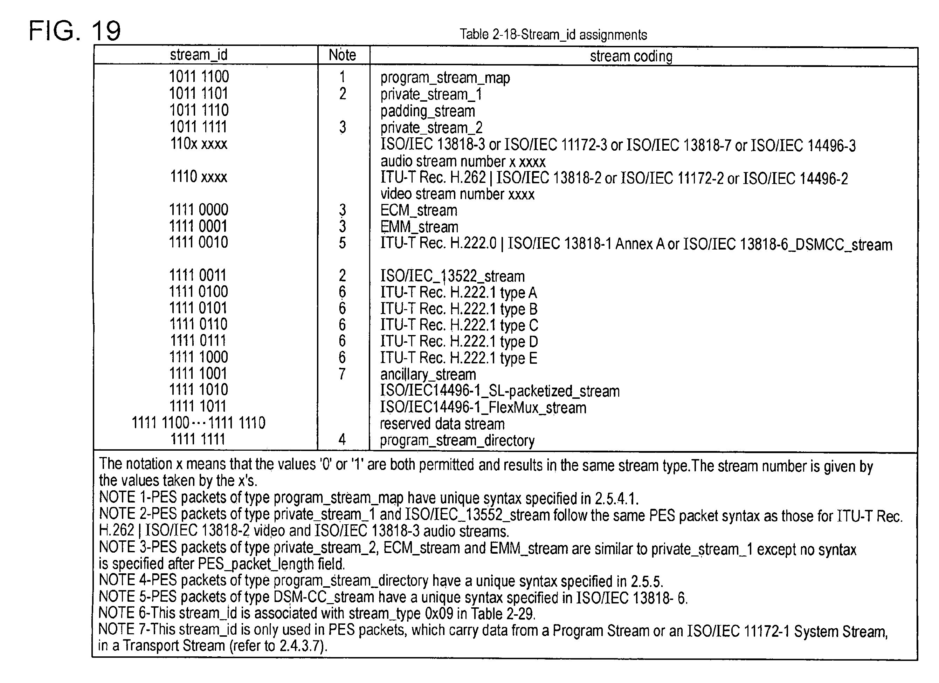

The relation between values described in the stream_id of the PES_packet() and the attribute (type) of the elementary stream is defined in Table 2-18 of the MPEG-2 System standard. Table 2-18 of the MPEG-2 System standard is shown in Fig. 19.

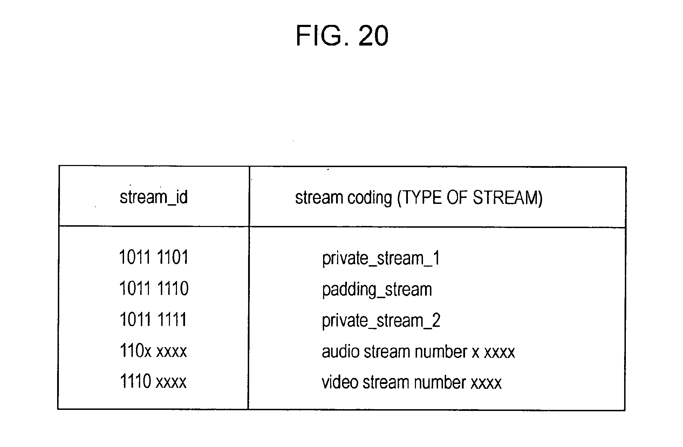

With the present embodiment, of the stream_id defined in the MPEG-2 System standard shown in Fig. 19, the values shown in Fig. 20, for example, are employed.

That is to say, with the present embodiment, the five patterns of 10111101B, 10111110B, 10111111B, 110xxxxxB, and 1110xxxxB, are used as values for stream_id. Note that "x" represents an arbitrary value of 0 or 1.

The stream_id of the PES_packet() of an elementary stream with an attribute called private_stream_1 is, in accordance with Fig. 20, 10111101B. Also, the stream_id of the PES_packet() of padding_packet is, in accordance with Fig. 20, 10111110B. Further, the stream_id of the PES_packet() of an elementary stream with an attribute called private_stream_2 is, in accordance with Fig. 20, 10111111B.

Also, the stream_id of the PES_packet() of an audio stream (audio elementary stream) defined by MPEG is 110xxxxxB. Note that the lower order five bits xxxxx of 110xxxxxB serve as an audio stream number for distinguishing audio streams, so as many as 32 (=2⁵) audio streams (audio streams defined by MPEG), which is the number which can be distinguished by this audio stream number, can be multiplexed on a program stream (MPEG2_Program_Stream()).

Also, the stream_id of the PES_packet() of a video stream (video elementary stream) defined by MPEG is 1110xxxxB. Note that the lower order four bits xxxx of 1110xxxxB serve as a video stream number for distinguishing video streams, so as many as 16 (=2⁴) video streams (video streams defined by MPEG), which is the number which can be distinguished by this video stream number, can be multiplexed on a program stream.

Now, a PES_packet() of which the stream_id is 1110xxxxB is used for storing a video stream defined by MPEG, and a PES_packet() of which the stream_id is 110xxxxxB is used for storing an audio stream defined by MPEG. On the other hand, the stream_id for a PES_packet () used for storing an elementary stream according to a coding format (e.g., ATRAC format) not defined by MPEG is not stipulated with MPEG, and accordingly, an elementary stream according to a coding format not defined by MPEG cannot be simply stored in a PES_packet() with a stream_id specified, as with video streams and audio streams defined by MPEG.

Accordingly, with the present embodiment, the PES_packet_data_byte of the PES_packet () for private_stream_1 is expanded, to store elementary streams according to coding formats not defined by MPEG.

Now, the expanded PES_packet_data_byte of the PES_packet() for private_stream_1 is described as private_stream1_PES_payload().

### "Description of private_stream1_PES_payload()"

Fig. 21 illustrates the syntax of private_streaml_PES_payload().

A private_streaml_PES_payload() is configured of a private_header() and a private payload(). Stored in the private_payload() is an elementary stream according to a coding format not defined by MPEG, such as an ATRAC audio stream, LPCM audio stream, subtitle stream, and so forth.

A private_stream_id (8 bits) is situated at the head of a private_header(). The private_stream_id is identification information for identifying the elementary stream stored in the private_payload (), and has the following values, for example, according to the attribute (type) thereof.

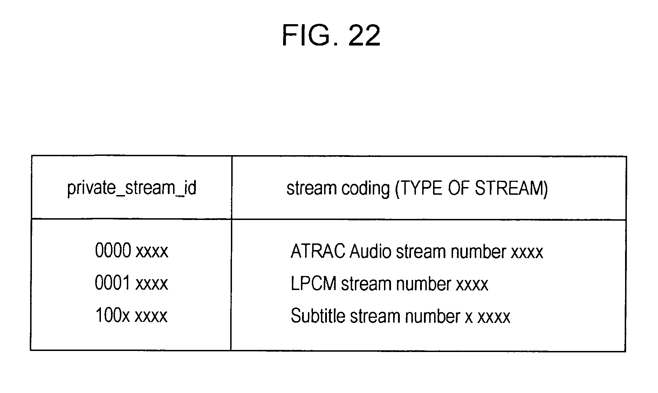

That is to say, Fig. 22 illustrates the relation between the values of private_stream_id and the attributes of elementary streams stored in private_payload().

In Fig. 22, the three patterns of 0000xxxxB, 0001xxxxB, and 100xxxxxB, are used as values for private_stream_id. Note that "x" represents an arbitrary value of 0 or 1, as with the case in Fig. 20.

According to Fig. 22, the private_stream_id of the private_stream1_PES_payload () of which private_payload () stores an ATRAC audio stream is 0000xxxxB. Note that the lower order four bits xxxx of 0000xxxxB serve as an audio stream number for distinguishing ATRAC audio streams, so as many as 16 (=2⁴) ATRAC audio streams, which is the number which can be distinguished by this audio stream number, can be multiplexed on a program stream (MPEG2_Program_Stream()).

Further, according to Fig. 22, the private_stream_id of the private_stream1_PES_payload() of which private_payload() stores an LPCM audio stream is 0001xxxxB. Note that the lower order four bits xxxx of 0001xxxxB serve as an audio stream number for distinguishing LPCM audio streams, so as many as 16 (=2⁴) LPCM audio streams, which is the number which can be distinguished by this audio stream number, can be multiplexed on a program stream.

Also, according to Fig. 22, the private_stream_id of the private_streaml_PES_payload() of which private_payload() stores a subtitle stream is 100xxxxxB. Note that the lower order five bits xxxxx of 100xxxxxB serve as a subtitle stream number for distinguishing subtitle streams, so as many as 32 (=2⁵) subtitle streams, which is the number which can be distinguished by this subtitle stream number, can be multiplexed on a program stream.

Now, the summarization of the relation between Fig. 20 and Fig. 22 is the above-described Fig. 11.

Returning to Fig. 21, the components following private_stream_id in a private_stream1_PES_payload() differ in content according to the attribute of the elementary stream stored in the private_payload(). The attribute of the elementary stream stored in the private_payload() is judged by the private_stream_id at the head of the private_header().

In the event that the elementary stream to be stored in the private_payload() is an ATRAC audio stream (private_stream_id==ATRAC), a reserved_for_future_use (8 bits) for future expansion is positioned, following which an AU_locator (16 bits) is placed. The AU_locator represents the head position of the audio access unit of the ATRAC audio stream (ATRAC audio access unit) (audio frame) stored in the private_payload(), with the position immediately following the AU_locator as a reference. In the event that there is no audio access unit existing in the private_payload (), 0xFFFF for example is described in the AU_locator.

In the event that the elementary stream to be stored in the private_payload() is an LPCM audio stream (private_stream_id==LPCM), fs_flag (1 bit), reserved_for_future_use (3 bits), ch_flag (4 bits), and AU_locator (16 bits) are sequentially arrayed.

The fs_flag represents the sampling frequency of the LPCM audio stream stored in the private_payload(). That is to say, in the event that the sampling frequency is 48 KHz for example, the fs_flag is set to 0, and in the event that the sampling frequency is 44.1 KHz, the fs_flag is set to 1.

The ch_flag represents the number of channels of the LPCM audio stream stored in the private_payload(). For example, in the event that the LPCM audio stream is monaural, the ch_flag is set to 1, and in the event that the LPCM audio stream is stereo, the ch_flag is set to 2.

The AU_locator represents the head position of the audio access unit of the LPCM audio stream (LPCM audio access unit) (audio frame) stored in the private_payload(), with the position immediately following the AU_locator as a reference. In the event that there is no audio access unit existing in the private_payload (), 0xFFFF for example is described in the AU_locator.

In the event that the elementary stream to be stored in the private_payload() is a subtitle stream (private_stream_id==SUBTITLE), a reserved_for_future_use (8 bits) for future expansion, and subsequently an AU_locator (16 bits) are situated. The AU_locator represents the head position of the subtitle access unit of the subtitle stream stored in the private_payload(), with the position immediately following the AU_locator as a reference. In the event that there is no subtitle access unit existing in the private_payload(), 0xFFFF for example is described in the AU_locator.

### "Description of private_stream2_PES_payload()"

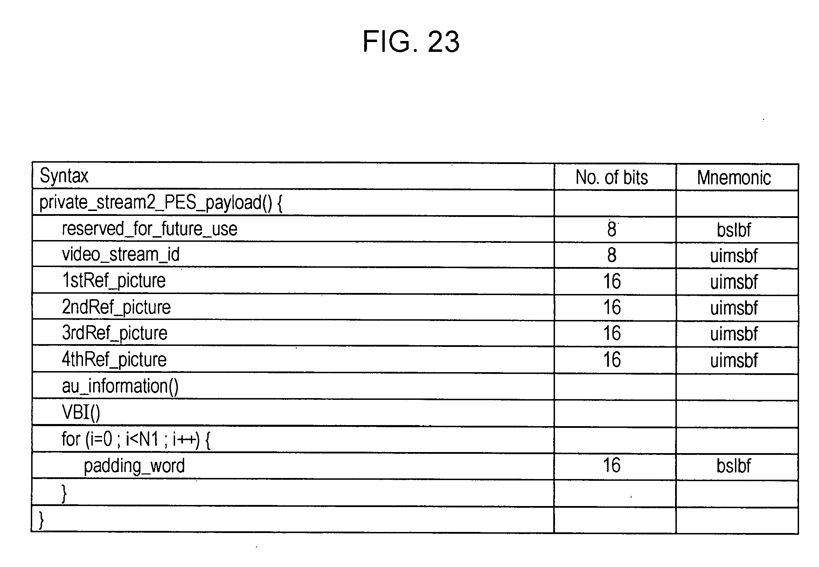

Next, Fig. 23 illustrates the syntax of private_stream2_PES_payload().

The private_stream2_PES_payload() is an expansion of the PES_packet_data_byte of the PES_packet() for private_stream_2 (Fig. 18), i.e., is an expanded PES_packet_data_byte of the PES_packet() for private_stream_2, and information used for decoding video streams is described.

With the present embodiment, the PES_packet() of the private_stream_2 is situated immediately before the decoding start-permissible point of the video stream. Accordingly, with the present embodiment, once the PES_packet () of the private_stream_2 is found from the program stream, decoding can be started from the video stream immediately following.

Here, for video streams, the RPN_EP_start of the EP_map () described above in Fig. 14 illustrates the head position of the PES_packet () of the private_stream_2.

At the head of the private_stream2_PES_payload() is a reserved_for_future_use (8 bits) for future expansion, and subsequently a video_stream_id (8 bits), 1stRef_picture (16 bits), 2ndRef_picture (16 bits), 3rdRef_picture (16 bits), 4thRef_picture (16 bits), au_information(), and a VBI(), in order.

Described in the video_stream_id is (a value identical to) the stream_id of the PES_packet() of the video stream situated immediately following the PES_packet() of the private_stream_2. This video_stream_id is used to determine (the PES_packet() storing) the video stream decoded using the information stored in (the private_stream2_PES_payload() of) the PES_packet() of the private_stream_2.

The 1stRef_picture, 2ndRef_picture, 3rdRef_picture, and 4thRef_picture, are relative values of the position of the last pack() including the first, second third, and fourth reference images between the PES_packet() of the private_stream_2 of the video stream determined by the video_stream_id and the PES_packet() of the next private_stream_2, and respectively represent each. Note that the details of 1stRef_picture, 2ndRef_picture, 3rdRef_picture, and 4thRef_picture, are disclosed in, for example, Japanese Unexamined Patent Application Publication No. 09-46712 (Japanese Patent Application No. 07-211420), as byte_to_first_P_pic and byte_to_second_P_pic.

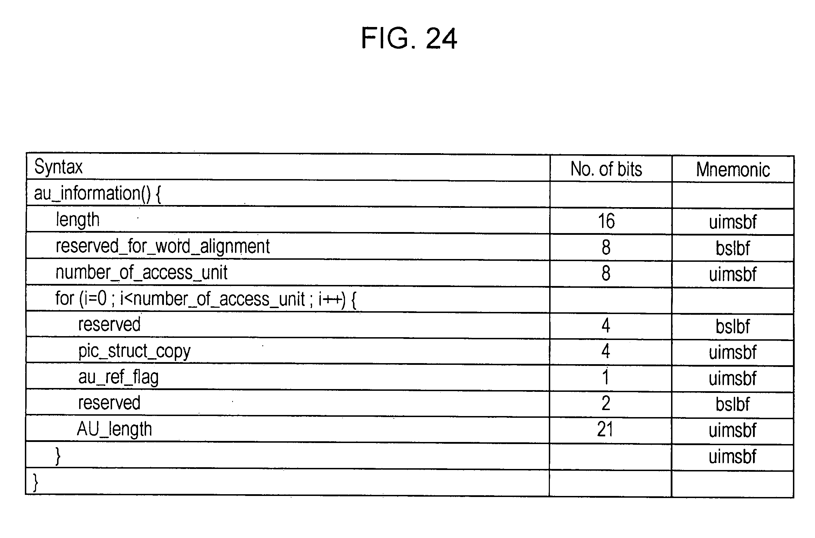

Described in au_information() is information relating to video access units in the video stream from the PES_packet() of the private_stream_2 to the PES_packet() of the next private_stream_2. Details of the au_information() will be described later with reference to Fig. 24.

VBI() is used for describing Closed Caption information.

PES_packet() of a private_stream_2 having such a private_stream2_PES_payload() are positioned at each decoding start-permissible point for each video stream.

Next, Fig. 24 illustrates the syntax of the au_information() shown in Fig. 23.

At the head of au_information() is length (16 bits). This length represents the size of the au_information() including itself. Following length are situated reserved_for_word_alignment (8 bits) and number_of_access_unit (8 bits) in order. The reserved_for_word_alignment is used for word alignment.

The number_of_access_unit represents the number of video access units (pictures) contained between the PES_packet() of the private_stream_2 including itself, to the PES_packet() of the next private_stream_2.

That is to say, the number_of_access_unit represents the number of access units (pictures) contained in the video stream indicated by video_stream_id, from this au_information() to immediately before the next au_information() (in the event that this au_information() is the last au_information () in the clip stream file, to the end of the clip stream file), within the PES_packet () of the private_stream_2 wherein the private_stream2_PES_payload () in Fig. 23 has the same video_stream_id.

Following the number_of_access_unit, the contents of a for loop is situated as many times as the number of the number_of_access_unit. That is to say, information is placed relating to each of the one or more video access units included between the PES_packet() of the private_stream_2 including the number_of_access_unit, to the PES_packet() of the next private_stream_2.

The information placed within the for loop (information relating to video access units) is as follows.

That is to say, within a for loop is placed a pic_struct_copy (4 bits), au_ref_flag (1 bit), AU_length (21 bits), and a reserved.

In the event that the video stream is MPEG4-AVC (ISO/IEC 14496-10), a copy of the pict_struct () defined in ISO/IEC 14496-10, D.2.2, that is set as to the corresponding video access unit, is described in the pic_struct_copy. Note that pic_struct() is, for example, information such as displaying a picture as a frame, or displaying the top field of a picture and then displaying the bottom field thereof, and so forth.

The au_ref_flag represents whether or not the corresponding access unit is a reference image that is referenced for decoding of another access unit (picture), wherein in the case of a reference image this is set to 1, and if not a reference image, 0.

AU_length represents the size of the corresponding access unit in increments of bytes.

### [Specific Example of Data Recorded in Disk 101]

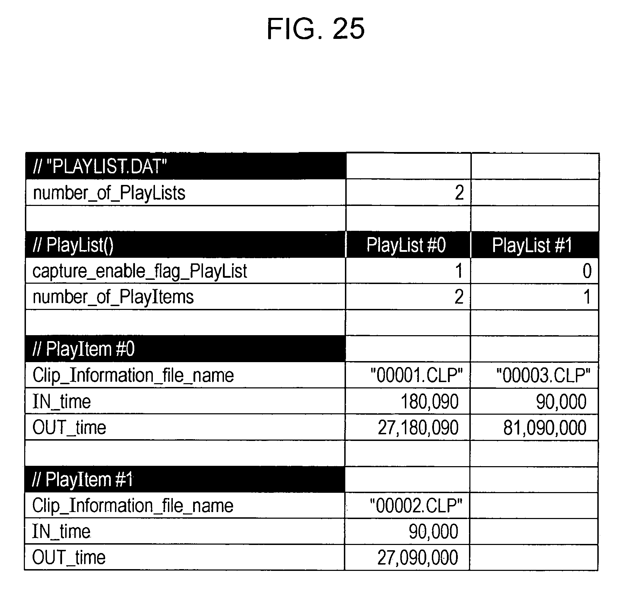

Next, Fig. 25 through Fig. 28 illustrate a specific example of data of the above-described format, recorded in the disk 101 shown in Fig. 1.

Now, with Fig. 25 through Fig. 28, MPEG2-Video is used as the video stream, and ATRAC audio stream is used as the audio stream. Note however, that the video stream and audio stream are not restricted to these. That is to say, for the video stream, MPEG4-visual, MPEG4-AVC, or the like, for example, can be used. Further, for the audio stream, MPEG1/2/4 audio, LPCM audio stream, and so forth, for example, can be used as the audio stream.

Note that a subtitle stream is unlike a video stream or audio stream in that continuous decoding/display (output) may not occur at the same intervals. That is to say, a subtitle stream is supplied from the buffer control module 215 shown in Fig. 2 to the subtitle decoder control module 218 from time to time and is decoded.

Fig. 25 through Fig. 28 illustrates a specific example of a "PLAYLIST.DAT" file, clip information files "00001.CLP", "00002.CLP", and "00003.CLP", and so forth, in a case wherein the three clip information files "00001.CLP", "00002.CLP", and "00003.CLP" are recorded in the "CLIP" directory in the disk 101 as shown in Fig. 4, and three clip stream files "00001.PS", "00002.PS", and "00003.PS", corresponding to the three clip information files "00001.CLP", "00002.CLP", and "00003.CLP", are recorded in the "STREAM" directory thereof. Note however, that a part of the data has been omitted from Fig. 25 through Fig. 28, such as the "PLAYLIST.DAT" file.

That is to say, Fig. 25 illustrates a specific example of the "PLAYLIST.DAT" file described with Fig. 5.

In Fig. 25, the number_of_PlayLists is 2, and accordingly, the number of PlayList() included in the "PLAYLIST.DAT" file is two. In Fig. 25, the first of the two PlayList() is listed as PlayList #0, and the second as PlayList #1.

With the PlayList #0 which is the first PlayList(), capture_enable_flag_PlayList is 1, and accordingly, secondary usage of the video data played according to the PlayList #0 is permitted. Also, with the PlayList #0, the number_of_PlayItems is 2, and accordingly, the number of PlayItem() included in the PlayList #0 is two. In Fig. 25, specific examples of PlayItem #0 and PlayItem #1, which are the two PlayItem(), are listed under the "PlayList #0" space.

With the PlayItem #0, which is the first PlayItem() contained in the PlayList #0, the Clip_Information_file_name described with Fig. 6 is set to "00001.CLP", the IN_time to 180,090, and the OUT_time to 27,180,090. Accordingly, the clip played by the PlayItem #0 of the PlayList #0 is the portion of the clip stream file "00001.PS" corresponding to the clip information file "00001.CLP" from point-in-time 180,090 to 27,180,090.

With the PlayItem #1, which is the second PlayItem() contained in the PlayList #0, the Clip_Information_file_name described with Fig. 6 is set to "00002.CLP", the IN_time to 90,000, and the OUT_time to 27,090,000. Accordingly, the clip played by the PlayItem #1 of the PlayList #0 is the portion of the clip stream file "00002.PS" corresponding to the clip information file "00002.CLP" from point-in-time 90,000 to 27,090,000.

On the other hand, in Fig. 25, with the PlayList #1 which is the second PlayList(), capture_enable_flag_PlayList is 0, and accordingly, secondary usage of the video data played according to the PlayList #1 is not permitted (is forbidden). Also, with the PlayList #1, the number_of_PlayItems is 1, and accordingly, the number of PlayItem() included in the PlayList #1 is one. In Fig. 25, a specific example of PlayItem #0 which is the one PlayItem() is listed under the "PlayList #1" space.

With the PlayItem #0, which is the one PlayItem() contained in the PlayList #1, the Clip_Information_file_name described with Fig. 6 is set to "00003.CLP", the IN_time to 90,000, and the OUT_time to 81,090,000. Accordingly, the clip played by the PlayItem #0 of the PlayList #1 is the portion of the clip stream file "00003.PS" corresponding to the clip information file "00003.CLP" from point-in-time 90,000 to 81,090,000.

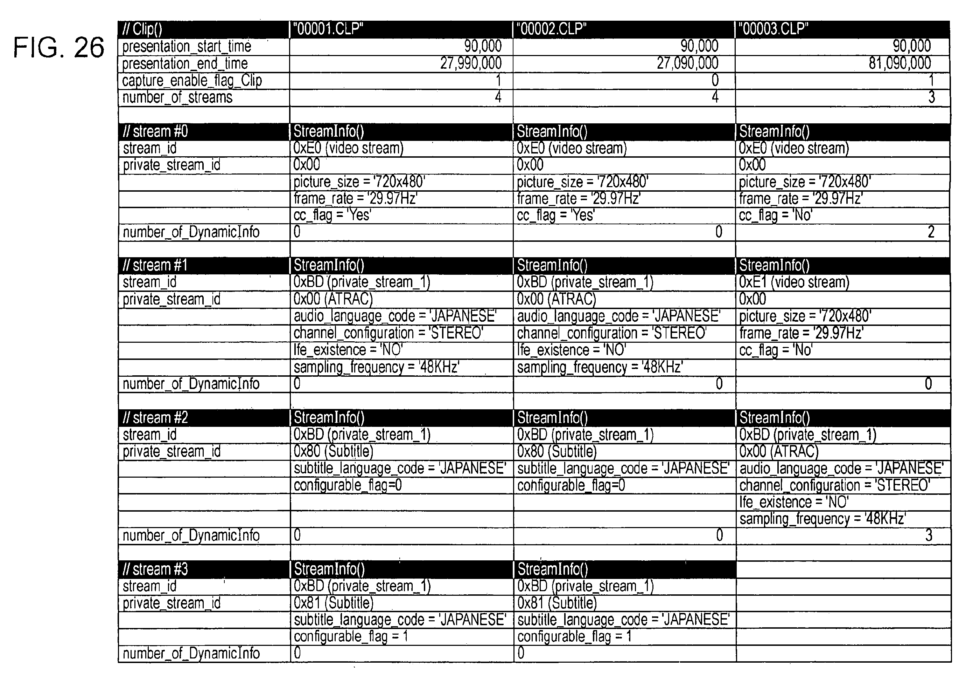

Next, Fig. 26 illustrates a specific example of the clip information file Clip () described with Fig. 10. That is to say, Fig. 26 illustrates specific examples of the clip information files "00001.CLP", "00002.CLP", and "00003.CLP" in Fig. 4.

With the clip information file "00001.CLP", the presentation_start_time is set to 90,000, and the presentation_end_time to 27,990,000. Accordingly, with the program stream stored in the clip stream file "00001.PS" corresponding to the clip information file "00001.CLP", 310 seconds worth ((27,990,000 - 90,000)/90 kHz) of contents can be used.

Also, with the clip information file "00001.CLP", the capture_enable_flag_Clip is 1, and accordingly, secondary usage of (the video data corresponding to) the video stream multiplexed on the program stream stored in the clip stream file "00001.PS" corresponding to the clip information file "00001.CLP" is permitted.

Further, in Fig. 26, the number_of_streams of the clip information file "00001.CLP" is 4, and accordingly, there are four elementary streams multiplexed on the corresponding program stream stored in the clip stream file "00001.PS".

Now, referring to the four elementary streams as stream#0, stream#1, stream#2, and stream#3, Fig. 26 shows specific examples of each StreamInfo() (Fig. 10) of each of the four elementary streams stream#0, stream#1, stream#2, and stream#3, below the "'00001.CLP'" space.

As for the first elementary stream stream#0 of the clip stream file "00001.PS", the stream_id is 0xE0, and accordingly, this elementary stream is a video stream, as described with Fig. 20 and Fig. 22 (or Fig. 11). Note that with the present embodiment, video streams are unrelated to private_stream_id, as described above, and in Fig. 26, this is 0x00.

Also, with the video stream stream#0 which is the first elementary stream of the clip stream file "00001.PS", in the StaticInfo() (Fig. 12) included in the StreamInfo() thereof, the picture_size is '720 × 480', the frame_rate is '29.97 Hz', and the cc_Flag is 'Yes'. Accordingly, this video stream stream#0 is video data of 720 × 480 pixels and a frame cycle of 29.97 Hz, and further includes closed caption data.

Further, with the video stream stream#0 which is the first elementary stream of the clip stream file "00001.PS", the number_of_DynamicInfo in the StreamInfo() (Fig. 10) is 0, so no sets of pts_change_point and DynamicInfo() exist.

Next, for the second elementary stream stream#1 of the clip stream file "00001.PS", the stream_id is 0xBD, and the private_stream_id is 0x00. Accordingly, this elementary stream stream#1 is an ATRAC audio stream, as described with Fig. 20 and Fig. 22.

Also, with the ATRAC audio stream stream#1 which is the second elementary stream of the clip stream file "00001.PS", in the StaticInfo () (Fig. 12) included in the StreamInfo () thereof, the audio_language_code is 'Japanese', the channel_configuration is 'STEREO', lfe-existence is 'NO', and sampling_frequency is '48 kHz'. Accordingly, this ATRAC audio stream stream#1 is in Japanese, and is stereo audio data. Also, no low-range enhancement channel exists, and the sampling frequency is 48 kHz.

Further, with the ATRAC audio stream stream#1 which is the second elementary stream of the clip stream file "00001.PS", the number_of_DynamicInfo in the StreamInfo() (Fig. 10) is 0, so no sets of pts_change_point and DynamicInfo() exist.

Next, for the third elementary stream stream#2 of the clip stream file "00001.PS", the stream_id is 0xBD, and the private_stream_id is 0x80. Accordingly, this elementary stream stream#2 is a subtitle stream, as described with Fig. 20 and Fig. 22.

Also, with the subtitle stream stream#2 which is the third elementary stream of the clip stream file "00001.PS", in the StaticInfo() (Fig. 12) included in the StreamInfo() thereof, the subtitle_language_code is 'Japanese', and the configurable_flag is 0. Accordingly, this subtitle stream stream#2 is Japanese subtitle data, and changing the display format thereof is not permitted (is forbidden).

Further, with the subtitle stream stream#2 which is the third elementary stream of the clip stream file "00001.PS", the number_of_DynamicInfo in the StreamInfo() (Fig. 10) is 0, so no sets of pts_change_point and DynamicInfo() exist.

Next, for the fourth elementary stream stream#3 of the clip stream file "00001.PS", the stream_id is 0xBD, and the private-stream-id is 0x81. Accordingly, this elementary stream stream#3 is a subtitle stream, as described with Fig. 20 and Fig. 22.

Note that in order to distinguish the subtitle stream stream#2 which is the third elementary stream of the clip stream file "00001.PS" and the subtitle stream stream#3 which is the fourth elementary stream of the clip stream file "00001.PS", the private_stream_id thereof is 0x80 and 0x81, respectively.

Also, with the subtitle stream stream#2 which is the fourth elementary stream of the clip stream file "00001.PS", in the StaticInfo () (Fig. 12) included in the StreamInfo () thereof, the subtitle_language_code is 'Japanese', and the configurable_flag is 1. Accordingly, this subtitle stream stream#3 is Japanese subtitle data, and changing the display format thereof is permitted.

Further, with the subtitle stream stream#3 which is the fourth elementary stream of the clip stream file "00001.PS", the number_of_DynamicInfo in the StreamInfo() (Fig. 10) is 0, so no sets of pts_change_point and DynamicInfo() exist.

Next, in Fig. 26, with the clip information file "00002.CLP", the presentation_start_time is set to 90,000, and the presentation_end_time to 27,090,000. Accordingly, with the program stream stored in the clip stream file "00002.PS" corresponding to the clip information file "00002.CLP", 300 seconds worth ((27,090,000 - 90,000)/90 kHz) of contents can be used.

Also, with the clip information file "00002.CLP", the capture_enable_flag_Clip is 0, and accordingly, secondary usage of (the video data corresponding to) the video stream multiplexed on the program stream stored in the clip stream file "00002.PS" corresponding to the clip information file "00002.CLP" is not permitted (is forbidden).

Further, in Fig. 26, the number_of_streams of the clip information file "00002.CLP" is 4, and accordingly, there are four elementary streams multiplexed on the corresponding program stream stored in the clip stream file "00002.PS", in the same way as with the case of the above-described clip stream file "00001.PS".

Now, referring to the four elementary streams as stream#0, stream#1, stream#2, and stream#3, Fig. 26 shows specific examples of each StreamInfo() (Fig. 10) of each of the four elementary streams stream#0, stream#1, stream#2, and stream#3, below the "'00002.CLP"' space.

Now, in Fig. 26, the contents of the StreamInfo() of the first through fourth elementary streams stream#0 through #3 are identical to the contents of the StreamInfo() of the first through fourth elementary streams stream#0 through #3 of the above-described clip stream file "00001.PS", and accordingly description thereof will be omitted.

Note that, as described above, the contents of the StreamInfo () of the first through fourth elementary streams stream#0 through #3 of the clip stream file "00002.PS" are identical to the contents of the StreamInfo () of the first through fourth elementary streams stream#0 through #3 of the above-described clip stream file "00001.PS", and accordingly, the first elementary stream stream#0 of the clip stream file "00002.PS" is a video stream, and the second elementary stream stream#1 is an ATRAC audio stream. Also, the third elementary stream stream#2 and the fourth elementary stream stream#3 are both subtitle streams.

Next, in Fig. 26, with the clip information file "00003.CLP", the presentation_start_time is set to 90,000, and the presentation_end_time to 81,090,000. Accordingly, with the program stream stored in the clip stream file "00003.PS" corresponding to the clip information file "00003.CLP", 900 seconds worth ((81,090,000 - 90,000)/90 kHz) of contents can be used.

Also, with the clip information file "00003.CLP", the capture_enable_flag_Clip is 1, and accordingly, secondary usage of the video stream multiplexed on the program stream stored in the clip stream file "00003.PS" corresponding to the clip information file "00003.CLP" is permitted.

Further, in Fig. 26, the number_of_streams of the clip information file "00003.CLP" is 3, and accordingly, there are three elementary streams multiplexed on the corresponding program stream stored in the clip stream file "00003.PS".

Now, referring to the three elementary streams as stream#0, stream#1, and stream#2, Fig. 26 shows specific examples of each StreamInfo () (Fig. 10) of each of the three elementary streams stream#0, stream#1, and stream#2, below the " '00003.CLP' " space.

As for the first elementary stream stream#0 of the clip stream file "00003.PS", the stream_id is 0xE0, and accordingly, this elementary stream stream#0 is a video stream, as described with Fig. 20 and Fig. 22 (or Fig. 11). Note that as with the first elementary stream stream#0 of the clip stream file "00001.PS", the private_stream_id is 0x00.

Also, with the video stream stream#0 which is the first elementary stream of the clip stream file "00003.PS", in the StaticInfo() (Fig. 12) included in the StreamInfo() thereof, the picture_size is '720 × 480', the frame_rate is '29.97 Hz', and the cc_Flag is 'No'. Accordingly, this video stream stream#0 is video data of 720 × 480 pixels and a frame cycle of 29.97 Hz, and further includes no closed caption data.

Further, with the video stream stream#0 which is the first elementary stream of the clip stream file "00003.PS", the number_of_DynamicInfo in the StreamInfo() (Fig. 10) is 2, so there are two sets of pts_change_point and DynamicInfo() described in the StreamInfo().

Next, as for the second elementary stream stream#1 of the clip stream file "00003.PS", the stream_id is 0xE1, and accordingly, this elementary stream stream#1 is a video stream, as described with Fig. 20 and Fig. 22 (or Fig. 11). Note that in order to distinguish the video stream stream#0 which is the first elementary stream of the clip stream file "00003.PS" and the video stream stream#1 which is the second elementary stream of the clip stream file "00003.PS", the stream_id thereof is 0xE0 and 0xE1, respectively. Also, as with the first elementary stream stream#0 of the clip stream file "00001.PS", the private_stream_id is 0x00.

Also, with the video stream stream#1 which is the second elementary stream of the clip stream file "00003.PS", in the StaticInfo() (Fig. 12) included in the StreamInfo() thereof, the picture_size, frame_rate, and cc_flag are the same as with the video stream stream#0 which is the first elementary stream of the clip stream file "00003.PS". Accordingly, the video stream stream#1 which is the second elementary stream of the clip stream file "00003.PS" is video data of 720 × 480 pixels and a frame cycle of 29.97 Hz, and further includes no closed caption data.

Further, with the video stream stream#1 which is the second elementary stream of the clip stream file "00003.PS", the number_of_DynamicInfo in the StreamInfo () (Fig. 10) is 0, so no sets of pts_change_point and DynamicInfo () exist.

Next, for the third elementary stream stream#2 of the clip stream file "00003.PS", the stream_id is 0xBD, and the private_stream_id is 0x00. Accordingly, this elementary stream stream#2 is an ATRAC audio stream, as described with Fig. 20 and Fig. 22.

Also, with the ATRAC audio stream stream#2 which is the third elementary stream of the clip stream file "00003.PS", in the StaticInfo() (Fig. 12) included in the StreamInfo() thereof, the audio_language_code, channel_configuration, lfe_existence, and sampling_frequency are identical to those of the ATRAC audio stream stream#1 which is the second elementary stream of the clip stream file "00001.PS". Accordingly, this ATRAC audio stream stream#2 which is the third elementary stream of the clip stream file "00003.PS" is in Japanese, and is stereo audio data. Also, no low-range enhancement channel exists, and the sampling frequency is 48 kHz.

Further, with the ATRAC stream stream#2 which is the third elementary stream of the clip stream file "00003.PS", the number_of_DynamicInfo in the StreamInfo () (Fig. 10) is 3, and accordingly, three sets of pts_change_point and DynamicInfo () are described in the StreamInfo ().

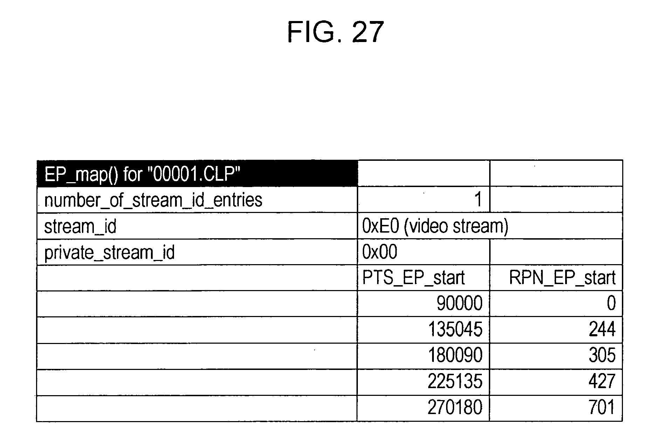

Next, Fig. 27 illustrates a specific example of EP_map() in the clip information file Clip() described with Fig. 10. That is to say, Fig. 27 illustrates a specific example of the EP_map() in Fig. 14, within the clip information file "00001.CLP" shown in Fig. 4.

In Fig. 27, the number_of_stream_id_entries of the EP_map() is 1, and accordingly, information of the decoding start-permissible point for one elementary stream is described in this EP_map().

Also, with the EP_map() in Fig. 27, the stream_id is 0x0E. Accordingly, based on what has been described with Fig. 20 and Fig. 22, described in the EP_map() is information of the decoding start-permissible point for the vide stream determined by the stream_id of 0xE0 (PTS_EP_start and RPN_EP_start (Fig. 14)). That is to say, Fig. 27 is the EP_map() of the clip information file "00001.CLP", and the elementary stream with the stream_id of 0xE0 in the clip stream file "00001.CLP" corresponding to the clip information file "00001.CLP" is the first video stream stream#0 of the clip stream file "00001.CLP" as described with Fig. 26, so the information described in the EP_map() in Fig. 27 is the PTS_EP_start and RPN_EP_start of the decoding start-permissible points of the video stream stream#0.

In Fig. 27, the PTS_EP_start and RPN_EP_start are listed for the first five points of the decoding start-permissible points of the first video stream stream#0 of the clip stream file "00001.CLP", and listing of the PTS_EP_start and RPN_EP_start for the sixth and subsequent points is omitted.

Note that with the EP_map() in Fig. 27, the private_stream_id is 0x00, but in the event that the stream_id represents a video stream, private_stream_id is irrelevant (can be ignored), as described above.

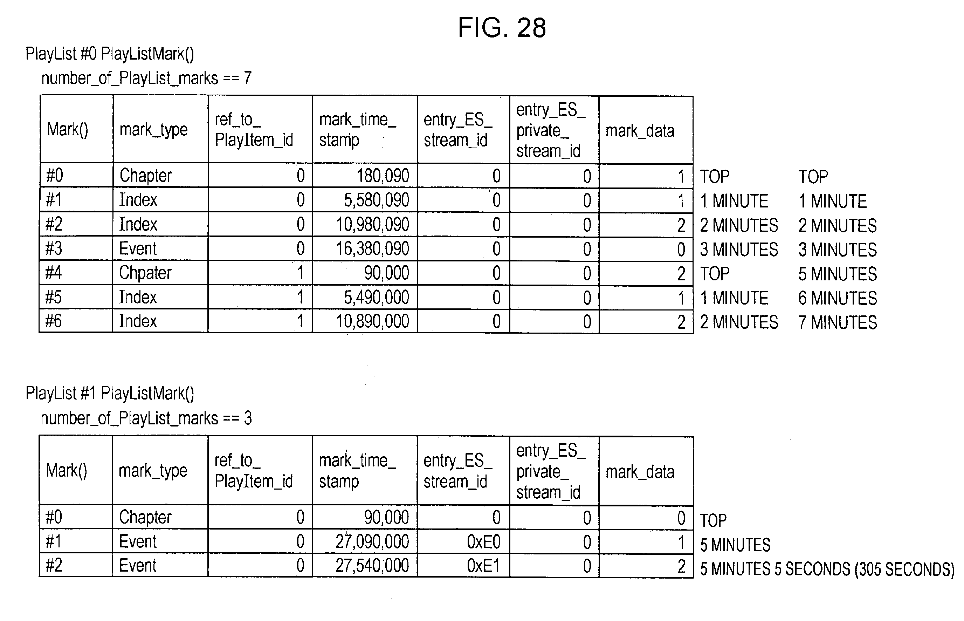

Next, Fig. 28 illustrates specific examples of the PlayList Mark() within the PlayList #0 and PlayList #1 (PlayList() in Fig. 5) described with Fig. 25.

The upper part of Fig. 28 illustrates the PlayListMark() (Fig. 7) of the PlayList #0.

At the upper part of Fig. 28, the number_of_PlayList_marks in the PlayListMark() for the PlayList #0 is 7, and accordingly, the number of Mark() contained in (the PlayListMark() of) the PlayList #0 is seven.

Also, at the upper part of Fig. 28, Mark#0 which is the first Mark() of the seven Mark() contained in the PlayList #0 has a mark_type (Fig. 7) of 'Chapter', and accordingly is a chapter mark. Further, the ref_to_PlayItem_id (Fig. 7) of the Mark#0 is 0, and accordingly belongs to PlayItem#0 of the two PlayItem#0 and #1 contained in the PlayList #0. Also, the mark_time_stamp of the Mark#0 is 180,090, and accordingly is a mark on the point-in-time (play point-in-time) 180,090 of the clip stream file played by the PlayItem#0 contained in the PlayList#0. Further, both entry_ES_stream_id and entry_ES_private_stream_id for Mark#0 are 0, so there is no correlation with any elementary stream. Also, the mark_data of Mark#0 is 1, meaning a chapter with a No. 1.

Note here that the clip stream file played by the PlayItem#0 contained in the PlayList#0 is the clip stream file "0.0001.PS" determined by the "00001.CLP" described in the Clip_Information_file_name of the PlayItem#0, which has been described with Fig. 25, and accordingly the above-described point-in-time 180,090 which the mark_time_stamp of the Mark#0 shows is the point-in-time of the clip stream file "00001.PS".

At the upper part of Fig. 28, Mark#4 which is the fifth Mark() of the seven Mark() contained in the PlayList #0 is also a chapter mark as with the first Mark#0.

That is to say, Mark#4 which is the fifth Mark() has a mark_type (Fig. 7) of 'Chapter', and accordingly is a chapter mark. Further, the ref_to_PlayItem_id (Fig. 7) of the Mark#4 is 1, and accordingly belongs to PlayItem#1 of the two PlayItem#0 and #1 shown in Fig. 25, in the PlayList #0. Also, the mark_time_stamp of the Mark#4 is 90,000, and accordingly is a mark on the point-in-time 90,000 of the clip stream file played by the PlayItem#1 contained in the PlayList#0. Further, both entry_ES_stream_id and entry_ES_private_stream_id for Mark#4 are 0, so there is no correlation with any elementary stream. Also, the mark_data of Mark#4 is 2, meaning a chapter with a No. 2.

Note here that the clip stream file played by the PlayItem#1 contained in the PlayList#0 is the clip stream file "00002.PS" determined by the "00002.CLP" described in the Clip_Information_file_name of the PlayItem#1, which has been described with Fig. 25, and accordingly the above-described point-in-time 90,000 which the mark_time_stamp of the Mark#4 shows is the point-in-time of the clip stream file "00002.PS".

Also, at the upper part of Fig. 28, Mark#1 which is the second Mark() of the seven Mark() contained in the PlayList #0 has a mark_type (Fig. 7) of 'Index', and accordingly is an index mark. Further, the ref_to_PlayItem_id (Fig. 7) of the Mark#1 is 0, and accordingly belongs to PlayItem#0 of the two PlayItem#0 and #1 shown in Fig. 25, in the PlayList #0. Also, the mark_time_stamp of the Mark#1 is 5,580,090, and accordingly is a mark on the point-in-time 5,580,090 of the clip stream file played by the PlayItem#0 contained in the PlayList#0. Further, both entry_ES_stream id and entry_ES_private_stream_id for Mark#0 are 0, so there is no correlation with any elementary stream. Also, the mark_data of Mark#1 is 1, meaning an index with a No. 1.

Note here that the clip stream file played by the PlayItem#0 contained in the PlayList#0 is the clip stream file "00001.PS" as described above, and accordingly the above-described point-in-time 5,580,090 which the mark_time_stamp of the Mark#1 shows is the point-in-time of the clip stream file "00001.PS".

At the upper part of Fig. 28, Mark#2, Mark#5, and Mark#6, which are the third, sixth, and seventh Mark() of the seven Mark() contained in the PlayList #0 are also index marks as with the second Mark#1.

Also, at the upper part of Fig. 28, Mark#3 which is the fourth Mark() of the seven Mark() contained in the PlayList #0 has a mark_type (Fig. 7) of 'Event', and accordingly is an event mark. Further, the ref_to_PlayItem_id (Fig. 7) of the Mark#3 is 0, and accordingly belongs to PlayItem#0 of the two PlayItem#0 and #1 shown in Fig. 25, in the PlayList #0. Also, the mark_time_stamp of the Mark#3 is 16,380,090, and accordingly is a mark on the point-in-time 16,380,090 of the clip stream file played by the PlayItem#0 contained in the PlayList#0. Further, both entry_ES_stream_id and entry_ES_private_stream_id for Mark#3 are 0, so there is no correlation with any elementary stream. Also, the mark_data of Mark#3 is 0, meaning an event is triggered with 0 as an argument.

Note here that the clip stream file played by the PlayItem#0 contained in the PlayList#0 is the clip stream file "00001.PS" as described above, and accordingly the above-described point-in-time 16,380,090 which the mark_time_stamp of the Mark#3 shows is the point-in-time of the clip stream file "00001.PS".

Now, at the upper part of Fig. 28, the time from the head of the PlayItem() to which the Mark() belongs is shown to the right outside the list of PlayListMark() of the PlayList #0, and further to the right thereof is given the time from the head of the PlayList #0.

Next, the lower part of Fig. 28 illustrates the PlayListMark() (Fig. 7) of the PlayList #1.

At the lower part of Fig. 28, the number_of_PlayList_marks in the PlayListMark() for the PlayList #1 is 3, and accordingly, the number of Mark() contained in (the PlayListMark () of) the PlayList #1 is three.

Also, at the lower part of Fig. 28, Mark#0 which is the first Mark() of the three Mark() contained in the PlayList #1 has a mark_type (Fig. 7) of 'Chapter', and accordingly is a chapter mark. Further, the ref_to_PlayItem_id (Fig. 7) of the Mark#0 is 0, and accordingly belongs to PlayItem#0 of the one PlayItem#0 in Fig. 25 contained in the PlayList #1. Also, the mark_time_stamp of the Mark#0 is 90,000, and accordingly is a mark on the point-in-time 90,000 of the clip stream file played by the PlayItem#0 contained in the PlayList#1. Further, both entry_ES_stream_id and entry_ES_private_stream_id for Mark#0 are 0, so there is no correlation with any elementary stream. Also, the mark_data of Mark#0 is 0, meaning a chapter with a No. 0.

Note here that the clip stream file played by the PlayItem#0 contained in the PlayList#1 is the clip stream file "00003.PS" determined by the "00003.CLP" described in the Clip_Information_file_name of the PlayItem#0, which has been described with Fig. 25, and accordingly the above-described point-in-time 90,000 which the mark_time_stamp of the Mark#0 shows is the point-in-time of the clip stream file "00003.PS".

Also, at the lower part of Fig. 28, Mark#1 which is the second Mark() of the three Mark() contained in the PlayList #1 has a mark_type (Fig. 7) of 'Event', and accordingly is an event mark. Further, the ref_to_PlayItem_id (Fig. 7) of the Mark#1 is 0, and accordingly belongs to the one PlayItem#0 shown in Fig. 25, in the PlayList #1. Also, the mark_time_stamp of the Mark#1 is 27,090,000, and accordingly is a mark on the point-in-time 27,090,000 of the clip stream file played by the PlayItem#0 contained in the PlayList#1. Further, for Mark#1 the entry_ES_stream_id is 0xE0 and the entry_ES_private_stream_id is 0, so there is correlation with the elementary stream which is determined (identified) by the stream_id of 0x0E, i.e., a video stream, as described with Fig. 20 and Fig. 22. Also, the mark_data of Mark#1 is 1, meaning an event is triggered with 1 as an argument.

Note here that the clip stream file played by the PlayItem#0 contained in the PlayList#1 is the clip stream file "00003.PS" as described above, and accordingly the above-described point-in-time 27,090,000 which the mark_time_stamp of the Mark#1 shows is the point-in-time of the clip stream file "00003.PS".

Also, the video stream with the stream_id of 0x0E with which the Mark#1 is correlated is the video stream with the stream_id of 0x0E described in "00003.CLP" described in the Clip_Information_file_name of the PlayItem#0 contained in the PlayList#1 shown in Fig. 25, to which the Mark #1 belongs, i.e., of the three elementary streams stream#0 through #2 multiplexed in the clip stream file "00003.PS" which is determined from the clip information file "00003.CLP" shown in Fig. 26, this is the first elementary stream (video stream) stream#0.

Next, at the lower part of Fig. 28, Mark#2 which is the third Mark() of the three Mark() contained in the PlayList#1 has a mark_type (Fig. 7) of 'Event', and accordingly is an event mark. Further, the ref_to_PlayItem_id (Fig. 7) of the Mark#2 is 0, and accordingly belongs to the one PlayItem#0 shown in Fig. 25, in the PlayList #1. Also, the mark_time_stamp of the Mark#1 is 27,540,000, and accordingly is a mark on the point-in-time 27,540,000 of the clip stream file played by the PlayItem#0 contained in the PlayList#1. Further, for Mark#2 the entry_ES_stream_id is 0xE1 and the entry_ES_private_stream_id is 0, so there is correlation with the elementary stream which is determined (identified) by the stream_id of 0xE1, i.e., a video stream, as described with Fig. 20 and Fig. 22. Also, the mark_data of Mark#2 is 2, meaning an event is triggered with 2 as an argument.

Note here that the clip stream file played by the PlayItem#0 contained in the PlayList#1 is the clip stream file "00003.PS" as described above, and accordingly the above-described point-in-time 27,540,000 which the Mark#2 shows is the point-in-time of the clip stream file "00003.PS".

Also, the video stream with the stream_id of OxE1 with which the Mark#2 is correlated is the video stream with the stream_id of OxE1 described in "00003.CLP" described in the Clip_Information_file_name of the PlayItem#0 contained in the PlayList#1 shown in Fig. 25, to which the Mark #2 belongs, i.e., of the three elementary streams stream#0 through #2 multiplexed in the clip stream file "00003.PS" which is determined from the clip information file "00003.CLP" shown in Fig. 26, this is the second elementary stream (video stream) stream#1.

Now, at the lower part of Fig. 28, the time from the head of the PlayItem() to which the Mark() belongs is shown to the right outside the list of PlayListMark() of the PlayList #1.

Note that while in Fig. 28 the chapter and index Nos. which the chapter marks and index marks indicate are described in the mark_data, but the chapter and index Nos. which the chapter marks and index marks indicate can be recognized by counting the number of chapter marks and index marks in PlayListMark() for example, even without being described in the mark_data.

### [Description of Operations of Disk Device]

Next, description will be made regarding the operations of the disk device shown in Fig. 1, assuming that data (files) such as described in Fig. 25 through Fig. 28 is recorded in the disk 101 shown in Fig. 1.

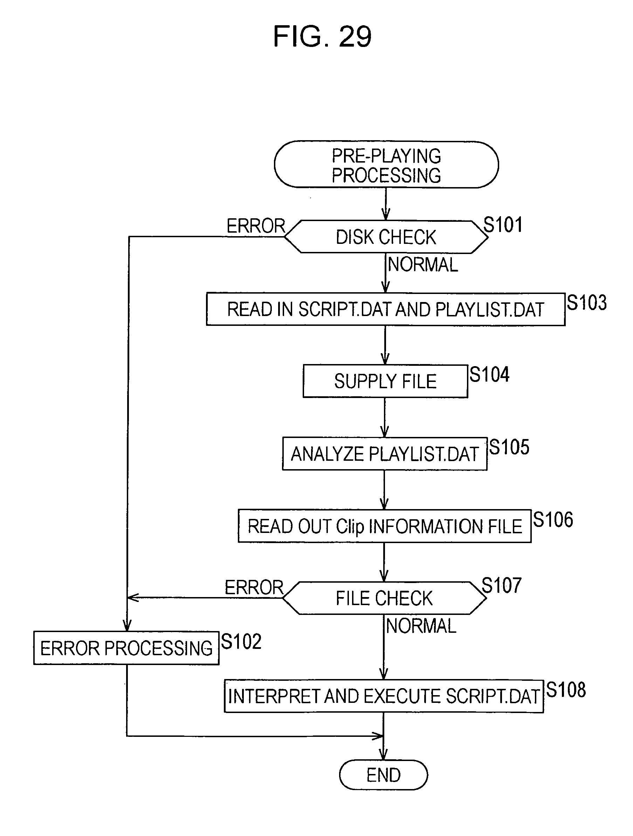

Upon the disk 101 being inserted into the disk drive 102, a message to that effect is transmitted to the video content playing program 210 via the drive interface 114 and further via the operating system shown in Fig. 2. Upon receiving from the operating system 201 the message to the effect that the disk 101 has been inserted to the disk drive 102, the video content playing program 210 starts the pre-playing processing shown in Fig. 29.

### "Pre-Playing Processing"

That is to say, Fig. 29 is a flowchart illustrating pre-playing processing which the video content playing program 210 performs.

Now, the operations or processing of the disk device described below with the flowchart do not necessarily have to be performed in time-sequence following the order listed in the flowchart, and may be performed in parallel or individually. Note that however, with the present specification, the operations or processing of the disk device will be described following the flowchart for the sake of facilitating description.

In the pre-playing processing, in step S101 the video content playing program 210 uses the file system functions of the operating system 201 to check the disk 101, and determines whether or not the disk 101 is a normal disk for use by the video content playing program 210.

Now, as described above, access to the disk 101 (reading out files) is performed using the file system function of the operating system 201, but description thereof will be omitted as suitable below.

In the event that determination is made in step S101 that the disk 101 is not a normal disk, i.e., in the event that the file system used in the disk 101 is not of a type compatible with the operating system 201, or in the event that there is no "VIDEO" directory in the root directory, for example, the video content playing program 210 determines that it is incompatible with the disk 101, proceeds to step S102, the graphics processing module 219 performs error processing, and the pre-playing processing ends.

That is to say, the graphics processing module 219 generates (video data of) an error message to the effect that the disk 101 is not normal, as error processing, outputs this from the video output module 220, and thereby displays an error message. Note that other arrangements can be made for error processing wherein, for example, warning sounds are emitted from the audio output module 221, the disk 101 is ejected from the disk drive 102, and so forth.

On the other hand, in the event that determination is made in step S101 that the disk 101 is a normal disk, the flow proceeds to step S103, and the video content playing program 210 uses the content data supply module 213 to request from the operating system 201 and read out the two data files of the "SCRIPT.DAT" file and the "PLAYLIST.DAT" file in the "VIDEO" directory of the disk 101 (Fig. 4), and the flow proceeds to step S104. In step S104, the "SCRIPT.DAT" file is supplied to the script control module 211, and the "PLAYLIST.DAT" file is supplied to the player control module 212.

Subsequently, the flow proceeds from step S104 to S105 through S107, and the player control module 212 performs initialization processing. Note that the script control module 211 stands by until initialization processing of the player control module 212 ends.

### "Initialization Processing of the Player Control Module 212"

With the initialization processing, in step S105, the player control module 212 analyzes the "PLAYLIST.DAT" file, and inspects the number of clip information files used in the "PLAYLIST.DAT" file and the file names thereof.

That is to say, in this case, the "PLAYLIST.DAT" file is that shown in Fig. 25, and since the nuber_of_PlayLists in the "PLAYLIST.DAT" file in Fig. 25 is 2, the player control module 212 recognizes that there are two PlayList() of the first PlayList#0 and the second PlayList#1. Further, with regarding the first PlayList#0 in the "PLAYLIST.DAT" file in Fig. 25, the number_of_PlayItems is 2, so the player control module 212 recognizes that two PlayIetm() exist in the PlayList#0, which are the first PlayItem#0 and the second PlayItem#1. The player control module 212 then makes reference to the Clip_Information_file_name of each of the first PlayItem#0 and the second PlayItem#1 in the PlayList#0 in the "PLAYLIST.DAT" file in Fig. 25, thereby recognizing that (the file name of) the clip information file of the first PlayItem#0 included in the PlayList#0 is "00001.CLP", and that the clip information file of the second PlayItem#1 included in the PlayList#0 is "00002.CLP".

In the same way, the player control module 212 recognizes that since the number_of_PlayItems is 1 for the second PlayList#1, one PlayItem() (PlayItem#0) exists in the PlayList#1, and further, from the Clip_Information_file_name thereof, that the clip information file of the PlayItem#0 is "00003.CLP".

Subsequently, the flow proceeds from step S105 to step S106, where the player control module 212 reads in from the disk 101 the clip information files recognized in step S105, i.e., the three clip information files "00001.CLP", "00002.CLP", and "00003.CLP", from the "CLIP" directory within the "VIDEO" directory of the disk 101.

Now, reading in of the clip information files in step S106 is sufficient with the clip information files of the PlayItem of the PlayList() to be played first being read in, but with the present embodiment, the clip information files of all PlayItem() of all PlayList() are read in beforehand, as described above.

Following the processing in step S106, the flow proceeds to step S107, where the player control module 212 determines whether or not reading in of the clip information files recognized in step S105 has been successful, and further determines (checks) whether or not clip stream files corresponding to the clip information files that have been read in exist in the disk 101. That is to say, in step S107, determination is made regarding whether reading in of the clip information files "00001.CLP", "00002.CLP", and "00003.CLP", has been successful, and further, whether or not there exist in the "STREAM" directory under the "VIDEO" directory in the disk 101, clip stream files "00001.PS", "00002.PS", and "00003.PS", of which only the suffixes of the file names differ from the clip information files "00001.CLP", "00002.CLP", and "00003.CLP".

In the event that determination is made in step S107 that reading in of the clip information files recognized in step S105 has failed, or that no clip stream files corresponding to the clip information files exist in the disk 101, that is to say, for example, in the event that clip information files or clip stream files necessary for playback following the "PLAYLIST.DAT" file are not recorded in the disk 101, the video content playing program 210 determines that it is incompatible with the disk 101 and proceeds to step S102, where the above-described error processing is performed, and the pre-playing processing ends.

On the other hand, In the event that determination is made in step S107 that reading in of the clip information files recognized in step S105 has been successful, and also that clip stream files corresponding to the clip information files exist in the disk 101, the player control module 212 ends the initialization processing, and the flow proceeds to step S108.

In step S108, the script control module 211 starts analyzing and executing of the "SCRIPT.DAT" file.

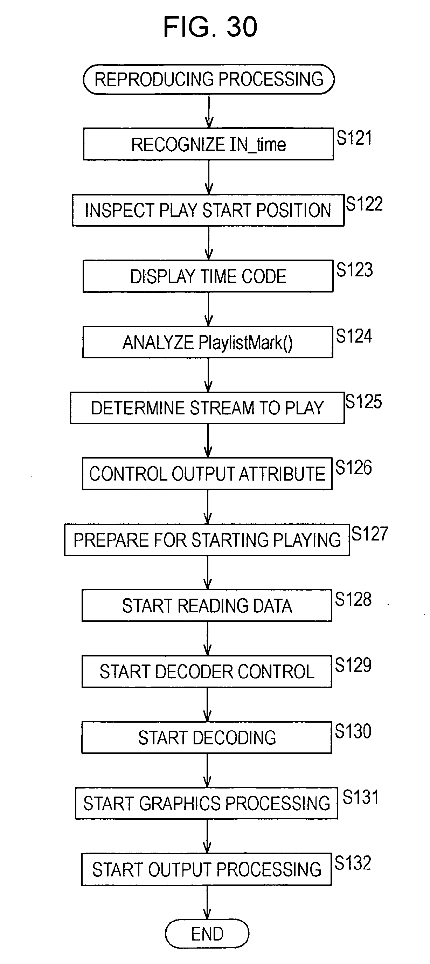

For example, if we say that here that playing of the first PlayList() (PlayList#0) has been instructed to the player control module 212 by the script control module 211 executing the "SCRIPT.DAT" file, the playing processing shown in Fig. 30 starts.

### "Playing Processing"

That is to say, Fig. 30 is a flowchart for describing the playing processing which the video control playing program 210 performs.

### "Playing Preparation Processing"

In the playing processing, first, in steps S121 and S122, the player control module 212 performs playing preparation processing for the PlayList() regarding which the script control module 211 has instructed playing, i.e., the first PlayList() (PlayList#0).

That is to say, in step S121, the player control module 212 confirms the IN_time (Fig. 6) of the first PlayItem#0 included in the first PlayList#0, proceeds to step S122, and inspects the playing start position for starting playing on the clip stream file "00001.PS" played by the first PlayItem#0 included in the first PlayList#0, which is equivalent to the IN_time of the PlayItem#0 thereof.

Now, in the event that the IN_time of the PlayItem() (Fig. 6) indicates the head of the clip stream file, the program stream can be read out from the head of the clip stream file, but in the event that the IN_time indicates a position other than the head of the clip stream file, the position corresponding to the IN_time needs to be searched out (inspected), and the program stream read out from these.

Specifically, in the case shown in Fig. 25, the IN_time of the first PlayItem#0 of the first PlayList#0 is 180,090. The player control module 212 searches out the play start position suitable for 180,090, which is the IN_time of the PlayItem#0, from the EP_map() shown in Fig. 27 for the clip stream file "00001.CLP" played by the first PlayItem#0 included in the first PlayList#0.

That is to say, the player control module 212 searches for the greatest PTS_EP_start which satisfies the expression PTS_EP_start ≤ IN_time, from all of the PTS_EP_start representing the decode start-permissible points described in the EP_map(), for example, using a binary search or the like. Now, the reason for searching for a PTS_EP_start equal to or smaller than the IN_time is that the position represented by the IN_time may not necessarily be a decode start-permissible point.

In this case, the IN_time is, as described above, 180,090. Also, in the EP_map() shown in Fig. 27 of the clip stream file "00001.CLP" played by the first PlayItem#0 included in the first PlayList#0, 180,090 is described as the greatest PTS_EP_start which satisfies the expression PTS_EP_start ≤ IN_time. Accordingly, the player control module 212 searches the PTS_EP_start which is 180,090, from the EP_map() shown in Fig. 27.

Further, with the player control module 212, 305 (sector) which is the RPN_EP_start corresponding to the searched PTS_EP_start is read out, and the position on the clip stream file "00001.PS" represented by the RPN_EP_start which is 305, is determined as the playing start position.

Upon determining the playing start position as described above, the flow proceeds from step S122 to S123, and the player control module 212 controls the graphics processing module 219 to display a time code. The graphics processing module 219 follows the control of the player control module 212 and generates (video data of) a time code, and outputs this to the video output module 220. Thus, time code display is started.

Now, the time code of which the display starts in step S123 is a value wherein the head of the PlayList() has been converted into 00:00:00 (hour : minute : second), for example. Note that chapter and index Nos. may be displayed, along with or instead of the time code.

### "Analyzing processing of PlaylistMark()"

After display of the time code has started in step S123, the flow proceeds to step S124, where the player control module 212 performs analyzing processing for analyzing the PlaylistMark() (Fig. 7) described in the PlayList() regarding which playing has been instructed from the script control module 211, i.e., the first PlayList() (PlayList#0).

Specifically, the player control module 212 recognizes that the number of Mark() contained in the PlayList#0 is seven, since the number_of_PlayList_marks is 7 in the PlaylistMark() shown to the upper portion in Fig. 28, in the first PlayList#0 of the "PLAYLIST.DAT" file that has already been read in.

Further, the player control module 212 analyzes the seven Mark() shown to the upper portion in Fig. 28, included the PlayList#0, and recognizes from the ref_to_PlayItem_id thereof that the four Mark() from the first through the fourth of the seven Mark() belong to the first PlayItem() (PlayItem#0) of the PlayList#0.

Subsequently, the player control module 212 extracts the mark_time_stamp of the four Mark() belonging to the first PlayItem#0 in the PlayList#0, and hands these as a string with an element count of four to the decode control module 214. That is to say, the four points-in-time, of each mark_time_stamp {180,090}, {5,580,090}, {10,980,090}, {16,380,090}, of the four Mark() from the first through fourth of the seven Mark() at the upper side of Fig. 28, are handed from the player control module 212 to the decode control module 214. At this time, the fact that the attribute of these points-in-time are "mark processing" is also passed from the player control module 212 to the decode control module 214. At the point that the point-in-time which the clock unit 214A keeps matches the point-in-time of the attribute of "mark processing", the decode control module 214 informs the player control module 212 of a message to that effect, the point-in-time at which the point-in-time with the attribute of "mark processing" matched, and the attribute of "mark processing".

### "Processing for Determining Elementary Stream to Play"

Next, the flow proceeds from step S124 to S125, and the player control module 212 determines the elementary stream to play.

That is to say, since the number_of_streams is 4 in the clip information file "00001.CLP" in Fig. 26, of which name is described in the Clip_Information_file_name of the first PlayItem#0 (Fig. 25) of the first PlayList#0, which is the PlayList() regarding which playing has been instructed by the script control module 211, the player control module 212 recognizes that four elementary streams are multiplexed on the corresponding clip stream file "00001.PS". Further, the player control module 212 inspects in order the stream_id and necessary private_stream_id of the StaticInfo() of the clip information file "00001.CLP" shown in Fig. 26, corresponding to the four elementary streams, and recognizes that the four elementary streams are one video stream, one ATRAC audio stream, and two subtitle streams. That is to say, the number of elementary streams of each attribute multiplexed on the clip stream file "00001.PS" are recognized.

Note that the information of the number of elementary streams of each attribute multiplexed on the clip stream file is used for switching over elementary streams during playing (audio switchover, subtitle switchover, etc.). Also, there are cases that no subtitle stream is present in the clip stream file (no subtitles included in the content), and the information of the number of elementary streams of the "subtitle stream" attribute is used for determining whether or not a subtitle stream exists.

Based on such StaticInfo() inspection results, the player control module 212 selects and determines the elementary streams to play, however, in this case, of the four elementary streams multiplexed on the clip stream file "00001.PS", there is only one each of elementary streams of the attributes "video stream" and "audio stream", so there is no room for selection of the elementary streams of the attributes "video stream" and "audio stream", and the single video stream and audio stream (ATRAC audio stream) are determined as the elementary streams to be played.

Also, as for elementary streams of the attribute "subtitle stream", there are two within the four elementary streams multiplexed on the clip stream file "00001.PS", so one of the two subtitle streams is selected and determined as the elementary stream to be played. Here, for example, let is say that of the two subtitle streams, the first subtitle stream in order of emergence in the clip stream file "00001.PS" is selected.

Now, there is the need to determine each of the four elementary streams in order to recognize the attributes and number of the four elementary streams multiplexed on the clip stream file "00001.PS" as described above, and the player control module 212 performs determining of the four elementary streams multiplexed on the clip stream file "00001.PS" by stream_id and necessary private_stream_id.

That is to say, of the four elementary streams multiplexed on the clip stream file "00001.PS", the player control model 212 determines the video stream which is an elementary stream of the attribute "video stream" with the stream_id of 0xE0, as described with regard to the clip information file "00001.CLP" with Fig. 26.

Also, of the four elementary streams multiplexed on the clip stream file "00001.PS", the player control model 212 determines the ATRAC audio stream which is an elementary stream of the attribute "audio stream" with the stream_id of 0xBD and private_stream_id of 0x00, as described with regard to the clip information file "00001.CLP" with Fig. 26.

Further, of the four elementary streams multiplexed on the clip stream file "00001.PS", the player control model 212 determines the two subtitle streams which are elementary streams of the attribute "subtitle stream" with the stream_id of 0xBD and private_stream_id of 0x80, and with the stream_id of 0xBD and private_stream_id of 0x81, as described with regard to the clip information file "00001.CLP" with Fig. 26.

As describe above, the elementary streams multiplexed on the clip stream file thereof can be determined by the combination of stream_id and private_stream_id, which are described as meta data of the clip information corresponding to the clip stream file.

Now, the combination of stream_id and private_stream_id is a mechanism for expanding the multiplexing of the MPEG2-System. Elementary streams can be determined in a sure manner by using the combination of stream_id and private_stream_id for determining elementary streams in meta data (database). This is also superior in expansibility, since the current mechanism can be used as it is even in future cases of expanding the meaning of the private_stream_id and increasing the number and types (attributes) of corresponding elementary streams.

That is to say, for example, with the BD (Blu ray Disc) standard, the MPEG2 standard transport stream (Transport Stream) PID (Packet ID) is used for determining data, so this is restricted to the MPEG2 standard. Also, for example, with the DVD-VIDEO standard, a sub_stream_id, which is like the private_stream_id is defined, but the sub_stream_id is not arranged to be described in a database for determining streams, and can only describe stream information of eight or 32 streams in a fixed region (see VI4-49, Table 4.2.1-2 (VTS-AST_ATRT) and VI4-52, Table 4.2.1-3 (VTS-SPST/ATRT), etc., for example), so expansibility is poor.

Conversely, with the combination of stream_id and private_stream_id, description can be made regarding as many as the number represented by number_of_streams in the clip information file Clip() shown in Fig. 10 for example, where meta data is described, and accordingly, elementary streams multiplexed on a clip stream file can be determined from the combination of stream_id and private_stream_id serving as meta data described in the clip information file Clip(), regardless of the number thereof (though within a range capable of being represented by number_of_streams).

Note that in addition to being used for determining elementary streams multiplexed on a corresponding clip stream file in the clip information file shown in Fig. 10, the combination of stream_id and private_stream_id in the present embodiment is also used for determining elementary streams with correlation of Mark(), as the combination of entry_ES_stream_id and entry_ES_private_stream_id in the PlayListMark() shown in Fig. 7, for example. Moreover, the combination of stream_id and private_stream_id is also used for determining elementary streams with description of decode permissible start points, in the EP_map() in Fig. 14, for example.

### "Output Attribute Control Processing"

Subsequently, the flow proceeds from step S125 to S126, where the player control module 212 performs control processing of the output attributes of the elementary streams to be played, i.e., the elementary streams regarding which playing has been determined in step S125.

Specifically, the player control module 212 first inspects the number_of_DynamicInfo (Fig. 10) representing the number of DynamicInfo() (Fig. 13) where output attributes are described, regarding the video stream, ATRAC audio stream, and subtitle stream, of the elementary streams to be played, i.e., the elementary streams regarding which playing has been determined in step S125.

Here, in this case, the video stream, ATRAC audio stream, and subtitle stream, to be played, are each elementary streams multiplexed on the clip stream file "00001.PS", and as described in the description of the "00001.CLP" in Fig. 26, the number_of_DynamicInfo of these is 0 for each. In the event that the number_of_DynamicInfo is 0 for all of the elementary streams to be played, the player control module 212 performs no processing in particular for the control processing of output attributes of the elementary streams to be played.

Note that processing performed as control of the output attributes of an elementary stream, in the event that the number_of_DynamicInfo is not 0 for all of the elementary streams to be played, will be described later.

### "Preparation Processing to Start Playing"

Following the processing in step S126, the flow proceeds to step S127, where the player control module 212 performs preparation processing for starting playing of the elementary streams to be played.

That is to say, the player control module 212 provides the content data supply module 213 with the file name of the clip stream file "00001.PS" upon which the elementary streams to be played are multiplexed, and the RPN_EP_start (=305) described in the EP_map() which is the playing start position determined in step S122.

Further, the player control module 212 initializes the buffer control module 215 before supply to the buffer control module 215 is started of the program stream stored in the clip stream file "00001.PS" upon which the elementary streams to be played are multiplexed.

Specifically, at the buffer control module 215 (Fig. 3), the same values are substituted into the data head pointer stored in the data head pointer storing unit 231, the data write pointer stored in the data write pointer storing unit 232, the video read pointer stored in the video read pointer storing unit 241, the audio read pointer stored in the audio read pointer storing unit 251, and the subtitle read pointer stored in the subtitle read pointer storing unit 262.

Accordingly, the data head pointer stored in the data head pointer storing unit 231 and the data write pointer stored in the data write pointer storing unit 232 point to the same position in the buffer 215A of the buffer control module 215. This represents a state in which no valid data is accumulated in the buffer 215A.

Further, the player control module 212 supplies to the buffer control module 215 the stream_id serving as identification information for identifying (determining) elementary streams to be played, and also private_stream_id if necessary.

That is to say, as described above, of the elementary streams to be played, the video stream of the attribute "video stream" is determined by the stream_id 0×E0, the ATRAC audio stream of the attribute "audio stream" is determined by the stream_id 0×BD and private_stream_id of 0×00, and the subtitle stream of the attribute "subtitle stream" is determined by the stream_id 0×BD and private_stream_id of 0×80. The player control module 212 supplies these stream_id and private_stream_id to the buffer control module 215.

At the buffer control module 215 (Fig. 3), the video read function unit 233 stores the stream_id of 0xE0 for the video stream from the player control module 212, in the stream_id register 242. Also, the audio read function unit 234 stores the stream_id of 0xBD and private_stream_id of 0x00 from the player control module 212, in the stream_id register 252 and private_stream_id register 253, respectively. Further, the subtitle read function unit 235 stores the stream_id of 0xBD and private_stream_id of 0x80 from the player control module 212, in the stream_id register 263 and private_stream_id register 264, respectively.

Note that the player control module 212 stores the stream_id and the private_stream_id of the elementary streams to be played, that have been supplied to the buffer control module 215, for later processing. The player control module 212 uses these stream_id and the private_stream_id for determining streams being currently played in the event that a later-described stream switchover request message occurs, or in later-described mark processing.

As further initialization of the buffer control module 215 (Fig. 3), the player control module 212 sets in the subtitle read function flag storing unit 261 a subtitle read function flag of a value corresponding to the clip stream file upon which the elementary streams to be played are multiplexed.

That is to say, in this case, a subtitle stream is contained in the clip stream file "00001. PS" upon which are multiplexed elementary streams to be played, so a subtitle read function flag of 1 is set in the subtitle read function flag storing unit 261 to cause the subtitle read function unit 235 to function. Note that in the event that no subtitle stream is contained in the clip stream file upon which are multiplexed elementary streams to be played, a subtitle read function flag of 0 is set in the subtitle read function flag storing unit 261. In this case, the subtitle read function unit 235 does not function (does not perform any processing in particular).

Also, the player control module 212 hands, to the decode control module 214, the IN_time 180,090 and OUT_time 27,180,090 of the first PlayItem#0 (Fig. 25) contained in the first PlayList#0 regarding which playing has been specified from the script control module 211. At the decode control module 214, the IN_time is used for controlling starting of decoding of the clip to be played by PlayItem(), and the OUT_time is used for ending decoding of the clip, and further for later-described PlayItem crossover control.

Further, the player control module 212 initializes subtitle stream display format instructions made to the graphics processing module 219. That is to say, the player control module 212 controls the graphics processing module 219 so as to set the subtitle stream display format to, for example, a default display format.

### "Start Data Reading"

Subsequently, the flow proceeds from step S127 to S128, and the player control module 212 controls the content data supply module 213, whereby the content data supply module 213 uses the functions of the operating system 201 to read out the clip stream file in which is stored the program stream upon which the elementary streams to be played are multiplexed. That is to say, the content data supply module 213 specifies the clip stream file "00001.PS" in the "STREAM" directory under the "VIDEO" directory in the disk 101 (Fig. 4), and further specifies sector 305 which is the splaying start position determined in step S122, and requests the operating system 201 to read out the file. Also, the content data supply module 213 specifies that the data read out from the disk 101 be supplied to the buffer control module 215.

Thus, readout of the program stream stored in the clip stream file "00001.PS" from the disk 101 is started, and the program stream is supplied to the buffer control module 215.

The buffer control module 215 (Fig. 3) writes the program stream, read out from the disk 101 and supplied, to the position in the buffer 215A where the data write pointer of the data write pointer storing unit 232 points, and increments the data write pointer by the size of the data that was written.

Now, hereinafter unless particularly declined, we will say that the content data supply module 213 reads out data from the disk 101 and supplies to and stores in the buffer 215A of the buffer control module 215, as long as there is room in the buffer 215A of the buffer control module 215. Accordingly, we will say here that sufficient data is always accumulated in the buffer 215A.

### "Starting Decoding Control"

Upon readout of data being started from the disk 101, and the data being accumulated in the buffer 215A of the buffer control module 215, as described above, the flow proceeds from step S128 to step S129, where the decode control module 214 controls the video decoder control module 216, audio decoder control module 217, and subtitle decoder control module 218, to start data readout from the buffer 215A as a preliminary stage to the decoding operation.

That is to say, thus, the video decoder control module 216 requests the video read function unit 233 of the buffer control module 215 (Fig. 3) for data, and obtains a single video access unit stored in the buffer 215A, the PTS and DTS (hereafter referred to as time stamp as appropriate) attached to the video access unit, and pict_struct_copy, au_ref_flag, AU_length, and so forth, which are information described in the PES_packet () of the private_stream_2 situated immediately before the decoding start permissible point (hereafter referred to as attached information), which are handed from the buffer control module 215 in response to the request. Note that time stamps are handed from the video decoder control module 216 to the decode control module 214 each time that the video decoder control module 216 obtains a video access unit.

On the other hand, the audio decoder control module 217 requests the audio read function unit 234 of the buffer control module 215 (Fig. 3) for data, and obtains a single (ATRAC) audio access unit stored in the buffer 215A, and the time stamps (PTS and DTS) attached to the audio access unit, handed from the buffer control module 215 in response to the request. Note that time stamps are handed from the audio decoder control module 217 to the decode control module 214 each time that the audio decoder control module 217 obtains an video access unit.

Further, the subtitle decoder control module 218 requests the subtitle read function unit 235 of the buffer control module 215 (Fig. 3) for data, and obtains a single subtitle access unit stored in the buffer 215A, and the time stamps attached to the subtitle access unit, handed from the buffer control module 215 in response to the request. Note that time stamps are handed from the subtitle decoder control module 218 to the decode control module 214 each time that the subtitle decoder control module 218 obtains a subtitle access unit. Also, in the event that there are not subtitle streams in the elementary streams to be played, or in the event that there are no subtitle access units stored in the buffer 215A, no data is handed from the buffer control module 215 to the subtitle decoder control module 218.

Now, each time the video decoder control module 216, audio decoder control module 217, and subtitle decoder control module 218 request data from the buffer control module 215, the results of the data request are handed to the decode control module 214.

Also, details of read out from the buffer 215A of data being handed from the buffer control module 215 to the video decoder control module 216, audio decoder control module 217, and subtitle decoder control module 218, will be described later.

### "Starting Decoding"

As described above, upon the video decoder control module 216, audio decoder control module 217, and subtitle decoder control module 218 starting readout of data from the buffer 215A of the buffer control module 215, the flow processed from step S129 to S130, and decoding of the data starts.

That is to say, based on the IN_time of 180,090 of the first PlayItem#0 contained in the first PlayList#0 that has been provided from the player control module 212 in step S127, and the time stamps handed from the video decoder control module 216, audio decoder control module 217, and subtitle decoder control module 218, as described in step S129, the decoding control module 214 instructs the video decoder control module 216, audio decoder control module 217, and subtitle decoder control module 218, to start decoding, shifting the timing if necessary to ensure synchronization.

Now, there is a method for instructing starting of decoding with the timing shifted to ensure synchronization which is described in, for example, Japanese Patent No. 3,496,725, and put simply, the smallest value of the time stamps handed from each of the video decoder control module 216, audio decoder control module 217, and subtitle decoder control module 218, is set as the point-in-time initial value timed by the clock unit 214A, timekeeping of the point-in-time is started, and decoding is instructed at the point that the point-in-time kept by the clock unit 214A and the time stamp match.

The video decoder control module 216 receives instructions to start decoding from the decode control module 214, and in response to this instruction, hands the single video access unit obtained from the video read function unit 233 of the buffer control module 215 (Fig. 3) to the video decoder 116 (Fig. 1) to be decoded. Further, the video decoder control module 216 supplies video data, which is obtained as a result of the decoding by the video decoder 116, to the graphics processing module 219.

Subsequently, the video decoder control module 216 sequentially decodes the video access units which are obtained one at a time from the video read function unit 233 of the buffer control module 215 at the video decoder 116, and supplies the video data obtained as a result of the decoding to the graphics processing module 219.

On the other hand, the audio decoder control module 217 receives instructions to start decoding from the decode control module 214, and in response to this instruction, hands the single audio access unit obtained from the audio read function unit 234 of the buffer control module 215 (Fig. 3) to the audio decoder 117 (Fig. 1) to be decoded. Further, the audio decoder control module 217 supplies audio data, which is obtained as a result of the decoding by the audio decoder 117, to the audio output module 221.

Subsequently, the audio decoder control module 217 sequentially decodes the audio access units which are obtained one at a time from the audio read function unit 234 of the buffer control module 215 at the audio decoder 117, and supplies the audio data obtained as a result of the decoding to the audio output module 221.

Also, the subtitle decoder control module 218 receives instructions to start decoding from the decode control module 214, and in response to this instruction, decodes the single subtitle access unit obtained from the subtitle read function unit 235 of the buffer control module 215 (Fig. 3) with built-in subtitle decoding software, and supplies subtitle data (subtitle image data), which is obtained as a result of the decoding thereof, to the graphics processing module 219.

Subsequently, the subtitle decoder control module 218 sequentially decodes the subtitle access units which are obtained one at a time from the subtitle read function unit 235 of the buffer control module 215 with built-in subtitle decoding software, and supplies the subtitle data obtained as a result of the decoding to the graphics processing module 219.

### "Graphics Processing"

Subsequently, the flow proceeds from step S130 to step S131, and the graphics processing module 219 performs graphics processing on the video data supplied from the video decoder control module 216, and if necessary, the subtitle data supplied from the subtitle decoder control module 218, as described above.

That is to say, the graphics processing module 219 first performs subtitle processing, wherein subtitle data from the subtitle decoder control module 218 is enlarged, reduced, etc., following instructions regarding the display format from the player control module 212. In the event that there are no instructions regarding the display format from the player control module 212, or in the event that there is an instruction for a default display format, the graphics processing module 219 saves the subtitle data from the subtitle decoder control module 218 as it is.

Further, the graphics processing module 219 adds the video data from the video decoder control module 216, and the subtitle data from the subtitle decoder control module 218 or the post-subtitle-processing subtitle data, so as to obtain output video data wherein subtitle data has been overlaid on the video data from the video decoder control module 216, which is supplied to the video output module 220.

Note that in the event of receiving instructions for display information such as, for example, menus, messages, time codes, chapter, index Nos., etc., from the script control module 211 or player control module 212, the graphics processing module 219 generates that information, overlays it on the output video data, and supplies to the video output module 220.

### "Output Processing"

Following the processing of step S131, the flow proceeds to step S132, where the video output module 220 sequentially stores in the FIFO 220A the output video data supplied from the graphics processing module 219 as described in step S131, and sequentially outputs the output video data stored in the FIFO 220A at a predetermined output rate.

The video output module 220 receives output video data from the graphics processing module 219 as long as there is room on the storage capacity (remaining amount) of the FIFO 220A, but in the event that there is no more room, requests the graphics processing module 219 to stop receiving output video data. Accordingly, the graphics processing module 219 stops processing, and also requests the video decoder control module 216 and the subtitle decoder control module 218 to stop processing. Thus, the video decoder control module 216 and the subtitle decoder control module 218 stop processing.

At a point following requesting the graphics processing module 219 to stop reception processing of output video data, where output of the output video data from the FIFO 220A has processed to where there is room in the FIFO 220A, the video output module 220 requests reception of output video data from the graphics processing module 219. This request is transmitted from the graphics processing module 219 to the video decoder control module 216 and the subtitle decoder control module 218, as with the case of requesting stopping of reception of the output video data. Thus, the graphics processing module 219, and further, the video decoder control module 216 and the subtitle decoder control module 218, resume the processing which had been stopped.

On the other hand, the audio output module 221 also sequentially stores in the FIFO 221A the output audio data supplied from the audio decoder control module 227 as described in step S130, and sequentially outputs the audio data stored in the FIFO 221A at a predetermined output rate (sampling frequency).

The audio output module 221 receives the audio data from the audio decoder control module 217 as long as there is room on the storage capacity (remaining amount) of the FIFO 221A, but in the event that there is no more room, requests the audio decoder control module 217 to stop receiving video data. Accordingly, the audio decoder control module 217 stops processing.

At a point following requesting the audio decoder control module 217 to stop reception processing of audio data, where output of the data from the FIFO 221A has processed to where there is room in the FIFO 221A, the audio output module 221 requests reception of audio data from the audio decoder control module 217. Thus, the audio decoder control module 217 resumes the processing which had been stopped.

Thus, decoding of elementary streams is performed as data is output from the video output module 220 and the audio output module 221.

The flow of the overall processing and operations when playing the disk 101 with the disk device shown in Fig. 1 is as has been described with Fig. 29 and Fig. 30, and now, other processing and operations carried out when playing the disk 101 with the disk device will be described.

### [PlayItem Crossover]

Playing of the first PlayItem#0 of the first PlayList#0 in Fig. 25 is started as described with Fig. 29 and Fig. 30, but according to the PlayList#0, upon playing of the first PlayItem#0 ending, the playing of the second PlayItem#1 starts. That is to say, PlayItem crossover, where crossover is performed from PlayItem#0 to PlayItem#1, is performed.

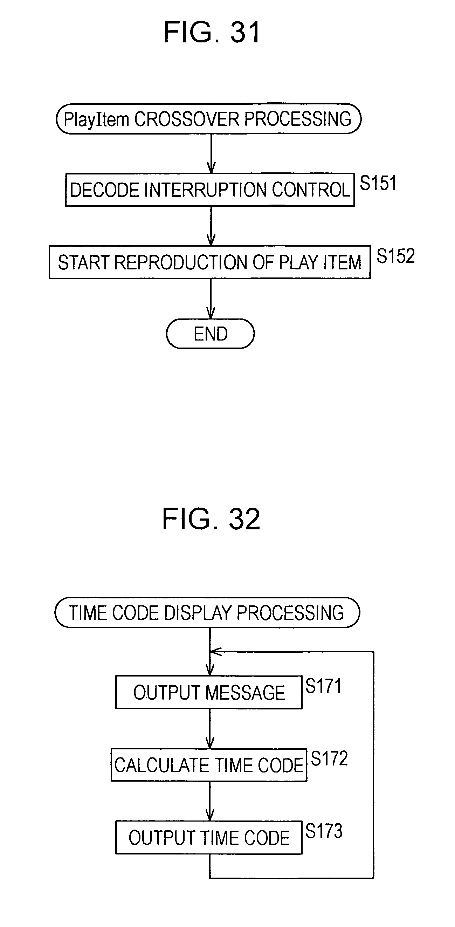

Now, the processing for PlayItem crossover will be described with reference to the flowchart in Fig. 31.

Upon playing of (the clip of) the first PlayItem#0 in the PlayList#0 in Fig. 25 starting as described in Fig. 29 and Fig. 30, the decode control module 214 (Fig. 2) continues to confirm the point-in-time kept by the clock unit 214A that is built in, while the first PlayItem#0 is being played.

### "End Playing of PlayItem#0"

At the point that the point-in-time kept by the clock unit 214A becoming equal to 27,180,090 (Fig. 25) which is the OUT_time of the first PlayList#0 provided from the player control module 212 in step S127 in Fig. 30, in step S151 the decode control module 214 performs decode interruption processing, and ends playing of the PlayItem#0.

That is to say, the decode control module 214 operates the video decoder control module 216, audio decoder control module 217, and subtitle decoder control module 218, so as to stop decoding operations. Further, the decode control module 214 controls the video output module 220 to continue output of the output video data that is being currently output.

Also, the decode control module 214 transmits a message to the effect that playing of the first PlayItem#0 has ended, to the player control module 212.

### "Starting Playing of PlayItem#1"

As described above, the player control module 212 recognizes in step S105 of Fig. 29 that a first PlayItem#0 and a second PlayItem#1 exist in the first PlayList#0, so upon a message to the effect that playing of the first PlayItem#0 has ended being transmitted thereto from the decode control module 214, the flow proceeds from step S151 to S152, and playing of the second PlayItem#1 is started in the same way as with the above-described first PlayItem#0.

That is to say, to give a general description of the playing procedures of the second PlayItem#1, first, the player control module 212 determines one of the RPN_EP_start described in the EP_map() as the playing start position for the second PlayItem#1, in the same way as with the case in step S122 in Fig. 30.

Further, the player control module 212 performs recognition of Mark() belonging to the second PlayItem#1 as described in step S124 in Fig. 30, and recognizes the number of elementary streams of each attribute that are multiplexed on the clip stream file "00002.PS" to be played by PlayItem#1, and further determines the elementary streams to play (to be played), as described in step S125 of Fig. 30.

The player control module 212 then performs processing the same as that of the case in step S127 in Fig. 30.

That is to say, the player control module 212 provides the content data supply module 213 with the RPN_EP_start of the EP_map() determined as the playing start position, and the file name of the clip stream file on which are multiplexed the elementary streams to be played, i.e., in this case, the file name of the clip stream file "00002.PS" corresponding to the "00002.CLP" described in the Clip_Information_file_name of the second PlayItem#1 (Fig. 25).

Further, the player control module 212 initializes the buffer control module 215 before starting supply to the buffer control module 215 of the program stream stored in the clip stream file "00002.PS" upon which are multiplexed the elementary streams to be played.

That is to say, thus, at the buffer control module 215 (Fig. 3), the same values are substituted into the data head pointer stored in the data head pointer storing unit 231, the data write pointer stored in the data write pointer storing unit 232, the video read pointer stored in the video read pointer storing unit 241, the audio read pointer stored in the audio read pointer storing unit 251, and the subtitle read pointer stored in the subtitle read pointer storing unit 262.

Further, the player control module 212 supplies to the buffer control module 215 the stream_id serving as identification information for identifying elementary streams to be played, and also private_stream_id if necessary.

At the buffer control module 215 (Fig. 3), the video read function unit 233 stores the stream_id of the video stream of the elementary streams to be played from the player control module 212, in the stream_id register 242. Also, the audio read function unit 234 stores the stream_id and private_stream_id of the audio stream of the elementary streams to be played from the player control module 212, and stores in the stream_id register 252 and private_stream_id register 253.

Further, since subtitle streams are contained in the clip stream file "00002.PS" upon which are multiplexed the elementary streams to be played, the stream_id and private_stream_id of the subtitle streams of the elementary streams to be played are supplied to the subtitle read function unit 235 from the player control module 212, and the subtitle read function unit 235 stores the stream_id and private_stream_id in the stream_id register 263 and private_stream_id register 264, respectively.

As initialization of the buffer control module 215 (Fig. 3), the player control module 212 further sets the value of a subtitle read function flag corresponding to the clip stream file upon which are multiplexed the elementary streams to be played, to the subtitle read function flag storing unit 261.

That is to say, in this case, since subtitle streams are contained in the clip stream "00002.PS" upon which are multiplexed the elementary streams to be played, a subtitle read function flag with a value of 1 is set to the subtitle read function flag storing unit 261, so as to cause the subtitle read function unit 235 to function.

Also, the player control module 212 provides the IN_time 90,000 and OUT_time 27,090,000 of the second PlayItem#1 (Fig. 25) to be played, to the decode control module 214.

Further, the player control module 212 initializes the instructions of the display format of the subtitle stream as to the graphics processing module 219. That is to say, the player control module 212 controls the graphics processing module 219 so as to use the default display format for the subtitle stream display format.

Note that an arrangement may be made wherein, in the event that the configurable_flag (Fig. 12) of the subtitle stream to be played is 1, which permits changing of the display format, instruction of the display format of the subtitle stream from the player control module 212 to the graphics processing module 219 may remain the current display format.

Subsequently, the playing of the second PlayItem#1 is performed in the same way as the playing of the first PlayItem#0. During playing of the second PlayItem#1, the decode control module 214 continues to confirm the point-in-time kept by the clock unit 214A that is built in, and at the point that the point-in-time kept by the clock unit 214A becoming equal to 27,090,000 (Fig. 25) which is the OUT_time of the second PlayList#1 provided from the player control module 212 in step S152 (Fig. 31), the decode control module 214 performs decode interruption processing, and ends playing of the PlayItem#1, in the same way as with in step S151.

### [Display of Time Code]

Next, in step S123 in Fig. 30, the display of the time code is started, but the display of the time code being sequentially updated.

Now, processing for time code display will be described with reference to the flowchart in Fig. 32.

Upon 1 second being clocked by the clock unit 214A built in, in step S171 the decode control module 214 (Fig. 2) supplies to the player control module 212 a message to the effect that one second has elapsed, and also the current point-in-time kept by the clock unit 214A, and the flow proceeds to step S172. In step S172, the player control module 212 receives the message and the current point-in-time from the decode control module 214, converts the current point-in-time into time code, and the flow proceeds to step S173.

In step S173, the player control module 212 controls the graphics processing module 219 so as to display the time code obtained in step S172, and the flow returns to step S171.

Accordingly, the time code is updated every second. Note that the interval between time code updating is not restricted to one second.

### [Stream Switchover]

Next, as described in Fig. 26, two subtitle streams are multiplexed on the clip stream file "00001.PS" played by the first PlayItem#0 and the clip stream file "00002.PS" played by the second PlayItem#1, which make up the first PlayList#0 described with Fig. 25.

Thus, in the event that multiple elementary streams of the same attribute are multiplexed on a clip stream file, the elementary stream to be played can be switched over from one of the multiple elementary streams to another elementary stream of the same attribute.

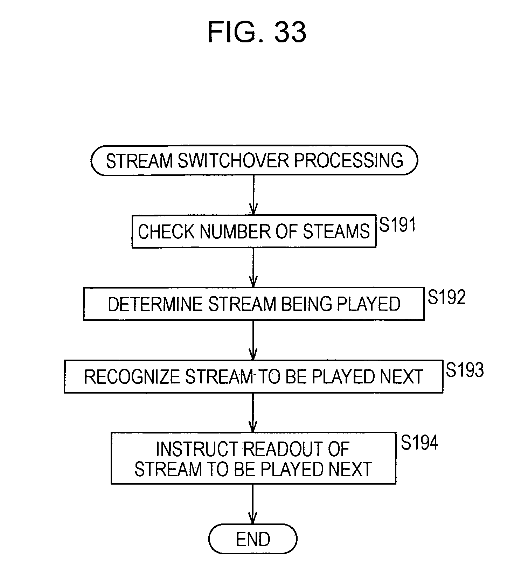

Now, stream switchover processing will be described with reference to the flowchart shown in Fig. 33.

A stream switchover request is given to the player control module 212 by the script control module 211 executing the script program in the event that a stream switchover instruction is described as a script program in a "SCRIPT/DAT" file (Fig. 4), or by the user operating a remote controller, for example.

That is to say, upon executing a script program in which is described a stream switchover instruction, the script control module 211 supplies a message requesting stream switchover to the player control module 212. Also, upon receiving a single instructing stream switchover from the remote controller, by the user operating the remote controller, the input interface 115 supplies a message requesting stream switchover to the player control module 212.

For example, if we say now that a subtitle stream switchover message, which is a message for requesting switchover of subtitle streams, has been supplied to the player control module 212, in step S191 the player control module 212 checks the number of subtitle streams recognized at the time of determining the elementary streams to be played, that was performed in step S125 in Fig. 30.

In the event that the number of subtitle streams is found to be one or less as a result of the check, the player control module 212 ignores the subtitle stream switchover message, and accordingly, the subsequent processing of steps S192 through S194 is not performed.

On the other hand, in the event that the number of subtitle streams is two or more, the flow proceeds in order through steps S192 through S194, and the subtitle stream to be played is switched over from the subtitle stream currently being played to another subtitle stream.

That is to say, in step S192, the player control module 212 determines the subtitle stream being currently played, on the clip information file. Specifically, if we say that the subtitle stream with the stream_id of 0xBD and private_stream_id of 0x80 that has been multiplexed on the clip stream file "00002.PS" is currently being played by the second PlayItem#1 making up the first PlayList#0 described in Fig. 25, in step S192 determination is made that the subtitle stream being currently played is, of the two subtitle streams multiplexed on the clip stream file "00002.PS", the third subtitle stream stream#2 on the clip information file "00002.CLP" in Fig. 26.

The flow then proceeds to step S193, where the player control module 212 recognizes (determines) the next subtitle stream of the subtitle stream determined in step S192 to be the subtitle stream to be played next on the clip information file. In Fig. 26, the subtitle stream next from the third subtitle stream stream#2 on the clip information file "00002.CLP" is the fourth subtitle stream stream#3, so in step S193, the fourth subtitle stream stream#3 is recognized as being the subtitle stream to be played next.

Note that in the event that determination is made that the subtitle stream being currently played is, of the two subtitle streams multiplexed on the clip stream file "00002.PS", the fourth subtitle stream stream#3 on the clip information file "00002.CLP" in Fig. 26, for example, the third subtitle stream stream#2 is recognized as the subtitle stream to be played next.

Subsequently, the flow proceeds to step S194, where the player control module 212 provides the stream_id and private_stream_id of the subtitle stream to be played next that has been recognized in step S193, to the subtitle read function unit 235 of the buffer control module 215 (Fig. 3), and gives instructions to use these stream_id and private_stream_id for the next and subsequent readouts of subtitle access units from the buffer 215A.

At the subtitle read function unit 235 of the buffer control module 215 (Fig. 3), in step S194 the stream_id and private_stream_id provided from the player control module 212 are newly set in the stream_id register 263 and private_stream_id register 264, respectively, and readout from the buffer 215A from there on is performed regarding subtitle access units determined by the stream_id and private_stream_id newly set in the stream_id register 263 and private_stream_id register 264.

Thus, the subtitle stream to be played is switched from the subtitle stream currently being played to another subtitle stream.

### [Processing at Buffer Control Module 215]

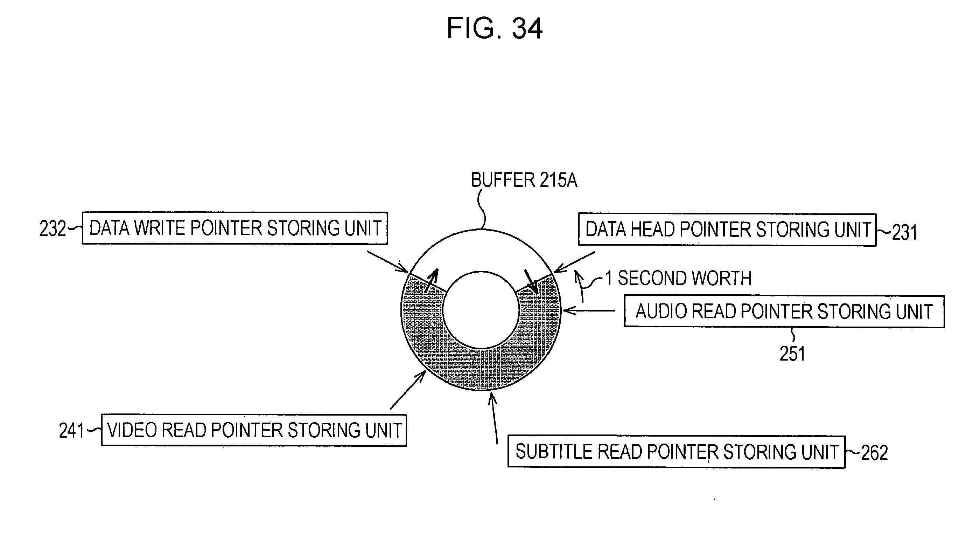

Next, the processing at the buffer control module 215 (Fig. 3), i.e., writing of data to the buffer 215A and readout of data from the buffer 215A, will be described with reference to Fig. 34 through Fig. 38.

The buffer control module 215 has five pointers for read/write of data to and from the buffer 215A, as described with Fig. 3.

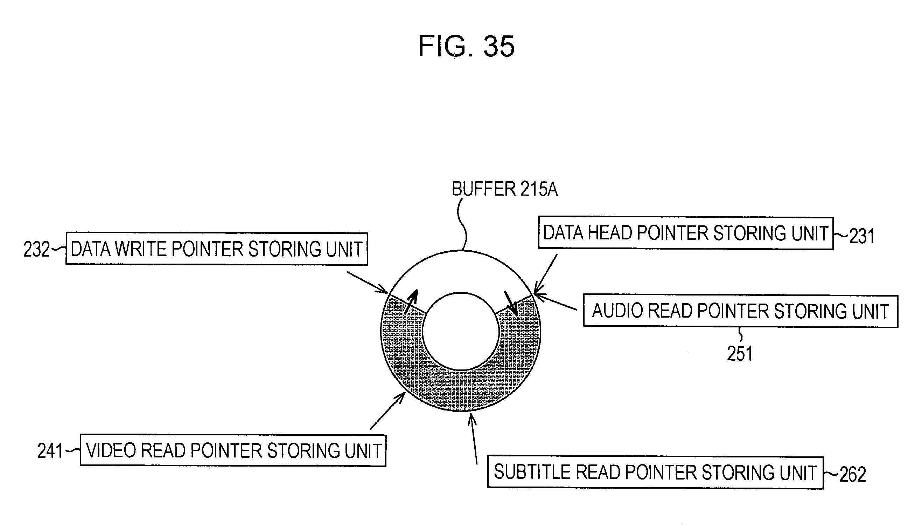

That is to say, as shown in Fig. 34 and Fig. 35, the buffer control module 215 has a data head pointer stored in the data head pointer storing unit 231, a data write pointer stored in the data write pointer storing unit 232, a video read pointer stored in the video read pointer storing unit 241, an audio read pointer stored in the audio read pointer storing unit 251, and a subtitle read pointer stored in the subtitle read pointer storing unit 262.

Note that omitted from Fig. 34 and Fig. 35 are the stream_id register 242 and au_information() register 243 of the video read function unit 233, the stream_id register 252 and the private_stream_id register 253 of the audio read function unit 234, and the subtitle read function flag storing unit 261, stream_id register 263, and private_stream_id register 264 of the subtitle read function unit 235, in Fig. 3.

The data head pointer stored in the data head pointer storing unit 231 represents the position of the oldest data remaining in the buffer 215A (the oldest data of the data which needs to be read out and has not yet been read out). The data write pointer stored in the data write pointer storing unit 232 indicates the write position of data to the buffer 215A, and this position is the position where the newest data in the buffer 215A is written.

The video read pointer stored in the video read pointer storing unit 241 represents the position of the video stream to be read out from the buffer 215A. Also, the audio read pointer stored in the audio read pointer storing unit 251 represents the position of the audio stream to be read out from the buffer 215A, and the subtitle read pointer stored in the subtitle read pointer storing unit 262 represents the position of the subtitle stream to be read out from the buffer 215A.

As described in Fig. 3, the data head pointer, data write pointer, video read pointer, audio read pointer, and subtitle read pointer, all move around the buffer 215A in the clockwise direction.

Also, with the present embodiment, the data head pointer is always updated so as to point to the same position as the one of the video read pointer, audio read pointer, and subtitle read pointer, which points to the oldest data, as shown in Fig. 35. Now, in Fig. 35, of the video read pointer, audio read pointer, and subtitle read pointer, the audio read pointer points to the position of the oldest data, so the data head pointer matches the audio read pointer.

With the buffer control module 215 which has such a data head pointer, data write pointer, video read pointer, audio read pointer, and subtitle read pointer, upon new data being read out from the disk 101 and written to the buffer 215A, the data write pointer is updated in the clockwise direction so as to point to the position immediately following new data that has been written in.

Further, upon a video stream, audio stream, or subtitle stream being read out from the buffer 215A, the video read pointer, audio read pointer, or subtitle read pointer is updated in the clockwise direction by an amount corresponding to the amount read out. Here, the amount corresponding to the amount read out is the total of the portion corresponding to the video, audio, or subtitle data actually read out, and the data portions of other streams which are included between the read data and have been skipped in reading.

Also, upon the video read pointer, audio read pointer, or subtitle read pointer being updated, the data head pointer is updated so as to point to the same position as the one of the video read pointer, audio read pointer, and subtitle read pointer, which points to the position of the oldest data.

Now, with regard to writing of data to the buffer 215A, the buffer control module 215 controls writing of data to the buffer 215A such that the data write pointer does not overtake the data head pointer.

That is to say, as long as the data write pointer does not overtake the data head pointer, with the buffer control module 215 the data read out from the disk 101 is written to the position of the buffer 215A indicated by the data write pointer, and the data write pointer is updated. On the other hand, in the event that an overtake of the data head pointer by the data write pointer is imminent, at the buffer control module 215 a request is made to the content data supply module 213 to stop (interrupt) readout of data from the disk 101, and further, wiring of data to the buffer 215A is stopped. Thus, overflowing of the buffer 215A can be prevented.

As described above, writing of data read out from the disk 101 to the buffer 215A is controlled only by the position relation of the two pointers of the data head pointer and the data write pointer.

On the other hand, with regard to readout of data from the buffer 215A, the buffer control module 215 controls readout of data from the buffer 215A such that the video read pointer, audio read pointer, or subtitle read pointer, and consequently the data head pointer, do not overtake the data write pointer.

That is to say, as long as there is not overtaking of the data write pointer with the video read pointer, audio read pointer, or subtitle read pointer, at the buffer control module 21.5 data is read out from the buffer 215A position pointed to by the video read pointer, audio read pointer, or subtitle read pointer, in response to request from the video decoder control module 216, audio decoder control module 217, or subtitle decoder control module 218, the video read pointer, audio read pointer, or subtitle read pointer is updated, and the data head pointer is also updated as necessary. On the other hand, in the event that an overtake of the data write pointer by the video read pointer, audio read pointer, or subtitle read pointer is imminent, at the buffer control module 215 requests from the video decoder control module 216, audio decoder control module 217, and subtitle decoder control module 218, are frozen for example, and kept waiting until sufficient data is prepared. Thus, underflow of the buffer 215A can be prevented.

Thus, data to be supplied to the video decoder control module 216, audio decoder control module 217, and subtitle decoder control module 218, is stored within the buffer 215A from the position which the data head point points to, in the clockwise direction over a range to where the data write pointer points to (the shaded portion in Fig. 34 and Fig. 35), and further, the video read pointer, audio read pointer, and subtitle read pointer, exist within that range.

Note that in the above-described case, the data head pointer is updated so as to point to the position of the oldest data from the positions which the video read pointer, audio read pointer, and subtitle read pointer point to, however, another arrangement may be made wherein updating of the data head pointer is performed so as to point to past data position by a predetermined amount of time (e.g., 1 second) from the position of the oldest data.

That is to say, it can be assumed that generally, of the video read pointer, audio read pointer, and subtitle read pointer, the video read pointer or audio read pointer will most often point to the position of the oldest data.

Accordingly, in a case of updating the data head pointer so as to point to data position in the past, for example, by 1 second from the position of the oldest data pointed to by the video read pointer or audio read pointer, data of one second in the past from the oldest data position pointed by the video read pointer or audio read pointer can be left in the buffer 215A, as shown in Fig. 34. Here, in Fig. 34, the audio read pointer is pointing to the position of the oldest data, and the data head pointer is pointing to a position of data one second in the past from that position.

As described above, the responsiveness of the disk device can be improved by updating the data head pointer so as to point to the position of data of one second in the past.

That is to say, in the event of updating the data head pointer so as to point to the position of the oldest data which the audio read pointer points to, as shown in Fig. 35, if a special playback is instructed in the reverse direction for example, there is the need to read out the data regarding which readout from the buffer 215A has ended, from the disk 101 again, so a certain amount of time is required from the special playback being instructed to the special playback being enabled.

Conversely, in the event of updating the data head pointer so as to point to the position of data of one second in the past from the position of the oldest data which the audio read pointer points to, as shown in Fig. 34, if a special playback is instructed in the reverse direction, and of the data necessary for starting the special playback is data one second in the past that is stored in the buffer 215A, there is no need to read out data again from the disk 101 as described above, and the special playback can be started immediately.

Note that even in a case of updating the data head pointer so as to point to the position of data of one second in the past from the position of the oldest data which the audio read pointer points to, there may be situations wherein the data necessary for starting the special playback is not stored in the buffer 215A. In such cases, the data necessary for starting the special playback is read out from the disk 101 again.

Next, details of reading out each of the video stream, audio stream, and subtitle stream, from the buffer 215A will be described.

As described in step S127 in Fig. 30, at the time of starting playing of a clip stream file, at the buffer control module 215 the data head pointer, data write pointer, video read pointer, audio read pointer, and subtitle read pointer, are all initialized so as to point to the same position on the buffer 215A.

The program stream (MPEG2-System Program Stream) stored in the clip stream file is then read out from the disk 101, and upon supply thereof to the buffer control module 215, at the buffer control module 215 the program stream is stored at the position which the data write pointer of the buffer 215A points to, and the data write pointer is updated in the clockwise direction.

Further, at the buffer control module 215 (Fig. 3), the video read function unit 233 performs syntax analysis of the program stream stored in the buffer 215A, extracts (separates) and reads out the video stream (video access units) from the program stream stored in the buffer 215A in response to a request from the video decoder control module 216, and supplies this to the video decoder control module 216.

In the same way, the audio read function unit 234 performs syntax analysis also of the program stream stored in the buffer 215A, extracts (separates) and reads out the audio stream (audio access units) from the program stream stored in the buffer 215A in response to a request from the audio decoder control module 217, and supplies this to the audio decoder control module 217. The subtitle read function unit 235 also performs syntax analysis of the program stream stored in the buffer 215A, extracts (separates) and reads out the subtitle stream (subtitle access units) from the program stream stored in the buffer 215A in response to a request from the subtitle decoder control module 218, and supplies this to the subtitle decoder control module 218.

### "Reading Out Video Stream"

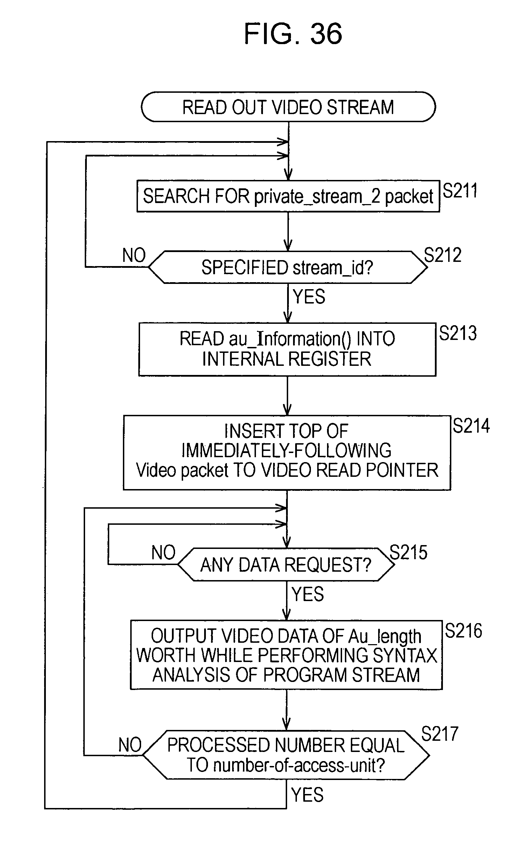

Next, the details of video stream readout processing from the buffer 215A by the video read function unit 233 (Fig. 3) will be described with reference to the flowchart in Fig. 36.

In step S211, the video read function unit 233 first searches for and finds the PES_packet() of the private_stream_2 in the program stream stored in the buffer 215A. That is to say, the stream_id of the PES_packet() of the private_stream_2 is 10111111B (=0xBF) as described with Fig. 20, so the video read function unit 233 searches for and finds the PES_packet() of which the stream_id is 10111111B.

Now, if we say that the elementary streams multiplexed on the program stream stored in the clip stream file "00001.PS" are the elementary streams to be played, as described above, for example, at the time of reading the program stream out from the disk 101 and storing this in the buffer 215A, in step S122 in Fig. 3 sector 305 is determined as the playing start position from the information of the decoding start permissible point described in the EP_map() (Fig. 27) of the clip stream file "00001.PS", and further, in step S128 of Fig. 30, sector 305 which is the playing start position is specified and a read request for the program stream stored in the clip stream file "00001.PS" is made to the operating system 201.

Also, with the video stream, the decoding start permissible point information described in the EP_map() represents the position of the PES_packet () of the private_stream_2 positioned immediately prior to the actual decoding start permissible point.

Accordingly, immediately following the program stream stored in the clip stream file "00001.PS" being read out from the disk 101 and stored in the buffer 215A, the PES_packet() of the private_stream_2 is stored in the position of the buffer 215A to which the data head pointer and video read pointer point.

Upon the PES_packet() of the private_stream_2 being found in step S211, the flow proceeds to step S212, where the video read function unit 233 extracts the video_stream_id described in the private_stream2_PES_payload() (Fig. 23) which is the PES_packet_data_byte of the PES_packet() of the private_stream_2, and determines whether or not the video_stream_id matches the stream_id of the video stream to be played that is stored in the stream_id register 242 (Fig. 3) in step S127 in Fig. 30.

In the event that determination is made in step S212 that the video_stream_id described in the private_stream2_PES_payload() does not match the stream_id stored in the stream_id register 242, i.e., in the event the PES_packet() of the private_stream_2 found in the immediately previous step S211 is not situated at the decoding start point of the video stream to be played, the flow returns to step S211, a search is made for another PES_packet() of private_stream_2 within the program stream stored in the buffer 215A, and subsequently the same processing is repeated.

On the other hand, in the event that determination is made in step S212 that the video_stream_id described in the private_stream2_PES_payload() matches the stream_id stored in the stream_id register 242, i.e., in the event the PES_packet() of the private_stream_2 found in the immediately previous step S211 is situated at the decoding start point of the video stream to be played, the flow proceeds to step S213, where the video read function unit 233 reads out from the buffer 215A the au_information() described in the private_stream2_PES_payload() of the PES_packet() of the private_stream_2, stores this in the au_information() register 243 (Fig. 3), and the flow proceeds to step S214.

In step S214, the video read function unit 233 updates the video read pointer stored in the video read pointer storing unit 231 by an amount equivalent to the size of the PES_packet() of the private_stream_2 (the PES_packet() of the private_stream_2 of which the video_stream_id (Fig. 23) matches the stream_id stored in the stream_id register 2242 (Fig. 3)), found in the immediately previous step S211.

That is to say, with a clip stream file, the video stream (PES_packet()) of which the stream_id matches the video_stream_id of the PES_packet () of the private_stream_2 is situated immediately thereafter, and accordingly, the video read pointer is updated in step S214 so as to point to the actual decoding start permissible point of the video stream.

Subsequently, the flow proceeds from step S214 to S215, where the video read function unit 233 determines whether or not there has been a request from the video decoder control module 216 for data, and in the event that determination is made that there has not been a request, the flow returns to step S215, and the same processing is repeated.

Also, in the event that determination is made in step S215 that there has been a request from the video decoder control module 216 for data, the flow proceeds to step S216, where the video read function unit 233 reads out data of the number of bytes described in the AU_length of the au_information() stored in the au_information() register 243, i.e., one video access unit, from the buffer 215A, while performing syntax analysis of the program stream from the position in the buffer 215A which the video read pointer points to, and supplies the video access unit to the video decoder control module 216, while updating the video read pointer by an amount equivalent to the size of the one video access unit read out from the buffer 215A.

That is to say, as described with Fig. 24, described in the au_information() is the number_of_access_unit representing the number of video access units (pictures) included from the PES_packet() of the private_stream_2 to which it belongs to the next private_stream_2 PES_packet().

Further described in the au_information() are pict_struct_copy, au_ref_flag, and AU_length, which are information relating to each of the video access units of a number according to the number_of_access_unit, as described with Fig. 24.

Each AU_length described in the au_information () of a number according to the number_of_access_unit represents the size of each of the video access units of the number of number_of_access_unit included from the PES_packet() of the private_stream_2 to which it belongs to the next private_stream_2 PES_packet(), as described with Fig. 24, so the video read function unit 233 can extract access units by using the AU_length, without having to perform syntax analysis of the video stream.

That is to say, in the event of extracting the access units of MPEG2-Video or MPEG4-AVC, conventionally there has been a need to know the syntax of the video stream and to perform syntax analysis of the video stream based thereupon, but the program stream stored in the clip stream file recorded in the disk 101 contains the PES_packet() of the private stream _2 in which is described the AU_length representing the size of the video access units, immediately before each of the one or more actual decoding start permissible points in the video stream in increments of video access units, so the video read function unit 233 can read out (the video stream in increments of) video access units from the buffer 215A and supply to the video decoder control module 216, based on the AU_length described in the PES_packet() of the private_stream_2, without performing syntax analysis of the video stream.

Note that at the time of supplying the video access units to the video decoder control module 216 in step S216, the video read function unit 233 also supplies to the video decoder control module 216 the pict_struct_copy, au_ref_flag, and AU_length, described in the au_information() as information relating to the video access units, and the time stamps (PTS, DTS) added in increments of video access units.

Following a single video access unit being read out from the buffer 215A and supplied to the video decoder control module 216 in step S216, the flow proceeds to step S217, where the video read function unit 233 determines whether or not access units of the number represented by the number_of_access_unit in the au_information() (Fig. 24) stored in the au_information() register 243 have been processed.

In the event that determination is made in step S217 that access units of the number represented by the number_of_access_unit have not yet been processed, i.e., in the event that access units of the number represented by the number_of_access_unit have not yet been read out from the buffer 215A and supplied to the video decoder control module 216, the flow returns to step S215, and the same process is subsequently repeated.

Also, in the event that determination is made in step S217 that access units of the number represented by the number_of_access_unit have been processed, i.e., in the event that access units of the number represented by the number_of_access_unit have been read out from the buffer 215A and supplied to the video decoder control module 216, the flow returns to step S211, the PES_packet() of the next private_stream_2 is searched, and the same process is subsequently repeated.

### "Reading Out Audio Stream"

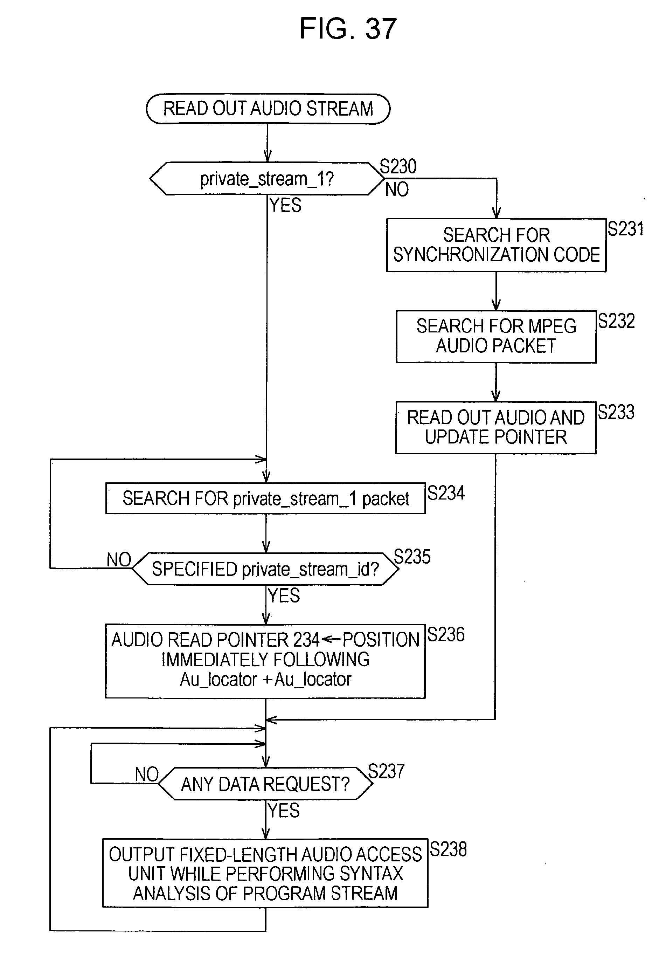

Next, the details of audio stream readout processing from the buffer 215A by the audio read function unit 234 (Fig. 3) will be described with reference to the flowchart in Fig. 37.

First, in step S230, the audio read function unit 234 determines whether or not the stream_id of the audio stream to be played, stored in the stream_id register 252 (Fig. 3) in step S127 in Fig. 30, represents the PES_packet() of the private_stream_1.

In the event that determination is made in step S230 that the stream_id stored in the stream_id register 252 does not represent the PES_packet() of the private_stream_1, that is to say, in the event that the stream_id stored in the stream_id register 252 is 110xxxxxB which is assigned to an audio stream encoded according to the MPEG standard as described with Fig. 20, the flow proceeds to step S231, and the audio read function unit 234 searches for a synchronization code representing the head of an audio frame as stipulated by MPEG Audio, from the program stream stored in the buffer 215A. The position of the synchronization code is the head of the audio frame, so the audio read function unit 234 updates the audio read pointer so as to indicate the position of the head of the audio frame, and the flow proceeds from step S231 to S232. In step S232, the audio read function unit 234 searches for and finds from the program stream stored in the buffer 215A a PES_packet() matching the stream_id stored in the stream_id register 252 at the position which the audio read pointer indicates, and the flow proceeds to step S233.

In step S233, the audio read function unit 234 updates the audio read pointer stored in the audio read pointer storing unit 251 so as to point to the head of the PES_packet_data_byte (Fig. 16 through Fig. 18) of the PES_packet() found in the immediately-preceding step S232, and the flow proceeds to step S237.

In step S237, the audio read function unit 234 determines whether or not there has been a request for data from the audio decoder control module 217, and in the event of none, the flow returns to step S237, and the same processing is repeated.

Also, in the event that determination is made in step S237 that there has been a request for data from the audio decoder control module 217, the flow proceeds to step S238, where the audio read function unit 234 reads a single audio access unit of a known fixed length out from the buffer 215A while performing syntax analysis of the program stream from the position in the buffer 215A to which the audio read pointer points, and supplies the audio access unit to the audio decoder control module 217 along with the time stamps (PTS, DTS) attached thereto.

The audio read function unit 234 then updates the audio read pointer by an amount equivalent to the size of the one audio access unit read out from the buffer 215A, the flow returns to step S237, and subsequently the same processing is repeated.

On the other hand, in the event that determination is made in step S230 that the stream_id stored in the stream_id register 252 represents the PES_packet() of the private_stream_1, that is to say, in the event that the stream_id stored in the stream_id register 252 is 10111101B (=0xBD), and represents the PES_packet() of the private_stream_1 as described in Fig. 20, the flow proceeds to step S234, where the audio read function unit 234 searches for and finds the PES_packet() of the private_stream_1 within the program stream stored in the buffer 215A. That is to say, the audio read function unit 234 searches for and finds the PES_packet () where the stream_id is 10111101B.

Upon the PES_packet () of the private_stream_1 having been found in step S234, the flow proceeds to step S235, and the audio read function unit 234 extracts the private_stream_id described in the private_stream1_PES_payload() (Fig. 21) which is the PES_packet_data_byte of the PES_packet() of the private_stream_1, and determines whether or not the private_stream_id matches the private_stream_id of the audio stream to be played that is stored in the private_stream_id register 253 (Fig. 3) in step S127 in Fig. 30.

In the event that determination is made in step S235 that the private_stream_id described in the private_streaml_PES_payload() does not match the private_stream_id stored in the private_stream_id register 253, i.e., in the event that the PES_packet () of the private_stream_1 found in the immediately-preceding step S234 is not the audio stream to be played, the flow returns to step S234, a search is made for another PES_packet () of private_stream_1 within the program stream stored in the buffer 215A, and subsequently the same processing is repeated.

On the other hand, in the event that determination is made in step S235 that the private_stream_id described in the private_stream1_PES_payload() matches the private_stream_id stored in the private_stream_id register 253, i.e., in the event that the PES_packet() of the private_stream_1 found in the immediately previous step S234 is the audio stream to be played, the flow proceeds to step S236, where the audio read function unit 234 reads out from the buffer 215A the AU_locator() described in the private_stream1_PES_payload() of the PES_packet() of the private_stream_1 (Fig. 21), and adds the position immediately following the AU_locator() to the value which the AU_locator() represents, thereby obtaining the head position of the audio access unit.

That is to say, the (absolute) head position of the audio access unit can be obtained by adding the position immediately following the AU_locator () to the value which the AU_locator() represents, since as described in Fig. 21, the AU_locator represents the head position of the audio access unit (or subtitle access unit) stored in the private_payload() of the private_stream1_PES_payload(), with the position immediately following the AU_locator() as a reference.

Further, in step S236, the audio read function unit 234 updates the audio read pointer stored in the audio read pointer storing unit 251 so as to point to the head position of the audio access unit obtained as described above, and the flow proceeds to step S237.

In step S237, the audio read function unit 234 determines whether or not there has been a request for data from the audio decoder control module 217, and in the event that determination is made that there has been none, the flow returns to step S237, and the same processing is repeated.

Also, in the event that determination is made in step S237 that there has been a request for data from the audio decoder control module 217, the flow proceeds to step S238, where the audio read function unit 234 reads a single audio access unit of a known fixed length out from the buffer 215A while performing syntax analysis of the program stream from the position in the buffer 215A to which the audio read pointer points, and supplies the audio access unit to the audio decoder control module 217 along with the time stamps attached thereto.

The audio read function unit 234 then updates the audio read pointer by an amount equivalent to the size of the one audio access unit read out from the buffer 215A, the flow returns to step S237, and subsequently the same processing is repeated.

### "Reading Out Subtitle Stream"

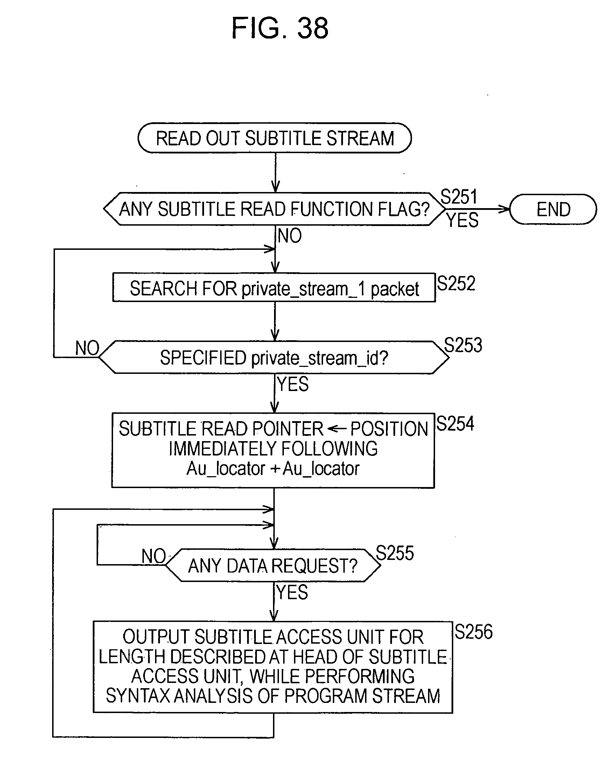

Next, the details of subtitle stream readout processing from the buffer 215A by the subtitle read function unit 235 (Fig. 3) will be described with reference to the flowchart in Fig. 38.

First, in step S251, the subtitle read function unit 235 determines the subtitle read function flag stored in the subtitle read function flag storing unit 261 in step S127 in Fig. 30. In the event that determination is made in step S251 that the subtitle read function flag is 0, that is to say, in the event that there is no subtitle stream included in the clip stream file upon which the elementary streams to be played are multiplexed, and 0 has been set in the subtitle read function flag storing unit 261 in step S127 in Fig. 30, for example, the subtitle read function unit 235 performs no processing in particular.

On the other hand, in the event that determination is made in step S251 that the subtitle read function flag is 1, that is to say, in the event that there is a subtitle stream included in the clip stream file upon which the elementary streams to be played are multiplexed, and 1 has been set in the subtitle read function flag storing unit 261 in step S127 in Fig. 30, for example, the flow proceeds to step S252, where the subtitle read function unit 235 searches for a PES_packet() matching the stream_id of the subtitle stream to be played, stored in the stream_id register 263 (Fig. 3), from the program stream stored in the buffer 215A.

Now, as described in step S127 in Fig. 30, the stream_id of the subtitle stream to be played is stored in the stream_id register 263 (Fig. 3), and the stream_id of a subtitle stream is, as described with Fig. 20, 101111101B (=0×BD), which represents the PES_packet() of the private_stream_1.

Accordingly, the PES_packet () of the private_stream_1 in the program stream stored in the buffer 215A is what is searched for in step S252.

Upon the PES_packet() of the private_stream_1 having been searched for in step S252 and the PES_packet() of the private_stream_1 having been found, the flow proceeds to step S253, and the subtitle read function unit 235 extracts the private_stream_id described in the private_stream1_PES_payload() (Fig. 21) which is the PES_packet_data_byte of the PES_packet() of the private stream 1, and determines whether or not the private_stream_id matches the private_stream_id of the subtitle stream to be played that is stored in the private_stream_id register 264 (Fig. 3) in step S127 in Fig. 30.

In the event that determination is made in step S253 that the private_stream_id described in the private_stream1_PES_payload() does not match the private_stream_id stored in the private_stream_id register 264, i.e., in the event that the PES_packet () of the private_stream_1 found in the immediately-preceding step S252 is not the subtitle stream to be played, the flow returns to step S252, a search is made for another private_stream_1 PES_packet() within the program stream stored in the buffer 215A, and subsequently the same processing is repeated.

On the other hand, in the event that determination is made in step S253 that the private_stream_id described in the private_stream1_PES_payload() matches the private_stream_id stored in the private_stream_id register 264, i.e., in the event that the PES_packet() of the private_stream_1 found in the immediately previous step S252 is the subtitle stream to be played, the flow proceeds to step S254, where the subtitle read function unit 235 reads out from the buffer 215A the AU_locator described in the private_stream1_PES_payload() of the PES_packet() of the private_stream_1 (Fig. 21), and adds the position immediately following the AU_locator to the value which the AU_locator represents, thereby obtaining the head position of the subtitle access unit.

That is to say, the (absolute) head position of the subtitle access unit can be obtained by adding the position immediately following the AU_locator to the value which the AU_locator represents, since as described in Fig. 21, the AU_locator represents the head position of the subtitle access unit (or audio access unit) stored in the private_payload() of the private_streaml_PES_payload(), with the position immediately following the AU_locator as a reference.

Further, in step S254, the subtitle read function unit 235 updates the subtitle read pointer stored in the subtitle read pointer storing unit 262 so as to point to the head position of the subtitle access unit obtained as described above, and the flow proceeds to step S255.

In step S255, the subtitle read function unit 235 determines whether or not there has been a request for data from the subtitle decoder control module 218, and in the event that determination is made that there has been none, the flow returns to step S255, and the same processing is repeated.

Also, in the event that determination is made in step S255 that there has been a request for data from the subtitle decoder control module 218, the flow proceeds to step S256, where the subtitle read function unit 235 reads a single subtitle access unit described of a size described at the head of the subtitle access unit from the buffer 215A, while performing syntax analysis of the program stream from the position in the buffer 215A to which the subtitle read pointer points, and supplies the subtitle access unit to the subtitle decoder control module 218 along with the time stamps attached thereto. That is to say, as described in Fig. 2, the size of the subtitle access unit is described at the head thereof, so the subtitle read function unit 235 reads out the data of that size from the position of the buffer 215A where the subtitle read pointer points to, and supplies the subtitle access unit which is the data that has been read out to the subtitle decoder control module 218, along with the time stamps added thereto.

The subtitle read function unit 235 then updates the subtitle read pointer by an amount equivalent to the size of the one subtitle access unit read out from the buffer 215A, the flow returns to step S255, and subsequently the same processing is repeated.

### "Resynchronizing Processing"

Next, synchronizing processing of the video data and the audio decoder by the decode control module 214 shown in Fig. 2 will be described.

As described with S130 in Fig. 30, the decode control module 214 instructs the decoding start to the video decoder control module 216, audio decoder control module 217, and subtitle decoder control module 218, with the decoding start shifted if necessary to ensure synchronization, but there may be cases wherein the output of video data and the output of audio data serving as output data which should be output synchronously with the video data, depending on the progress of decoding processing at the video decoder 116 and the audio decoder 117, for example.

Accordingly, resynchronization processing is performed at the decode control module 214 to correct the offset generated between the output of video data and the output of audio data which should be output synchronously with the video data, such that the video data and audio data are output synchronously.

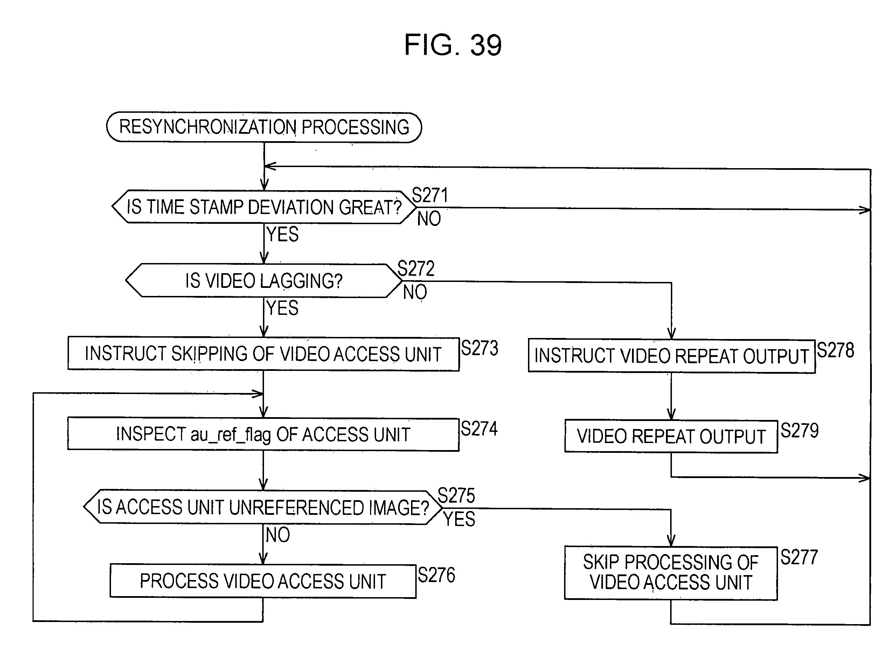

Resynchronization processing will be described with reference to the flowchart in Fig. 39.

With resynchronization processing, first, in step S271, the decode control module 214 determines whether or not the offset between the time stamp of the video access unit from the video decoder control module 216 and the time stamp of the audio access unit from the audio decoder control module 217 is great.

That is to say, as described with step S129 in Fig. 30, each time a video access unit is obtained from the buffer control module 215, the video decoder control module 216 supplies the decode control module 214 with the time stamp of the video access unit. In the same way, each time an audio access unit is obtained from the buffer control module 215, the audio decoder control module 217 supplies the decode control module 214 with the time stamp of the audio access unit.

In step S271, the decode control module 214 compares the time stamps supplied from the video decoder control module 216 and the audio decoder control module 217 at the same timing (within a certain time which can be deemed to be the same timing) one with another, and determines whether or not the offset between the time stamps is great.

In the event that determination is made in step S271 that the offset between the time stamp of the video access unit from the video decoder control module 216 and the time stamp of the audio access unit from the audio decoder control module 217 is not great, that is to say, in the event that the offset between the time stamp of the video access unit and the time stamp of the audio access unit is within a range wherein predetermined synchronization can be deemed to have been achieved, e.g., two video frames (approximately 66 milliseconds), the flow returns to step S271, and determination (monitoring) of offset between the time stamps is continued.

On the other hand, in the event that determination is made in step S271 that the offset between the time stamp of the video access unit from the video decoder control module 216 and the time stamp of the audio access unit from the audio decoder control module 217 is great, that is to say, in the event that the offset between the time stamp of the video access unit and the time stamp of the audio access unit exceeds a range wherein predetermined synchronization can be deemed to have been achieved, the flow proceeds to step S272, where the decode control module 214 compares the time stamp of the video access unit from the video decoder control module 216 and the time stamp of the audio access unit from audio decoder control module 217, thereby determining which of the output of the video data (decoding) and the output of the audio data is lagging.

In the event that determination is made in step S272 that the output of the video data is lagging behind the output of the audio data, the flow proceeds to step S273, where the decode control module 214 performs an instruction to the video decoder control module 216 to the effect to not perform decoding and output (display) of video access units for a single video access unit, in order to speed up processing of video access units, i.e., outputs an instruction to skip processing of a video access unit, and the flow proceeds to step S274.

In step S274, the video decoder control module 216 receives the skip instruction from the decode control module 214, and in response to the skip instruction inspects the au_ref_flag supplied along with the video access unit from the buffer control module 215.

That is to say, the au_ref_flag is included as information relating to the access unit, in the au_information() (Fig. 24) situated on the private_stream2_PES_payload() (Fig. 23) of the PES_packet() of the private_stream_2, and the buffer control module 215 supplies the au_ref_flag of the video access unit to the video decoder control module 216 along with the video access unit, as described with step S129 in Fig. 30 and step S216 in Fig. 36.

In step S274, the au_ref_flag of the access unit, thus supplied along with the access unit, is inspected.

The flow then proceeds from step S274 to S275, where the video decoder control module 216 determines whether or not the video access unit is a non-reference image which is not referenced at the time of decoding of another picture, based on the results of inspection of the au_ref_flag of the video access unit supplied from the buffer control module 215.

Now, as described with Fig. 24, the au_ref_flag of the video access unit represents whether or not the access unit is a reference image, and in the event that this is a reference image, is set to 1, and in the event that this is not a reference image, i.e., is a non-reference image, is set to 0.

In the event that determination is made in step S275 that the video access unit supplied from the buffer control unit 215 is not (a video access unit of) a non-reference image, i.e., in the event that the video access unit supplied from the buffer control module unit 215 is a reference image, the flow proceeds to step S276, the video decoder control module 216 processes the video access unit with the video decoder 116 in a normal manner, awaits for the next video access unit to be supplied from the buffer control module 215, and the flow returns to step S274.

Also, in the event that determination is made in step S275 that the video access unit supplied from the buffer control module unit 215 is a non-reference image, the flow proceeds to step S277, where the video decoder control module 216 skips processing of that video access unit with the video decoder 116, awaits for the next video access unit to be supplied from the buffer control module 215, and the flow returns to step S271.

Thus, by processing of the video access unit having been skipped, the processing of video access units is sped up by approximately one video access unit worth (processing time is reduced). Consequently, the output of video data, which had been lagging behind the output of the audio data, is quickened.

On the other hand, in the event that determination is made in step S272 that the output of video data is not lagging behind the output of audio data, i.e., in the event that the output of audio data is lagging behind the output of video data, the flow proceeds to step S278, where the decode control module 214 outputs an instruction of a repeat output to the video decoder control module 216 to repeat output of the video data corresponding to the video access unit currently being decoded, in order to make the processing of the video access units wait up, and the flow proceeds to step S279.

In step S279, the video decoder control module 216 receives the repeat output instruction from the decode control module 214, repeats output of the video data corresponding to the video access unit currently being decoded at the video decoder control module 216 to the graphics processing module 219 in response to the repeat output instruction, awaits for the next video access unit to be supplied from the buffer control module 215, and the flow returns to step S271.

Thus, the decode control module 214 determines whether or not the output of the video data is lagging behind the output of the audio data, and in the event that the output of the video data is lagging behind the output of the audio data, instructs the video decoder control module 216 to skip processing of one access unit. Based on the au_ref_flag of the access unit regarding which skipping has been instructed, the video decoder control module 216 determines whether the access unit is a reference image or is a non-reference image, and in the event of a non-reference image, causes the video decoder 116 to skip processing of the access unit regarding which skipping has been instructed. Accordingly, synchronizing of output of the video data and output of the audio data can be easily achieved.

That is to say, in the event that the access unit regarding which processing is to be skipped is a reference image, the video data corresponding to that access unit needs to be decoded for reference at the time of decoding another access unit to be decoded later. Accordingly, in the event that processing of an access unit of a reference image is skipped in synchronization control for synchronizing the output of the video data and the output of the audio data, other access units which make reference to the reference image cannot be decoded, and consequently, the synchronization control is manifested as noise when displaying the video data.

Accordingly, it is preferably that the processing of access units which are not reference images, i.e., access units of non-reference images, is skipped.

On the other hand, in order to search for non-reference image access units with conventional elementary streams, there is the need to perform syntax analysis of the elementary stream, but the syntax of elementary streams obtained by encoding according to MPEG4-AVC or the like is extremely complicated, so syntax analysis is very costly.

Conversely, with the program stream stored in the clip stream file recorded in the disk 101, separate from the PES_packet() (Fig. 16 through Fig. 18) situated in the PES_packet_data_byte, the PES_packet() of the private_stream_2 in which is situated the private_stream2_PES_payload() (Fig. 23), which is an expansion of the PES_packet_data_byte, is multiplexed, and an au_reference_flag representing whether the video access unit is a reference image or a non-reference image is described for each video access unit in the au_information() (Fig. 24) of that private_stream2_PES_payload(). The au-ref-flag is supplied from the buffer control module 215 to the video decoder control module 216, along with the corresponding video access unit. Accordingly, the video decoder control module 216 can recognize whether a video access unit is a reference image or a non-reference image, with hardly any cost, by inspecting the au_ref_flag of the video access unit that is supplied along with the video access unit.

### [Mark Processing]

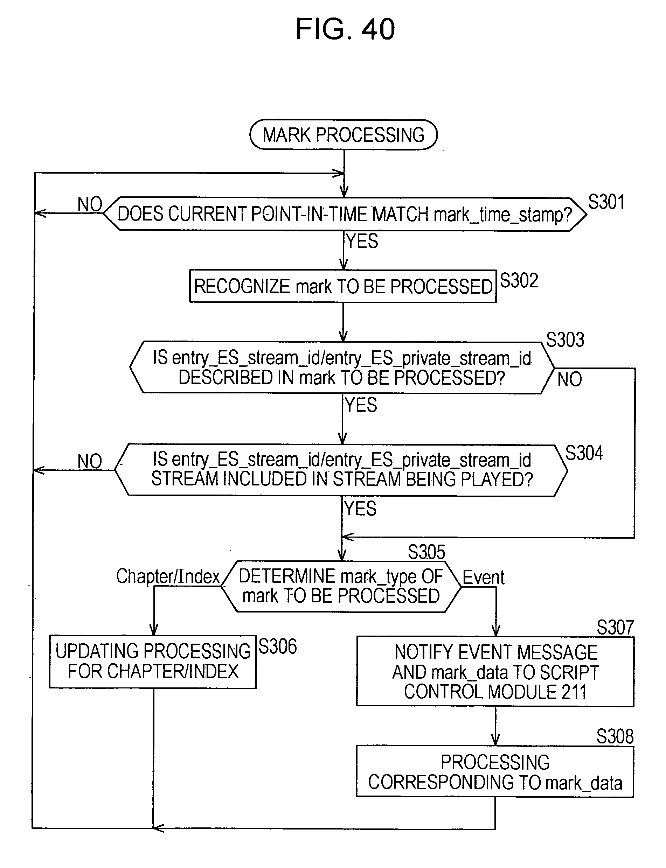

Next, the mark processing performed based on the Mark() described in the PlayListMark () (Fig. 7) will be described with reference to the flowchart in Fig. 40.

The decode control module 214 constantly confirms the current point-in-time kept by the built-in clock unit 214A, and in step S301 determines whether or not the current point-in-time matches the mark_time_stamp of any Mark() described in the PlayListMark() (Fig. 7).

That is to say, as described in step S124 of Fig. 30, the player control module 212 recognizes at the time of playing the first PlayItem#0 of the first PlayList#0 shown in Fig. 25 that, of the seven Mark() included in the PlayListMark() shown to the upper portion of Fig. 28, the first through fourth Mark() belong to the first PlayItem#0 of the PlayList#0, and hands the mark_time_stamp {180,090}, {5,580,090}, {10,980,090}, {16,380,090}, of the four Mark() to the decode control module 214, along with indication that the attribute of the points-in-time which the mark_time_stamp represent is "mark processing".

In step S301, the decode control module 214 makes determination regarding whether or not the current point-in-time matches one of the points-in-time (mark_time_stamp) of the attribute "mark processing" supplied from the player control module 212 as described above.

In step S301, in the event that determination is made that the current point-in-time does not match any of the points-in-time of the attribute "mark processing", the flow returns to step S301, and the same processing is repeated.

Also, in the event that in step S301, determination is made that the current point-in-time does match any one of the points-in-time of the attribute "mark processing", the decode control module 214 supplies a message to the effect that the current point-in-time is a point-in-time of the "mark processing" attribute, and the point-in-time of the "mark processing" attribute with which the current point-in-time has matched, to the player control module 212, and the flow proceeds to step S302.

In step S302, the player control module 212 receives from the decode control module 214 the message to the effect that the current point-in-time is a point-in-time of the "mark processing" attribute, and the point-in-time (mark_time_stamp) of the "mark processing" attribute with which the current point-in-time has matched, and recognizes the Mark() of which the mark_time_stamp has matched the current point-in-time as being a Mark() which is the object of mark processing (hereafter referred to as a mark to be processed).

That is to say, the player control module 212 recognizes the PlayItem() of the PlayList() currently being played, and recognizes the mark to be processed by making reference to the PlayListMark() (Fig. 7) of the "PLAYLIST.DAT" file (Fig. 5), from the PlayList() and PlayItem(), and the point-in-time (mark_time_stamp) of the "mark processing" attribute with which the current point-in-time has matched.

Specifically, if we say that the first PlayItem#0 of the first PlayList#0 shown in Fig. 25 is currently being played for example, this lets the player control module 212 recognize that the mark point-in-time is a mark_time_stamp of one of the four Mark() from the first through the fourth of the seven Mark() included in the PlayListMark () shown to the upper side of Fig. 28.

Now, if we say that the mark point-in-time supplied from the decode control module 214 to the player control moduel 212 is 16,380,090 for example, the player control module 212 recognizes the fourth Mark(), of the first through the fourth Mark() included in the PlayListMark(), shown to the upper portion of Fig. 28, of which the mark_time_stamp matches the mark point-in-time 16,380,090, as the mark to be processed.

Upon the player control module 212 recognizing the mark to be processed as described above, the flow proceeds from step S302 to S303, and determines whether or not the entry_ES_stream_id and entry_ES_private_stream_id (Fig. 7), for determining the elementary stream, are described in the mark to be processed.

In the event that determination is made in step S303 that the entry_ES_stream_id and entry_ES_private_stream_id (Fig. 7) for determining the elementary stream are not described in the mark to be processed, that is to say, in the event that the entry_ES_stream_id and entry_ES_private_stream_id are both 0x00, step S304 is skipped and the flow proceeds to step S305, and subsequently processing corresponding to the mark to be processed is performed.

Also, in the event that determination is made in step S303 that the entry_ES_stream_id and entry_ES_private_stream_id (Fig. 7) for determining the elementary stream are described in the mark to be processed, the flow proceeds to step S304, where the player control module 212 determines whether or not the elementary streams being played include an elementary stream determined by the entry_ES_stream_id, and if necessary, by the entry_ES_private_stream_id.

In the event that determination is made in step S304 that the elementary streams being played do not include an elementary stream determined by the entry_ES_stream_id and entry_ES_private_stream_id, the flow returns to step S301. That is to say, in the event that an elementary stream determined by the entry_ES_stream_id and entry_ES_private_stream_id of the mark to be processed is not being played, the mark to be processed is ignored.

On the other hand, in the event that determination is made in step S304 that the elementary streams being played include an elementary stream determined by the entry_ES_stream_id and entry_ES_private_stream_id, i.e., in the event that an elementary stream determined by the entry_ES_stream_id and entry_ES_private_stream_id of the mark to be processed is being played, the mark to be processed is deemed to be valid, the flow proceeds to step S305, and subsequently processing corresponding to the mark to be processed is performed.

That is to say, in step S305, the player control module 212 determines the mark to be processed by marking reference to the mark_type (Fig. 7) of the mark to be processed.

In step S305, in the event that the mark to be processed is determined to be a chapter mark or an index mark, that is to say in the event that the mark_type of the mark to be processed is 'Chapter' or 'Index', the flow proceeds to step S306, where the player control module 212 gives a command to the graphics processing module 219 to update the display of the chapter or index No. to the chapter or index No. which the chapter mark or an index mark which is the mark to be processed, and the flow returns to step S301.

Also, in the event that the mark to be processed has been determined to be an event mark in step S305, that is to say, in the event that the mark_type of the mark to be processed is 'Event', the flow proceeds to step S307, the player control module 212 notifies (supplies) an event message representing an event occurring, and the mark_data of the mark to be processed, to the script control module 211, and the flow proceeds to step S308.

In step S308, the script control module 211 receives the event message and the mark_data from the player control module 212, and with the event message as an interruption message performs the series of processing described in the "SCRIPT.DAT" file beforehand, with mark_data as an argument, and the flow returns to step S301.

That is to say, the script control module 211 performs processing corresponding to mark_data.

Specifically, for example, with the PlayListMark() in the PlayList#1 shown to the lower portion in Fig. 28, both the second Mark() (Mark#1) and the third Mark() (Mark#2) have 'Event' as the mark_type, but the mark_data differs between I (Mark#1) and 2 (Mark#2).

In either case of receiving an event message corresponding to the second Mark (), and receiving an event message corresponding to the third Mark(), the script control module 211 performs processing corresponding to the event message using the same event handler (interruption processing routine), but within the event handler, processing differing for each mark_data is performed regarding the event messages, by inspecting the mark_data supplied with the event message.

Specifically, for example, in the event that the mark_data is 1, the script control module 211 controls the graphics processing module 219 to display an icon of a first type. Also, for example, in the event that the mark_data is 2, the script control module 211 controls the graphics processing module 219 to display an icon of a second type.

Note that mark_data is not restricted to 1 or 2, and also, that the processing performed corresponding to mark_data is not restricted to simple icon display such as described above.

That is to say, for example, in the event that the mark_data has a value in the range of 3 through 18, the script control module 211 controls the graphics processing module 219 to display a first type of icon with a brightness corresponding to a value obtained by subtracting 2 from the mark_data (a numeric value of 1 through 16). Also, for example, in the event that the mark_data has a value in the range of 19 through 34, the script control module 211 controls the graphics processing module 219 to display a second type of icon with a brightness corresponding to a value obtained by subtracting 18 from the mark_data (a numeric value of 1 through 16).

Another arrangement can be made wherein, for example, a controller which the user operations is connected to the input interface 115 (Fig. 1) and the controller has built in a vibrating motor, wherein a decentered weight is attached to the shaft of a DC (Direct Current) motor, which generates vibrations upon operating the DC motor, and in the event that the mark_data has a value in the range of 35 through 42, the vibrating motor is operated by a duration corresponding to a value obtained by subtracting 34 from the mark_data (a numeric value of 1 through 8).

The mark_data is a numerical value, and the usage and algorithms can be described by script programs executed by the script control module 211. Accordingly, the mark_data may be used under predetermined rules, or may be used under rules set individually by the manufacturer of the disk 101, a contents provider which provides data to be recorded in the disk 101, or the like.

As described above, with mark processing upon the current point-in-time matching the point-in-time of the attribute "mark processing", a mark to be processed is recognized from the mark point-in-time which is the point-in-time of the attribute "mark processing". Further, in the event that no entry_ES_stream_id or entry_ES_private_stream_id determining an elementary stream is described in the mark to be processed, processing corresponding to the mark_type of the mark to be processed is performed. Also, even in the event that the entry_ES_stream_id or entry_ES_private_stream_id determining the elementary stream is described in the mark to be processed, processing corresponding to the mark_type of the mark to be processed is performed if the elementary stream determined by the entry_ES_stream_id and entry_ES_private_stream_id is currently being played.

Accordingly, if we say that playing of the second PlayList#1 shown in Fig. 25, for example, is being performed, the following mark processing is performed.

That is to say, in the PlayListMark () of the second PlayList#1 are described the first Mark () (Mark#0), second Mark() (Mark#1), and third Mark() (Mark#2), of which the mark_time_stamp are 90,000, 27,090,000, and 27,540,000, respectively, as shown to the lower portion of Fig. 28.

Further, in the PlayListMark() shown to the lower portion of Fig. 28, 0xE0 and 0xE1 are described in the respective entry_ES_stream_id of the second Mark() and third Mark(), so the second Mark() and third Mark() are correlated with elementary streams of which the respective stream_id are determined by 0xE0 and 0xE1.

Now, as described with Fig. 25, only one PlayItem() (PlayItem#0) is described in the second PlayList#1, and according to that PlayItem#0, the clip stream file "00003.PS" is played. Multiplexed on the clip stream file "00003.PS" are, as described with the clip information file "00003.CLP" in Fig. 26 corresponding to the clip stream file "00003.PS", the three elementary streams of the video stream#0 determined by the stream_id which is 0xE0, the video stream#1 determined by the stream_id which is 0xE1, and the audio stream#2 determined by the stream_id 0xBD and the private_stream_id which is 0x00.

Accordingly, the video stream#0 of which the stream_id which is 0xE0, which is multiplexed on the clip stream file "00003.PS", is correlated with the second Mark() of the PlayListMark() to the lower portion of Fig. 28, and the video stream#1 of which the stream_id which is 0xE1, which is multiplexed on the clip stream file "00003.PS", is correlated with the third Mark().

In the event that playing of the PlayItem#0 of the second PlayList#1 in Fig. 25 is to be started, as described with step S124 in Fig. 30 the player control module 212 recognizes that the three Mark() included in the PlayListMark() shown at the lower portion of Fig. 28 belong to the PlayItem#0 of the PlayList#1, and hands {90,000}, {27,090,000}, and {27,540,000}, which are the mark_time_stamp of the three Mark(), to the decode control module 214, along with indication to the effect that the attribute of the point-in-time which the mark_time_stamp represent is "mark processing".

In mark processing, the decode control module 214 constantly confirms whether the current point-in-time, kept by the clock unit 214A, during playing of the PlayItem#0 of the PlayList#1 matches one of the points-in-time {90,000}, {27,090,000}, and {27,540,000} (step S301), and in the event that the current point-in-time matches a point-in-time with the attribute "mark processing", the mark point-in-time which is the point-in-time of the attribute "mark processing" matching the current point-in-time, along with a message to the effect that the current time is the point-in-time of the "mark processing" attribute, are supplied to the player control module 212.

That is to say, if we say that the current point-in-time has matched 27,090,000, of the "mark processing" attribute points-in-time {90,000}, {27,090,000}, and {27,540,000}, the decode control module 214 supplies to the player control module 212 the mark point-in-time 27,090,000 which is the point-in-time of the attribute "mark processing" matching the current point-in-time, along with a message to the effect that the current time is the point-in-time of the "mark processing" attribute.

The player control module 212 recognizes that the PlayItem#0 of the PlayList#1 is currently being played, and by comparing each of the 90,000, 27,090,000, and 27,540,000, which are the mark_time_stamp of the three Mark() belonging to the PlayItem#0, out of the Mark() described in the PlayListMark() shown at the lower portion of Fig. 28 in the PlayList#1, with 27,090,000 which is the mark point-in-time from the decode control module 214, recognizes that the Mark() of which the mark_time_stamp matches the mark point-in-time 27,090,000, i.e., the second Mark() (Mark#1) described in the PlayListMark () shown at the lower portion of Fig. 28, is a mark to be processed (step S302).

In the second Mark() described in the PlayListMark() shown at the lower portion of Fig. 28, 0xE0 is specified as the entry_ES_stream_id. From the above description, this entry_ES_stream_id of 0xE0 represents the video stream#0 of which the stream_id which is 0xE0 which is multiplexed on the clip stream file "00003.PS" (Fig. 26), and the player control module 212 determines whether or not the video stream stream#0 is included in the elementary streams being played. (steps S303, S304).

In the event that the video stream stream#0 is not included in the elementary streams being played, the mark to be processed is ignored (step S304).

On the other hand, in the event that the video stream stream#0 is included in the elementary streams being played, the mark to be processed is deemed to be valid, and processing corresponding to that mark to be processed is performed (steps S305 through 308).

That is to say, in this case, the second Mark() described in the PlayListMark() shown at the lower portion of Fig. 28 has a mark_type of 'Event', and according is an event mark, so the player control module 212 supplies an event message representing an event occurring, and the mark_data of the mark to be processed, to the script control module 211 (steps S305, S307). With the event message from the player control module 212 as an interruption message, the script control module 211 performs the series of processing described in the "SCRIPT.DAT" file beforehand, with mark_data supplied along with the event message as an argument (step S308).

As described above, according to mark processing, determination is made regarding whether or not the current point-in-time, which is the playing point-in-time of a clip stream file being played following a PlayList () (Fig. 5) including a PlayList Mark() (Fig. 7) having zero one more Mark() including a mark_time_stamp representing one playing point-in-time on the time axis of the PlayList(), mark_type representing the type of the Mark(), and mark_data serving as an argument of an event mark, matches the mark_time_stamp, and in the event that the current point-in-time matches the mark_time_stamp, a Mark() having the mark_time_stamp which equals the mark point-in-time which is the current point-in-time matched is recognized as a mark to be processed. Further, in the event that the mark_type which the mark to be processed has represents a type for generating an event, i.e., in the event that the mark to be processed is an event mark, the mark_data which the mark to be processed has and an event message are notified, and processing corresponding to the mark_data is executed. Accordingly, processing corresponding to the mark_data can be executed corresponding to the playing point-in-time of the clip stream file.

### [Control Processing of Output Attributes]

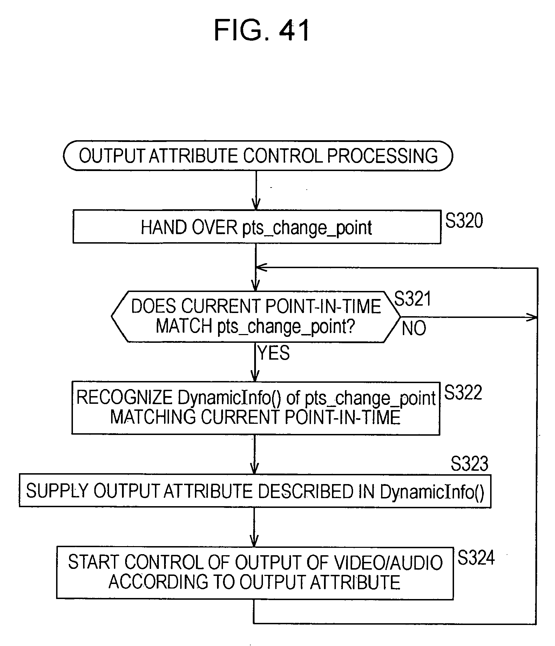

Next, the details of output attribute control processing performed in step S126 in Fig. 30 and so forth will be described with reference to the flowchart shown in Fig. 41.

As described in step S126 in Fig. 30, the player control module 212 first inspects the number_of_OynamicInfo (Fig. 10) representing the DynamicInfo () (Fig. 13) where output attributes are described, regarding one or more elementary streams to be played, i.e., one or more elementary streams regarding which playing has been determined in step S125 of Fig. 30.

In the event that the number_of_DynamicInfo is 0 for all of the one or more elementary streams to be played, the player control module 212 performs no processing in particular.

On the other hand, in the event that the number_of_DynamicInfo is not 0 for the elementary streams to be played, the player control module 212 performs output attribute control processing, following the flowchart in Fig. 41.

Accordingly, in the event that the three clip information files "00001.CLP", "00002.CLP", and "00003.CLP", recorded in the disk 101, are as shown in Fig. 26 for example, at the time of (the first PlayItem#0 of the first PlayList#1 for playing) the clip stream file "00001.PS" corresponding to the clip information file "00001.CLP" being played, the number_of_DynamicInfo is 0 for all of the four elementary streams stream#0 through stream #3 multiplexed on the clip stream file "00001.PS", so output attribute control processing is not performed for the clip information file "00001.CLP" (Fig. 26).

In the same way, at the time of (the second PlayItem#1 of the first PlayList#1 for playing) the clip stream file "00002.PS" corresponding to the clip information file "00002.CLP" being played, the number_of_DynamicInfo is 0 for all of the four elementary streams stream#0 through stream #3 multiplexed on the clip stream file "00002.PS", so output attribute control processing is not performed for the clip information file "00002.CLP" (Fig. 26).

On the other hand, at the time of (the PlayItem#0 of the second PlayList#1 for playing) the clip stream file "00003.PS" corresponding to the clip information file "00003.CLP" (Fig. 26) being played, of the three elementary streams stream#0 through stream #2 multiplexed on the clip stream file "00003.PS", the video stream stream#0 which is the first elementary stream, and audio stream stream#2 which is the third elementary stream, have the number_of_DyanmicInfo set to 2 and 3, respectively, which are not 0, so output attribute control processing is performed.

That is to say, with output attribute control processing, first, in step S320, the player control module 212 hands a pts_change_point described in the clip information file Clip() (Fig. 10) corresponding to the clip stream file to be played, to the decode control module 214, along with an indication that this is a point-in-time of the attribute "DynamicInfo() processing", and the decode control module 214 receives the pts_change_point which is a point-in-time of the attribute "DynamicInfo() processing" from the player control module 212, and the flow proceeds to step S321.

In step S321, the decode control module 214 determines whether or not the current point-in-time kept by the clock unit 214A matches (one of) the pts_change_point of the attribute "DynamicInfo() processing", and in the event that determination is made that there is not match, the flow returns to step S321.

Also, in step S321, in the event that determination is made that the current point-in-time matches (one of) the pts_change_point of the attribute "DynamicInfo() processing", the decode control module 214 supplies the player control module 212 with a message to the effect that the current point-in-time is a point-in-time of the attribute "DynamicInfo() processing", and the point-in-time of the attribute "DynamicInfo() processing" which has matched the current point-in-time (hereafter referred to as DynamicInfo point-in-time, as appropriate), and the flow proceeds to step S322.

In step S332, the player control module 212 receives the message to the effect that the current point-in-time is a point-in-time of the attribute "DynamicInfo() processing", and the DynamicInfo point-in-time, recognizes that the DynamicInfo() which is a set with the pts_change_point (Fig. 10) matching the DynamicInfo point-in-time is a DynamicInfo() to be processed which is a DynamicInfo() that is to be processed, and the flow proceeds to step S323.

In step S323, the player control module 212 supplies the output attributes described in the DynamicInfo() (Fig. 13) which is the DynamicInfo() to be processed, to the graphics processing module 219 or the audio output module 221, and the flow proceeds to step S324.

In step S324, the graphics processing module 219 or the audio output module 221 start control of output of the video data or audio data according to the output attributes supplied from the player control module 212 in the immediately-preceding step S323, and the flow returns to step S321.

Accordingly, video data is output according to, for example, an aspect ratio described as an output attribute (display format), or audio data is output according to, for example, stereo or dual (bilingual) described as output attribute (output format).

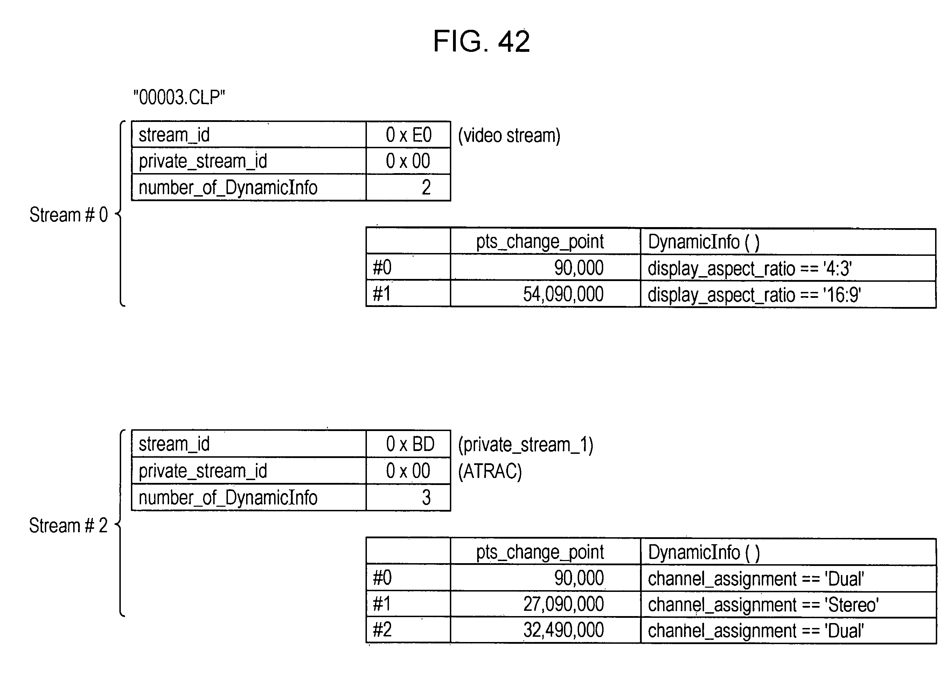

Next, details of the output attribute control processing will be further described with reference to Fig. 42.

That is to say, Fig. 42 illustrates a set of pts_change_point and DynamicInfo() (Fig. 10) described in the clip information file "00003.CLP" shown in Fig. 26.

Now, as described above, of the three elementary streams stream#0 through stream #2 multiplexed on the clip stream file "00003.PS", the video stream stream#0 which is the first elementary stream, and audio stream stream#2 which is the third elementary stream, have the number_of_DyanmicInfo in the clip information file "00003.CLP" set to 2 and 3, respectively. Accordingly, in the clip information file "00003.CLP", two sets of pts_change_point and DynamicInfo () are described in the first video stream stream#0 in the clip stream file "00003.PS", and three sets of pts_change_point and DynamicInfo () are described in the third audio stream stream#2 in the clip stream file "00003.PS".

The upper portion of Fig. 42 illustrates the two sets of pts_change_point and DynamicInfo () of the first video stream stream#0 in the clip stream file "00003.PS", and the lower portion of Fig. 42 illustrates the three sets of pts_change_point and DynamicInfo() of the third audio stream stream#2 in the clip stream file "00003.PS".

Note that at the upper portion of Fig. 42 are illustrated, in addition to the two sets of pts_change_point and DynamicInfo() described regarding the first video stream stream#0, the stream_id (=0xE0), private_stream_id(=0x00), and number_of_DynamicInfo (=2), described in the clip information file "00003.CLP" regarding that video stream stream#0, as well. In the same way, at the lower portion of Fig. 42 are illustrated, in addition to the three sets of pts_change_point and DynamicInfo() described regarding the third audio stream stream#2, the stream_id (=0xBD), private_stream_id(=0x00), and number_of_DynamicInfo (=3), described in the clip information file "00003.CLP" regarding that audio stream stream#2, as well.

At the upper portion of Fig. 42, of the two sets of pts_change_point and DynamicInfo() described regarding the video stream stream#0, with the first set the pts_change_point is 90,000, and the display_aspect_ratio (Fig. 13) of the DynamicInfo() is '4:3'. Further, with the second set the pts_change_point is 54,090,000, and the display_aspect_ratio (Fig. 13) of the DynamicInfo() is '16:9'.

On the other hand, at the lower portion of Fig. 42, of the three sets of pts_change_point and DynamicInfo() described regarding the audio stream stream#2, with the first set the pts_change_point is 90,000, and the channel_assignment (Fig. 13) of the DynamicInfo () is 'Dual'. Further, with the second set the pts_change_point is 27,090,000, and the channel_assignment of the DynamicInfo () is 'Stereo'. Also, with the third set the pts_change_point is 32,490,000, and the channel_assignment of the DynamicInfo () is 'Dual'.

Let us say now that for example, in step S125 in Fig. 30, the first video stream stream#0 determined by the stream_id of 0xE0, and the third audio stream stream#2 determined by the stream_id of 0xBD and the private_stream_id of 0x00, of the clip stream file "00003.PS", have been determined as streams to be played.

In this case, the player control module 212 inspects the two sets of pts_change_point and DynamicInfo () described regarding the video stream stream#0 shown at the upper portion of Fig. 42 determined by the stream_id of 0xE0, and the three sets of pts_change_point and DynamicInfo() described regarding the audio stream stream#2 shown at the lower portion of Fig. 42 determined by the stream_id of 0xBD and private_stream_id of 0x00, and recognizes the initial values.

That is to say, of the two sets of pts_change_point and DynamicInfo() described regarding the video stream stream#0 shown at the upper portion of Fig. 42 determined by the stream_id of 0xE0, with regard to the first set, the pts_change_point is 90,0-00. This point-in-time of 90,000 matches the point-in-time of 90,000 described on presentation_start_time representing the head point-in-time of the clip stream file "00003.PS", in the clip information file "00003.CLP in Fig. 26 corresponding to the clip stream file "00003.PS" upon which the video stream#0 is multiplexed.

In the same way, of the three sets of pts_change_point and DynamicInfo() described regarding the audio stream stream#2 shown at the lower portion of Fig. 42 determined by the stream_id of 0xBD and private_stream_id of 0x00, with regard to the first set, the pts_change_point is 90,000. This point-in-time of 90,000 matches the point-in-time of 90,000 described on presentation_start_time representing the head point-in-time of the clip stream file "00003.PS", in the clip information file "00003.CLP in Fig. 26 corresponding to the clip stream file "00003.PS" upon which the audio stream#2 is multiplexed.

The player control module 212 recognizes the pts_change_point matching the point-in-time 90,000 described in the presentation_start_time representing the head point-in-time of the clip stream file "00003.PS", as the initial value. Accordingly, the pts_change_point of the first set of the two sets of pts_change_point and DynamicInfo() at the upper portion of Fig. 42, and the pts_change_point of the first set of the three sets of pts_change_point and DynamicInfo() at the lower portion of Fig. 42, are recognized as the initial value.

The player control module 212 then instructs the output attributes of the corresponding elementary streams, according to the DynamicInfo() which is a set with the pts_change_point recognized as the initial value, before playing of the clip stream file "00003.PS" starts (in step S126 in Fig. 30).

That is to say, with regard to the video stream stream#0 determined by the stream_id of 0xE0, the display_aspect_ratio in the DynamicInfo(), which is a set with the pts_change_point at the initial value of 90,000, is '4:3' at the upper portion of Fig. 42. In this case, the player control module 212 controls the graphics processing module 219 with output attribute information to the effect that the display_aspect_ratio is '4:3', i.e., that the video stream stream#0 is video data with an aspect ratio of 4:3.

Also, with regard to the audio stream stream#2 determined by the stream_id of 0xBD and private_stream_id of 0x00, the channel_assignment in the DynamicInfo(), which is a set with the pts_change_point at the initial value of 90,000, is 'Dual' at the lower portion in Fig. 42. In this case, the player control module 212 supplies the audio output module 221 with output attribute information to the effect that the channel_assignment is 'Dual', i.e., that the audio stream stream#2 is dual audio data.

Now, in step S126 of Fig. 30, output attribute control processing regarding the pts_change_point serving as an initial value, is performed.

Subsequently, of the two pts_change_point 90,000 and 54,090,000 at the upper portion of Fig. 42 regarding the video stream stream#0, and the three pts_change_point 90,000, 27,090,000 and 32,490,000 at the lower portion of Fig. 42 regarding the audio stream stream#2, the player control module 212 takes the points-in-time other than the initial value of 90,000, which are {27,090,000}, {32,490,000}, and {54,090,000}, and hands these to the decode control module 214, along with an indication that these are "DynamicInfo () processing" attribute points-in-time (step S320).

The decode control module 214 receives the "DynamicInfo() processing" attribute points-in-time {27, 090, 000}, {32, 490, 000}, and {54, 090, 000}, from the player control module 212, and further, following starting of playing of the video stream stream#0 and audio stream stream#2 (playing of the PlayItem#0 of the second PlayList#1 for playing the clip stream file "00003.PS"), starts monitoring of the current point-in-time kept by the clock unit 214A.

In the event that the current point-in-time matches one of the "DynamicInfo() processing" attribute points-in-time {27,090,000}, {32,490,000}, and {54,090,000}, the decode control module 214 supplies the DynamicInfo point-in-time which is a "DynamicInfo() processing" attributes point-in-time matching the current point-in-time to the player control module 212 (step S321).

That is to say, for example, in the event that the current point-in-time is 27,090,000, the decode control module 214 supplies, of the "DynamicInfo () processing" attributes point-in-time, 27,090,000 which matches the current point-in-time, to the player control module 212.

The player control module 212 receives the DynamicInfo point-in-time of 27,090,000 from the decode control module 214, inspects a pts_change_point which matches the DynamicInfo point-in-time 27,090,000 from the two pts_change_point regarding the video stream stream#0 at the upper portion of Fig. 42 and the three pts_change_point regarding the audio stream stream#2 at the lower portion of Fig. 42, and recognizes the DynamicInfo() which is a set with the pts_change_point matching the 27,090,000, i.e., the second DynamicInfo() regarding the audio stream stream#2 at the lower portion of Fig. 42, as the DynamicInfo() to be processed (step S322).

In the event that the DynamicInfo() to be processed is DynamicInfo() regarding a video stream, the player control module 212 supplies the output attributes described in the DynamicInfo() to be processed, to the graphics processing module 219 (step S323). Also, in the event that the DynamicInfo() to be processed is DynamicInfo() regarding an audio stream, the player control module 212 supplies the output attributes described in the DynamicInfo() to be processed, to the audio output module 221 (step S323).

Upon output attributes being supplied from the player control module 212, the graphics processing module 219 starts control of the output of the video data, according to these output attributes (step S324).

That is to say, the graphics processing module 219 performs conversion of the aspect ratio of the video data to be output to the video output module 220, based on the instruction of aspect ratio of the video data which the output attribute from the player control module 212 represents (display_aspect_ratio (Fig. 13)), and the aspect ratio of the video output device connected to the video output terminal 120 shown in Fig. 1.

Specifically, for example, in the event that the instruction of aspect ratio of the video data which is an output attribute represents an aspect ratio of 4:3 in a case wherein the aspect ratio of the video output device is 16:9, the graphics processing module 219 subjects the video data to be output to the video output moduel 220 to horizontal squeezing, and outputs with pillarboxing on the left and right. Also, in the event that the aspect ratio of the video output device is 4:3 for example, the instruction of aspect ratio of the video data which is an output attribute represents an aspect ratio of 16:9, the graphics processing module 219 performs processing for squeezing the video data to be output to the video output module 220 in the vertical direction, and outputs with letterboxing on the top and bottom. Further, for example, in the event that the aspect ratio of the video output device and the aspect ration represented with the aspect ratio instruction of the video data are both at the same at 4:3 or 16:9, the graphics processing module 219 outputs the video data to be output to the video output module 220 as it is, without performing squeezing processing.

Now, with the two sets of pts_change_point and DynamicInfo() described regarding the video stream stream#0 shown at the upper portion of Fig. 42 determined by the stream_id of 0xE0, from the point-in-time 90,000 which is the playing start time of the video stream stream#0, to immediately prior to the point-in-time 54,090,000, video data with an aspect ratio of 4:3 is obtained from the video stream stream#0. After the point-in-time 54,090,000, video data with an aspect ratio of 16:9 is obtained from the video stream stream#0.

Accordingly, for example, if we say that the aspect ratio of the video output device connected to the video output terminal 120 shown in Fig. 1 is 4:3, at the graphics processing module 219, from the point-in-time 90,000 to immediately prior to the point-in-time 54,090,000, video data with an aspect ratio of 4:3 which is obtained from the video stream stream#0 is supplied to the video output device with the aspect ratio of 4:3 as it is, and displayed.

Then, after the point-in-time 54,090,000, the video data with an aspect ratio of 16:9 that is obtained from the video stream stream#0 is subjected to vertical squeezing processing and further converted into video signals with an aspect ratio of 4:3 with letterboxing on the top and bottom, and is supplied to the video output device with the aspect ratio of 4:3 and displayed.

On the other hand, upon output attributes being supplied from the player control module 212, the audio output module 221 starts control of the output of the audio data, according to these output attributes (step S324) .

That is to say, the audio output module 221 processes the audio data from the audio decoder control module 217, based on the channel assignment instruction for the audio data which the output attribute from the player control module 212 represents (channel_assignement (Fig. 13)), and the audio output mode supplied from the player control moduel 212 via the input interface 115 (Fig. 1) by the user operating the remote controller, and outputs to the audio output terminal 121 (Fig. 1).

Specifically, for example, in the event that the instruction of channel assignment of the audio data which the output attributes represent is Dual (bilingual) mode with "main audio" audio data for the left channel and "sub audio" audio data for the right channel, the audio output module 221 processes the audio data from the audio decoder control module 217 following the audio output mode supplied from the player control module 212.

That is to say, for example, in the event that "main audio" is specified as the audio output mode, the audio output module 221 copies, of the audio data from the audio decoder control module 217, the audio data of the left channel as the audio data of the right channel, and outputs the audio data of the left channel and the right channel (the "main audio" audio data) to the audio output terminal 121. Also, in the event that "sub audio" is specified as the audio output mode, the audio output module 221 copies, of the audio data from the audio decoder control module 217, the audio data of the right channel as the audio data of the left channel, and outputs the audio data of the left channel and the right channel (the "sub audio" audio data) to the audio output terminal 121. Further, in the event that "main/sub" is specified as the audio output mode, the audio output module 221 outputs the audio data from the audio decoder control module 217 to the audio output terminal 121 as it is.

Also, for example, in the event that the channel assignment instruction of the audio data, which the output attributes represent, represents stereo (Stereo) mode audio data, the audio output module 221 outputs the audio data from the audio decoder control module 217 to the audio output terminal 121 as it is, regardless of specification of the audio output mode supplied from the player control 212.

Now, with the three sets of pts_change_point and DynamicInfo() described regarding the audio stream stream#2 shown at the lower portion of Fig. 42 determined by the stream_id of 0xBD and private_stream_id of 0x00, from the point-in-time 90,000 which is the playing start time of the audio stream stream#2, to immediately prior to the point-in-time 27,090,000, dual audio data is obtained from the audio stream stream#2. After the point-in-time 27,090,000, to immediately prior to the point-in-time 32,490,000, stereo audio data is obtained from the audio stream stream#2, and after the point-in-time 32,490,000, dual audio data is obtained from the audio stream stream#2.

Accordingly, for example, in the event that "main audio" is specified as the audio output mode, the audio output module 221 copies, of the dual audio data obtained from the audio stream stream#2, the audio data of the left channel as the audio data of the right channel, from the point-in-time 90,000 to immediately prior to the point-in-time 27,090,000, and outputs the audio data of the left channel and the right channel to the audio output terminal 121.

Also, from the point-in-time 27,090,000 to immediately prior to the point-in-time 32,490,000, the stereo audio data obtained from the audio stream stream#2 is output to the audio output terminal 121 as it is.

Then, after the point-in-time 32,490,000, of the dual audio data obtained from the audio stream stream#2, the audio data of the left channel is copied as the audio data of the right channel, and the audio data of the left channel and the right channel is output to the audio output terminal 121.

AS described above, with output attribute control processing, determination is made regarding whether or not the playing point-in-time of an elementary stream being played matches the pts_change_point, based on the description on the clip information file Clip() including zero or more sets of the pts_change_point representing the playing point-in-time of the elementary stream, and the DynamicInfo() including the output attributes of the elementary stream, for each elementary stream multiplexed on the clip stream file. In the event that the playing point-in-time of the elementary stream being played matches the pts_change_point, the DynamicInfo () which is a set with the pts_change_point is recognized, and output of the elementary stream being played is controlled following the output attributes included in the recognized DynamicInfo(). Accordingly, the output of the elementary stream can be controlled according to the playing point-in-time of the elementary stream and the output attributes.

### [Subtitle Display Control Processing]

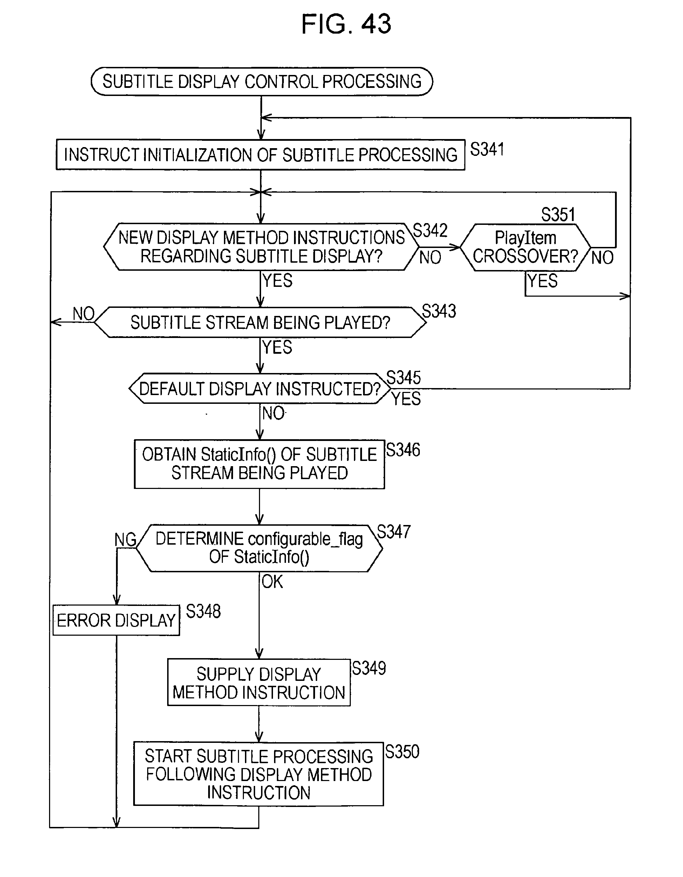

Next, subtitle display control processing for controlling display of subtitle data corresponding to subtitle streams will be described with reference to the flowchart in Fig. 43.

Upon playing of (a PlayItem() of) a PlayList() (Fig. 5) being started, in step S341 the player control module 212 initializes instructions regarding the display format of the subtitle data as to the graphics processing module 219. That is to say, the player control module 212 controls the graphics processing module 219 so as to use the display format of the subtitle data as the default display format. Note that initialization of instruction of the display format performed in step S341 corresponds to the initialization of the instruction of the display format described in 127 in Fig. 30.

Following the processing of step S341, the flow proceeds to step S342, where the player control module 212 determines whether or not there has been instruction regarding a new display format with regard to display of the subtitle data from the input interface 115, by the user operating the remote controller.

In the event that determination is made in step S342 that there has been instruction of a new display format, the flow proceeds to step S343, where the player control module 212 determines whether or not (subtitle data corresponding to) a subtitle stream is currently being played.

In the event that determination is made in step S343 that no subtitle stream is being played, the flow returns to step S342.

Also, in the event that determination is made in step S343 that a subtitle stream is being played, the flow proceeds to step S345, where the player control module 212 determines whether or not the new display format instruction is an instruction for default display format. In the event that determination is made in step S343 that the new display format instruction is an instruction for the default display format, the flow returns to step S341, and as described above, the player control module 212 controls the graphics processing module 219 such that the subtitle data display format is the default display format.

On the other hand, in the event that determination is made in step S345 that the instruction of a new display format is not an instruction for the default display format, i.e., in the event that the instruction of a new display format is a default display instruction which is not default, such as, for example, enlarged or reduced displaying of the subtitle data, or changing the brightness to facilitate viewing, or the like, the flow proceeds to step S346, and the player control module 212 obtains StaticInfo() regarding the subtitle stream currently being played from the StaticInfo() (Fig. 12) in the clip information file Clip() (Fig. 10) corresponding to the clip stream file upon which the subtitle stream currently being played has been multiplexed, and the flow proceeds to step S347.

In step S347, the player control module 212 determines the configurable_flag of the StaticInfo() obtained in step S346.

In the event that determination is made in step S347 that the configurable_flag is set to 0, meaning that changing of the display format of the subtitle data is not permitted, the flow proceeds to step S348, where the player control module 212 controls the graphics processing module 219 to overlay an error message to the effect that the display format of the subtitle data cannot be changed, and the flow returns to step S342. Accordingly, an error message is displayed.

On the other hand, in the event that determination is made in step S347 that the configurable_flag is set to 1, meaning that changing of the display format of the subtitle data is permitted, the flow proceeds to step S349, where the player control module 212 supplies the new display format instruction, supplied from the input interface 115 by the user operating the remote controller, to the graphics processing module 219, and the flow proceeds to step S350.

In step S350, the graphics processing module 219 starts processing for enlarging or reducing or the like, or changing the brightness or the like, of the subtitle data supplied from the subtitle decoder control module 218, following the display format instructions supplied from the player control moduel 212 in the immediately-preceding step S349, and the flow returns to step S342. Accordingly, the subtitle data is displayed with the display size, display position, display color, etc., according to the display format instructed by the user operating the remote controller.

On the other hand, in the event that determination is made in step S342 that there has been no new display format instruction, the flow proceeds to step S351, where the player control module 212 determines whether or not crossover of the PlayItem() described with Fig. 31 has been performed, and in the event that determination is made that this has not been performed, the flow returns to step S342.

On the other hand, in the event that determination is made in step S351 that crossover of the PlayItem() has been performed, the flow returns to step S341, and as described above, and the player control module 212 controls the graphics processing module 219 such that the subtitle data display format is the default display format. That is to say, in this case, in the event that crossover of the PlayItem() has been performed, the subtitle data display format is returned to the default display format.

As described above, with subtitle display control processing, only in the case that the configurable_flag is set to 1, meaning that changing of the display format of the subtitle data is permitted, is the display format of the subtitle data corresponding to the subtitle stream changed according to instructions of the display format input by the user operating the remote controller, for example.

Accordingly, for example, with the clip information file "00001.CLP" shown in Fig. 26, the configurable_flag of the subtitle stream stream#2 which is the third elementary stream of the four elementary streams multiplexed on the corresponding clip stream file "00001.PS" is set to 0 meaning that changing of display format is not permitted, so even if the user operates the remote controller to change the display of the subtitle while the subtitle stream stream#2 is being displayed, the display is not changed.

On the other hand, for example, the configurable_flag of the subtitle stream stream#3 which is the fourth elementary stream of the four elementary streams multiplexed on the corresponding clip stream file "00001.PS" is set to 1 meaning that changing of display format is permitted, so if the user operates the remote controller to change the display of the subtitle while the subtitle stream stream#3 is being displayed, the display size and the like of the subtitle is changed according to the operations made.

That is to say, for example, let us say that the clip stream file "00001.PS" is being played now following the first PlayItem#0 of the first PlayList#1 in Fig. 25. Also, as described with regard to the clip information file "00001.CLP" in Fig. 26, of the four elementary streams multiplexed on the clip stream file "00001.PS", the third and fourth are subtitle streams, and let us say that, of the third subtitle stream stream#2 and the fourth subtitle stream stream#3, the third subtitle stream stream#2 for example, is being currently played.

Upon the user inputting instructions for the subtitle display format by operating the remote controller (step S342), the display format instruction is supplied from the input interface 115 (Fig. 1) to the player control module 212. Upon being supplied with the display format instruction, the player control module 212 searches StaticInfo() (Fig. 10) corresponding to the subtitle stream being played, from the clip information file (step S346).

That is to say, in this case, the subtitle stream being played is the third subtitle stream stream#2 multiplexed on the clip stream file "00001.PS", and the player control module 212 searches StaticInfo() relating to the third subtitle stream stream#2 from the corresponding clip information file "00001.CLP".

Further, the player control module 212 judges the configurable_flag described in the StaticInfo() regarding the third subtitle stream stream#2 in Fig. 26 that is set to 0 (step S347), and accordingly confirms that change of display format is not permitted for the third subtitle stream stream#2.

In this case, the player control module 212 determines that (the subtitle data corresponding to) the subtitle stream being played cannot handle enlargement/reduction or the like, and controls the graphics processing module 219 to generate an error message to that effect (step S348), which is overlaid on the video data and output.

On the other hand, out of the four elementary streams multiplexed on the clip stream file "00001.PS", in the event that of the third subtitle stream stream#2 and the fourth subtitle stream stream#3, the fourth subtitle stream stream#3 is currently being played instead of the third subtitle stream stream#2 for example, the player control module 212 searches StaticInfo() relating to the fourth subtitle stream stream#3 from the corresponding clip information file "00001.CLP".

Further, the player control module 212 judges the configurable_flag described in the StaticInfo() regarding the fourth subtitle stream stream#3 in Fig. 26 that is set to 1 (step S347), and accordingly confirms that change of display format is permitted for the fourth subtitle stream stream#3.

In this case, the player control module 212 determines that (the subtitle data corresponding to) the subtitle stream being played can handle enlargement/reduction or the like, and supplies the display format instruction supplied by the user operating the remote controller to the graphics processing module 219.

Accordingly, the graphics processing module 219 follows the display format instruction from the player control module 212 to enlarge, reduce, etc., the subtitle data from the subtitle decoder control module 218, and overlay on the video data from the video decoder control module 216 and output.

Note that the player control module 212 initializes the subtitle data display format instructions to the graphics processing module 219 at the time of starting playing of the first PlayItem () of a PlayList () (step S341). That is to say, the player control module 212 controls the graphics processing module 219 such that the subtitle data display format is the default display format.

Further, at the time of PlayItem() crossover as well, the player control module 212 initializes the subtitle data display format instructions to the graphics processing module 219 (steps S341, S351).

Note however, that an arrangement may be made wherein, at the time of PlayItem() crossover, the configurable_flag regarding a new subtitle stream to be played according to a PlayItem() to be newly played thereafter is searched, and in the event that the configurable_flag is 0, the subtitle data display format instruction to the graphics processing module 219 is initialized, and in the event that the configurable_flag is 1, the subtitle data display format instruction to the graphics processing module 219 is maintained the same as before the PlayItem() crossover.

Also, with the subtitle display control processing in Fig. 43, in the event that a new display format instruction is input by the user operating the remote controller, the new display format instruction is supplied to the graphics processing module 219 (step S349), but the display format instruction may be stored in non-volatile memory making up the memory 113 (Fig. 1), with the display format instruction stored in the non-volatile memory being supplied to the graphics processing module 219.

That is to say, an arrangement may be made wherein, for example, display format instructions of user settings are stored in the non-volatile memory as initial settings of the disk device shown in Fig. 1, and in the event that a new display format instruction is input by the user operating the remote controller, the display format instruction stored in the non-volatile memory is updated with the new display format instruction, with the display format instruction stored in the non-volatile memory being supplied to the graphics processing module 219. In this case, the instructions of the display format at the previous time of ending playing is held in the non-volatile memory, so at the next time of playing a PlayList(), display of the subtitle data starts with that display format, even without inputting the display format at the previous time of ending playing by the user operating the remote controller.

Note that in this case, instructions of the display format to be stored in the non-volatile memory include the enlargement ratio or reduction ratio or the like for enlarging or reducing subtitle data, for example.

As described above, according to the subtitle display control processing, of the StaticInfo() that does not change during playing of the elementary stream, the StaticInfo() of the subtitle data is obtained for each elementary stream included in the clip information file Clip() (Fig. 10), and determination is made regarding whether or not changing the subtitle data display being played from the default display format is permitted, based on the configurable_flag representing whether or not changing the subtitle data display being played from the default display format is permitted. In the event that changing the subtitle data display being played from the default display format is permitted, the display processing of the subtitle data, that is to say, display processing is performed by enlarging or reducing the subtitle data, or changing the display color or the like, for example. Accordingly, changing of the subtitle data display format can be controlled.

### [Capture Control Processing]

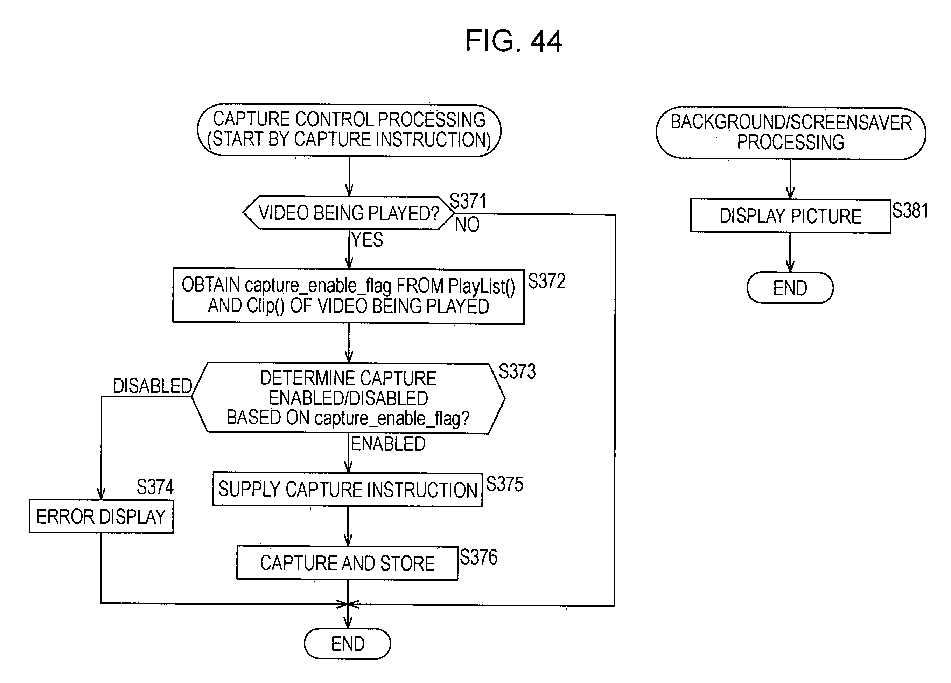

Next, capture control processing for controlling capturing of video data corresponding to a video stream will be described with reference to the flowchart in Fig. 44. Note that Fig. 44 illustrates along with the flowchart for describing the capture control processing, a flowchart for describing background/screensaver processing which is an example of secondary usage of video data captured by the capture control processing.

Capture control processing is started by a capture instruction instructing capturing video data being supplied to the player control module 212 via the input interface 115 (Fig. 1) by the user operating the remote controller, for example.

That is to say, with the capture control processing, first, in step S371, the player control module 212 determines whether or not a video stream is being played, and in the event that determination is made that this is not being played, the capture control processing ends.

On the other hand, in the event that determination is made in step s371 that a video stream is being played, the flow proceeds to step S372, where the player control module 212 obtains a capture_enable_flag_PlayList from the PlayList() (Fig. 5) corresponding to the video stream being played, and also obtains a capture_enable_flag_Clip from the clip information file Clip() (Fig. 10) corresponding to the video stream being played.

Now, the capture_enable_flag_PlayList in the PlayList() represents whether or not to permit secondary usage of video data (video data belonging to the PlayList()) corresponding to the video stream being played by the PlayList(), as described with Fig. 5. Also, the capture_enable_flag_Clip in the clip information file Clip() represents whether or not to permit secondary usage of the video data corresponding to the video stream stored in the clip stream file corresponding to the clip information file Clip (), as described with Fig. 10.

Following the processing in step S372, the flow proceeds to step S373, where the player control module 212 determines whether or not capturing of a video data picture played at the time of a capture instruction being input from the input interface 115 (Fig. 1) is permitted, based on the capture_enable_flag_PlayList and capture_enable_flag_Clip obtained in the immediately-preceding step S373.

In the event that determination is made in step S373 that capturing of a video data picture played at the time of a capture instruction being input from the input interface 115 is not permitted, i.e., in the event that at least one of the capture_enable_flag_PlayList and capture_enable_flag_Clip obtained in the immediately-preceding step S373 is 0, meaning that secondary usage of the video data is not permitted, the flow proceeds to step S374, where the player control module 212 controls the graphics processing module 219 to overlay an error message to the effect that capturing video data is not permitted, and the capture control processing ends. Thus, an error message is displayed.

On the other hand, in the event that determination is made in step S373 that capturing of a video data picture played at the time of a capture instruction being input from the input interface 115 is permitted, i.e., in the event that both of the capture_enable_flag_PlayList and capture_enable_flag_Clip obtained in the immediately-preceding step S373 are 1, meaning that secondary usage of the video data is permitted, the flow proceeds to step S375, where the player control module 212 supplies a capture instruction for a video data picture which was being played at the point that the capture instruction was input from the input interface 115, to the graphics processing module 219, and the flow proceeds to step S376.

In step S376, the graphics processing module 219 captures the picture of the video data from the video decoder control module 216 according to the capture instruction from the player control module 212, stores this in the memory 113 (Fig. 1), and ends the capture control processing. Note that the capture_enable_flag is of a multi-bit configuration, and in the event that there are restrictions on usage conditions, this is handled at this point. That is to say, in the event that there are restrictions on the size of the capture image, a reduced image is capture at this point. Also, in the event that there are restrictions in applications which are used, a flag for making notification to that effect is recorded at the same time.

As described above, with capture control processing, the logical AND is obtained of the capture_enable_flag_PlayList and capture_enable_flag_Clip for each of the PlayList() (Fig. 5) and clip information file Clip() (Fig. 10) corresponding to the video stream being played when there is a capture instruction from the user, and in the event that the logical AND is 1, i.e., only in the event that both of the capture_enable_flag_PlayList and capture_enable_flag_Clip are set to 1 which permits secondary usage, is determination made that secondary usage of the video data is permitted, and a capture is executed.

Accordingly, in the event that there is a capture instruction from the user in the event that a video stream is playing following the first PlayItem#0 of the first PlayList#0 in Fig. 25 for example, that is to say, in the event that a video stream multiplexed on the clip stream file "00001.PS" is being performed, the capture_enable_flag_PlayList in the first PlayList#0 is 1, and the capture_enable_flag_Clip in the clip information file "00001.CLP" in Fig. 26 corresponding to the clip stream file "00001.PS" played by the first PlayItem#0 is 1, so determination is made that secondary usage of the video data being played (video data corresponding to the video stream multiplexed on the clip stream file "00001.PS") is permitted, so a capture is executed.

Also, in the event that there is a capture instruction from the user in the event that a video stream is playing following the second PlayItem#1 of the first PlayList#0 in Fig. 25 for example, that is to say, in the event that a video stream multiplexed on the clip stream file "00002.PS" is being performed, the capture_enable_flag_PlayList in the first PlayList#0 is 1, and the capture_enable_flag_Clip in the clip information file "00002.CLP" in Fig. 26 corresponding to the clip stream file "00002.PS" played by the second PlayItem#1 is 0, so determination is made that secondary usage of the video data being played (video data corresponding to the video stream multiplexed on the clip stream file "00002.PS") is not permitted, so no capturing is performed.

Further, in the event that there is a capture instruction from the user in the event that a video stream is playing following the PlayItem#0 of the second PlayList#1 in Fig. 25 for example, that is to say, in the event that a video stream multiplexed on the clip stream file "00003.PS" is being performed, the capture_enable_flag_PlayList in the second PlayList#1 is 0, and the capture_enable_flag_Clip in the clip information file "00003.CLP" in Fig. 26 corresponding to the clip stream file "00003.PS" played by the PlayItem#0 in the second PlayList#1 is 1, so determination is made that secondary usage of the video data being played (video data corresponding to the video stream multiplexed on the clip stream file "00003.PS") is not permitted, so no capturing is performed.

Note that in this case, determination can be made that secondary usage of the video data is not permitted at the point that the capture_enable_flag_PlayList in the second PlayList#1 is found to be 0, so confirmation can be omitted for the capture_enable_flag_Clip in the clip information file "00003.CLP" in Fig. 26 corresponding to the clip stream file "00003.PS" played by the PlayItem#0 in the second PlayList#1.

A picture which has been captured by the capture control processing and stored in the memory 113 can be subjected to secondary used in the background/screensaver processing.

The background/screensaver processing is performed in cases wherein, for example, the player control module 212 is operating but playing of elementary streams is not being performed, i.e., a disk 101 is not inserted into the disk drive 102 (Fig. 1) or playing of an elementary stream has ended, and so forth.

That is to say, with the background/screensaver processing, in step S381, the player control module 212 controls the graphics processing module 219 so as to display the picture stored in the memory 113 by the capture control processing. The graphics processing module 219 displays the picture stored in the memory 113 by the capture control processing, according to control of the player control module 212.

Now, displaying the picture stored in the memory 113 as a still image with the graphics processing module 219 realizes so-called wallpaper (background), and displaying while enlarging, reducing, moving, etc., according to a certain cycle, realizes a screensaver. Also, the background/screensaver processing for displaying the picture stored in the memory 113 by the capture control processing may be performed by another independent application instead of the player control module 212.

Also, in the event that a flag representing usage restriction is added to the picture stored in the memory 113, the restrictions are followed.

As described above, a capture_enable_flag_PlayList and capture_enable_flag_Clip for video data being played, representing whether or not secondary usage of video data corresponding to increments greater than video access units, e.g., to a PlayList() or PlayItem(), are obtained, and determination is made based on the capture_enable_flag_PlayList and capture_enable_flag_Clip regarding whether or not secondary usage of video data being played is permitted. In the event that determination is made that secondary usage of the video data being played is permitted, the video data being played is captured, and background/screensaver processing using the captured video data is performed. Accordingly, control of secondary usage of the video data is enabled.

Note that while an arrangement has been made with the capture control processing in Fig. 44, wherein a capture_enable_flag_PlayList is provided for the PlayList () (Fig. 5), and a capture_enable_flag_Clip is provided for the clip information file Clip() (Fig. 10) corresponding to the clip stream file played by the PlayItem(), with both the capture_enable_flag_PlayList and capture_enable_flag_Clip being used to determine permission (permitted / not permitted) of secondary usage, but an arrangement may be made wherein only a capture_enable_flag_PlayList is provided for the PlayList () (Fig. 5), or only a capture_enable_flag_Clip is provided for the clip information file Clip() (Fig. 10) corresponding to the clip stream file played by the PlayItem(), so that just one of the capture_enable_flag_PlayList and capture_enable_flag_Clip is used to determine permission of secondary usage.

Note that while an arrangement has been made with the capture control processing in Fig. 44, wherein, in step S376, the graphic processing module 219 captures a picture of the video data from the video decoder control module 216 according to the capture instruction from the player control module 212, i.e., captures only one picture, however, an arrangement may be made wherein multiple pictures are captured. That is to say, multiple pictures output from the video decoder control module 216 in time sequence (a sequence of multiple pictures as a moving picture) may be captured. In this case, the number of pictures captured at one time can be determined beforehand, for example. Or, the capture_enable_flag_PlayList and capture_enable_flag_Clip may be expanded to include information of the number of pictures which can be captured at one time in the capture_enable_flag_PlayList or capture_enable_flag_Clip.

Further, in the above-described case, usage permission information for permitting secondary usage of the video data (capture_enable_flag_PlayList, capture_enable_flag_Clip) is described in the PlayList() or clip information file Clip(), with permission of secondary usage being determined for the entirety of video data played by the PlayList() or the entirely of video data corresponding to the video stream multiplexed on the clip stream file corresponding to the clip information file Clip(), based on the usage permission information, but an arrangement may be made wherein description of usage permission information is made regarding video data of other optional increments, so as to determine permission of secondary usage of the optional increments of video data by the usage permission information thereof.

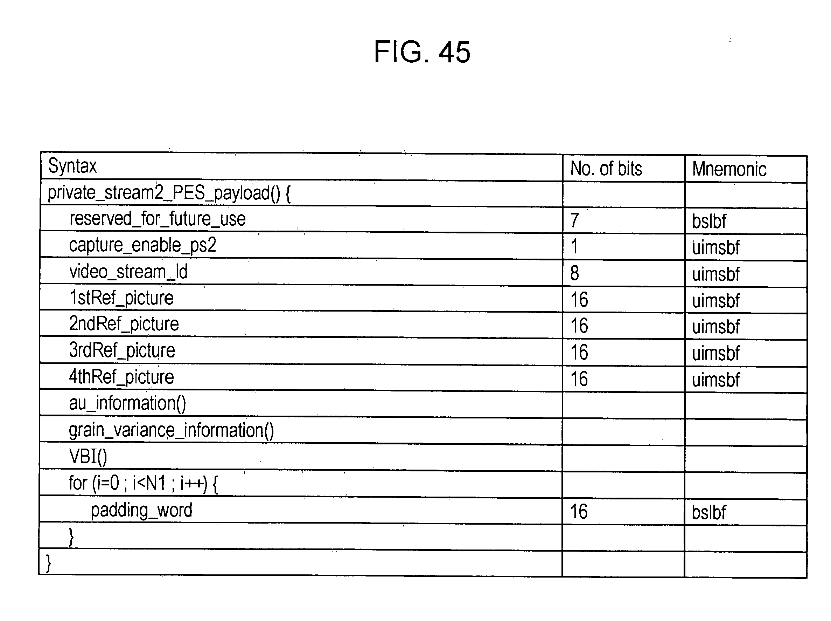

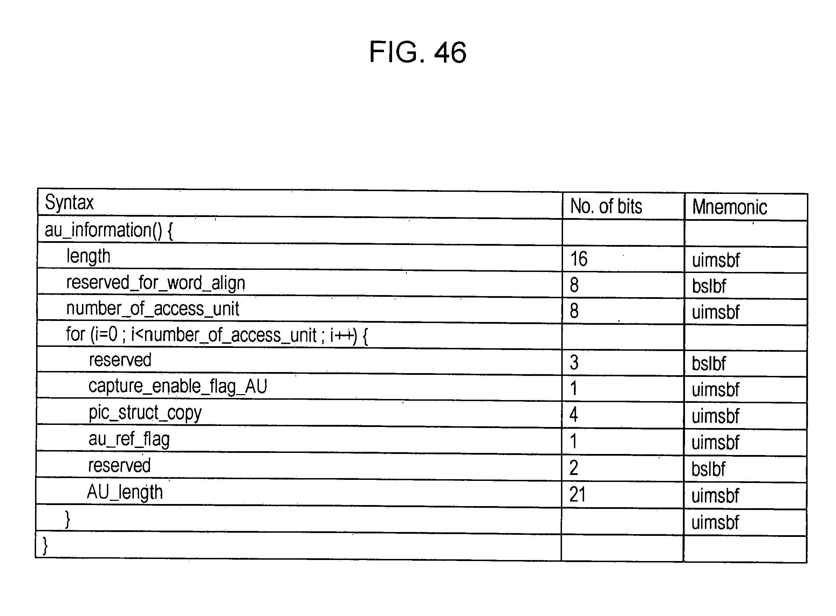

That is to say, Fig. 45 illustrates the syntax of the private_stream2_PES_payload() where usage permission information is situated, and Fig. 46 illustrates the syntax of au_information() where usage permission information is situated.

Note that with the private_stream2_PES_payload() in Fig. 45, a capture_enable_flag_ps2 serving as usage permission information is situated immediately before the video_stream_id, and otherwise is configured in the same way as that in Fig. 23. Also, the au_information() in Fig. 46 is configured in the same way as that in Fig. 24, other than a capture_enable_flag_AU serving as usage permission information being situated immediately before the pic_struct_copy.

The capture_enable_flag_ps2 placed in the private_stream2_PES_payload() in Fig. 45 represents whether or not secondary usage is permitted for video data corresponding to the video stream from the PES_packet () of the private_stream_2 including the private_stream2_PES_payload () up to immediately before the next private_stream_2 PES_packet(). Accordingly, determination can be made from the capture_enable_flag_ps2 placed in the private_stream2_PES_payload() in Fig. 45 regarding whether or not secondary usage is permitted for video data from a certain decoding start permissible point to the next decoding start permissible point.

Also, the capture_enable_flag_AU placed in the au_information() in Fig. 46 represents whether or not to permit secondary usage of the video data of the video access unit corresponding to the capture_enable_flag_AU. Accordingly, determination can be made from the capture_enable_flag_AU situated in the au_information() in Fig. 46 regarding whether or not secondary usage is permitted for video data in video access unit increments, i.e., in picture increments.

Now, two or more of the capture_enable_flag_PlayList serving as usage permission information in the PlayList() (Fig. 5), the capture_enable_flag_Clip serving as usage permission information in the clip information file Clip() (Fig. 10), the capture_enable_flag_ps2 serving as usage permission information in the private_stream2_PES_payload() (Fig. 45), and the capture_enable_flag_AU serving as usage permission information in the au_information() (Fig. 46), can be used in duplicate, and in this case, permission of secondary usage of a picture of certain video data is determined based on the logical AND or the like of the two of more usage permission information used in duplicate.

As descried with step S211 in Fig. 36, the video read function unit 233 of the buffer control module 215 (Fig. 3) searches for the PES_packet() of the private_stream_2 including the private_stream2_PES_payload() shown in Fig. 23 or Fig. 45 where the au_information() shown in Fig. 46 is situated, from the program stream stored in the buffer 215A. Accordingly, in the event of using the private_stream2_PES_payload() shown in Fig. 45 in which is situated the capture_enable_flag_ps2, or the au_information() shown in Fig. 46 in which is situated the capture_enable_flag_AU, the player control module 212 must inquire of the video read function unit 233 regarding the capture_enable_flag_ps2 or capture_enable_flag_AU for determining secondary usage permission of the video data.

Note that while the above-described series of processing is performed by software in the present embodiment, the above-described series of processing may be performed by dedicated hardware as well.

Also, while a hardware decoder is employed for the video decoder 116 (Fig. 1) with the present embodiment, a software decoder may be employed for the video decoder 116. This holds true for the audio decoder 117 (Fig. 1) as well.

Further, while a software decoder is employed as the subtitle decoder with the present embodiment, a hardware decoder may be employed as the subtitle decoder.

## Claims

1. A data processing device for processing recorded data recorded on a data recording medium,
said recorded data including
multiplexed data in which one or more data have been multiplexed, and
meta data relating to said multiplexed data,
and said meta data including, for each data multiplexed in said multiplexed data, a set of point-in-time information indicating the reproduction point-in-time of the data, and predetermined information including an output attribute of the data,
said data processing device comprising:
determining means for determining whether or not a reproduction point-of-time of said data being reproduced matches said point-of-time information;
recognizing means for, in the event that said determining means has determined that the reproduction point-of-time of said data being reproduced matches said point-of-time information, recognizing said predetermined information which makes up a set with the point-of-time information; and
control means for controlling the output of said data being reproduced, according to the output attribute included in said predetermined information recognized by said recognizing means.

2. The data processing device according to Claim 1, wherein said output attribute is video aspect ratio or audio channel allocation.

3. A data processing method for processing recorded data recorded on a data recording medium,
said recorded data including
multiplexed data in which one or more data have been multiplexed, and
meta data relating to said multiplexed data,
and said meta data including, for each data multiplexed in said multiplexed data, a set of point-in-time information indicating the reproduction point-in-time of the data, and predetermined information including an output attribute of the data,
said method comprising:
a determining step for determining whether or not a reproduction point-of-time of said data being reproduced matches said point-of-time information;
a recognizing step for, in the event that the reproduction point-of-time of said data being reproduced has been determined in said determining step to match said point-of-time information, recognizing said predetermined information which makes up a set with the point-of-time information; and
a control step for controlling the output of said data being reproduced, according to the output attribute included in said predetermined information recognized in said recognizing step.

4. A program for causing a computer to perform data processing for processing recorded data recorded on a data recording medium,
said recorded data including
multiplexed data in which one or more data have been multiplexed, and
meta data relating to said multiplexed data,
and said meta data including, for each data multiplexed in said multiplexed data, a set of point-in-time information indicating the reproduction point-in-time of the data, and predetermined information including an output attribute of the data,
said program comprising:
a determining step for determining whether or not a reproduction point-of-time of said data being reproduced matches said point-of-time information;
a recognizing step for, in the event that the reproduction point-of-time of said data being reproduced has been determined in said determining step to match said point-of-time information, recognizing said predetermined information which makes up a set with the point-of-time information; and
a control step for controlling the output of said data being reproduced, according to the output attribute included in said predetermined information recognized in said recognizing step.

5. A program recording medium in which is recorded a program for causing a computer to perform data processing for processing recorded data recorded on a data recording medium,
said recorded data including
multiplexed data in which one or more data have been multiplexed, and
meta data relating to said multiplexed data,
and said meta data including, for each data multiplexed in said multiplexed data, a set of point-in-time information indicating the reproduction point-in-time of the data, and predetermined information including an output attribute of the data,
said program comprising:
a determining step for determining whether or not a reproduction point-of-time of said data being reproduced matches said point-of-time information;
a recognizing step for, in the event that the reproduction point-of-time of said data being reproduced has been determined in said determining step to match said point-of-time information, recognizing said predetermined information which makes up a set with the point-of-time information; and
a control step for controlling the output of said data being reproduced, according to the output attribute included in said predetermined information recognized in said recognizing step.

6. A data recording medium in which is recorded recorded data including
multiplexed data in which one or more data have been multiplexed, and
meta data relating to said multiplexed data,
said meta data including, for each data multiplexed in said multiplexed data, a set of point-in-time information indicating the reproduction point-in-time of the data, and predetermined information including an output attribute of the data.

7. A data structure including multiplexed data in which one or more data have been multiplexed, and meta data relating to said multiplexed data;
wherein said meta data includes, for each data multiplexed in said multiplexed data, a set of point-in-time information indicating the reproduction point-in-time of the data, and predetermined information including an output attribute of the data.
